(19) Europäisches Patentamt
European Patent Office
Office européen des brevets

(11) **EP 2 843 946 A1**

(12) **EUROPEAN PATENT APPLICATION**
published in accordance with Art. 153(4) EPC

(43) Date of publication:
**04.03.2015 Bulletin 2015/10**

(51) Int Cl.:
*H04N 7/32* (0000.00)  *H04N 13/00* (2006.01)

(21) Application number: **13780603.0**

(22) Date of filing: **25.04.2013**

(86) International application number:
**PCT/KR2013/003579**

(87) International publication number:
**WO 2013/162311 (31.10.2013 Gazette 2013/44)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **25.04.2012 US 201261638101 P**

(71) Applicant: **Samsung Electronics Co., Ltd.**
**Suwon-si, Gyeonggi-do, 443-742 (KR)**

(72) Inventors:
• **CHOI, Byeong-doo**
**Siheung-si, Gyeonggi-do 429-010 (KR)**
• **PARK, Jeong-hoon**
**Seoul 151-050 (KR)**

(74) Representative: **Jones, Ithel Rhys**
**Appleyard Lees**
**15 Clare Road**
**Halifax, Yorkshire HX1 2HY (GB)**

(54) **MULTIVIEW VIDEO ENCODING METHOD USING REFERENCE PICTURE SET FOR MULTIVIEW VIDEO PREDICTION AND DEVICE THEREFOR, AND MULTIVIEW VIDEO DECODING METHOD USING REFERENCE PICTURE SET FOR MULTIVIEW VIDEO PREDICTION AND DEVICE THEREFOR**

(57) The present invention provides methods of encoding and decoding multi-view video by performing inter-prediction and inter-view prediction on each of pictures of multi-view video according to views. A prediction encoding method of encoding a multi-view video includes determining a reference picture set including at least one short term reconstructed picture having a different reproduction order from that of a current picture and a reference picture set including at least one long term reconstructed picture, among same view reconstructed pictures that are reconstructed prior to the current picture, and determining a reference picture set including at least one short term reconstructed picture having the same reproduction order as that of the current picture, among different view reconstructed pictures that are reconstructed prior to the current picture; determining at least one reference list between a first reference list including at least one reconstructed picture having a reproduction order earlier than that of the current picture and at least one reconstructed picture having the same reproduction order as that of the current picture and having a smaller view identifier (VID) than that of the current picture, among the determined reference picture sets, and a second reference list including at least one reconstructed picture having the same reproduction order as that of the current picture and having a later reproduction order than that of the current picture and at least one reconstructed picture having the same reproduction order as that of the current picture and having a greater VID than that of the current picture; determining at least one reference picture and reference block for a current block of the current picture by using the determined at least one reference list; and performing at least one selected from inter-prediction and inter-view prediction for the current block by using the reference block.

FIG. 1A

**Description**

TECHNICAL FIELD

The present invention relates to multi-view video encoding and decoding.

BACKGROUND ART

As hardware for reproducing and storing high resolution or high quality video content is being developed and supplied, a need for a video codec for effectively encoding or decoding the high resolution or high quality video content is increasing. According to a conventional video codec, a video is encoded according to a limited encoding method based on a macroblock having a predetermined size.

Image data of a spatial region is transformed into coefficients of a frequency region via frequency transformation. According to a video codec, an image is split into blocks having a predetermined size, discrete cosine transformation (DCT) is performed for each respective block, and frequency coefficients are encoded in block units, for rapid calculation for frequency transformation. Compared with image data of a spatial region, coefficients of a frequency region are easily compressed. In particular, since an image pixel value of a spatial region is expressed according to a prediction error via inter prediction or intra prediction of a video codec, when frequency transformation is performed on the prediction error, a large amount of data may be transformed to 0. According to a video codec, an amount of data may be reduced by replacing data that is consecutively and repeatedly generated with small-sized data.

While there is increasing demand for video captured at various views, an amount of video data that increases by as much as the number of views is problematic. Accordingly, efforts to effectively encode multi-view video are continuing.

DETAILED DESCRIPTION OF THE INVENTION

TECHNICAL PROBLEM

The present invention provides methods of encoding and decoding multi-view video by performing inter-prediction and inter-view prediction on each of images of multi-view video according to views.

TECHNICAL SOLUTION

According to an aspect according to the present invention, there is provided a prediction encoding method of encoding a multi-view video includes determining a reference picture set including at least one short term reconstructed picture having a different reproduction order from that of a current picture and a reference picture set including at least one long term reconstructed picture, among same view reconstructed pictures that are reconstructed prior to the current picture, and determining a reference picture set including at least one short term reconstructed picture having the same reproduction order as that of the current picture, among different view reconstructed pictures that are reconstructed prior to the current picture; determining at least one reference list between a first reference list including at least one reconstructed picture having a reproduction order earlier than that of the current picture and at least one reconstructed picture having the same reproduction order as that of the current picture and having a smaller view identifier (VID) than that of the current picture, among the determined reference picture sets, and a second reference list including at least one reconstructed picture having the same reproduction order as that of the current picture and having a later reproduction order than that of the current picture and at least one reconstructed picture having the same reproduction order as that of the current picture and having a greater VID than that of the current picture; determining at least one reference picture and reference block for a current block of the current picture by using the determined at least one reference list; and performing at least one selected from inter-prediction and inter-view prediction for the current block by using the reference block.

ADVANTAGEOUS EFFECTS

A prediction encoding apparatus and a prediction decoding apparatus for multi-view video according to the present invention may constitute reference picture lists for inter-prediction and inter-view prediction of multi-view videos. One reference picture list may include both a reference image for inter prediction and a reference image for inter-view prediction.

Information regarding a reference picture set that explicitly reflects a state of a decoding picture set may be transmitted and received through a sequence parameter set and a slice header. A reference list is determined according to the reference picture set, and thus a reference image may be determined in a reference list determined considering a state of a current decoding picture set, and may be used for inter-prediction/motion compensation and inter-view prediction/disparity compensation.

## DESCRIPTION OF THE DRAWINGS

FIG. 1A is a block diagram of a multi-view video prediction encoding apparatus according to an embodiment;

FIG. 1B is a flowchart of a multi-view video prediction encoding method according to an embodiment;

FIG. 2A is a block diagram of a multi-view video prediction decoding apparatus according to an embodiment;

FIG. 2B is a flowchart of a block diagram of a multi-view video prediction decoding method according to an embodiment;

FIG. 3 illustrates reference objects for inter-prediction and inter-view prediction of a current picture according to an embodiment;

FIG. 4 illustrates a reference list configured based on the reference objects of FIG. 3 according to an embodiment;

FIGS. 5A and 5B are diagrams for explaining a process of changing a L0 list according to an embodiment;

FIG. 6A illustrates a syntax of a sequence picture parameter set according to an embodiment;

FIG. 6B illustrates a syntax of a picture parameter set according to an embodiment;

FIG. 7 illustrates a syntax of a slice header according to an embodiment;

FIG. 8A illustrates a parameter set of a reference picture set for inter-view prediction according to an embodiment;

FIG. 8B illustrates a syntax of parameters for changing a reference list according to an embodiment;

FIG. 9 illustrates a combined reference list according to an embodiment;

FIGS. 10 and 11 are diagrams for explaining a process of changing the combined reference list according to an embodiment;

FIG. 12 is a block diagram of a multi-view video encoding apparatus including a multi-view video prediction encoding apparatus according to an embodiment;

FIG. 13 is a block diagram of a multi-view video decoding apparatus including a multi-view video prediction decoding apparatus according to an embodiment;

FIG. 14 is a block diagram of a video encoding apparatus based on coding units according to a tree structure, according to an embodiment of the present invention;

FIG. 15 is a block diagram of a video decoding apparatus based on coding units according to a tree structure, according to an embodiment of the present invention;

FIG. 16 is a diagram for describing a concept of coding units according to an embodiment of the present invention;

FIG. 17 is a block diagram of an image encoder based on coding units, according to an embodiment of the present invention;

FIG. 18 is a block diagram of an image decoder based on coding units, according to an embodiment of the present invention;

FIG. 19 is a diagram illustrating deeper coding units according to depths, and partitions, according to an embodiment of the present invention;

FIG. 20 is a diagram for describing a relationship between a coding unit and transformation units, according to an embodiment of the present invention;

FIG. 21 is a diagram for describing encoding information of coding units corresponding to a coded depth, according to an embodiment of the present invention;

FIG. 22 is a diagram of deeper coding units according to depths, according to an embodiment of the present invention;

FIGS. 23 through 25 are diagrams for describing a relationship between coding units, prediction units, and transformation units, according to an embodiment of the present invention;

FIG. 26 is a diagram for describing a relationship between a coding unit, a prediction unit, and a transformation unit, according to encoding mode information of Table 1;

FIG. 27 is a diagram of a physical structure of a disc in which a program is stored, according to an embodiment of the present invention;

FIG. 28 is a diagram of a disc drive for recording and reading a program by using a disc;

FIG. 29 is a diagram of an overall structure of a content supply system for providing a content distribution service;

FIGS. 30 and 31 are diagrams respectively of an external structure and an internal structure of a mobile phone to which a video encoding method and a video decoding method are applied, according to an embodiment of the present invention;

FIG. 32 is a diagram of a digital broadcast system to which a communication system is applied, according to an embodiment of the present invention; and

FIG. 33 is a diagram illustrating a network structure of a cloud computing system using a video encoding apparatus and a video decoding apparatus, according to an embodiment of the present invention.

BEST MODE

According to an aspect according to the present invention, there is provided a prediction encoding method of encoding a multi-view video includes determining a reference picture set including at least one short term reconstructed picture having a different reproduction order from that of a current picture and a reference picture set including at least one long term reconstructed picture, among same view reconstructed pictures that are reconstructed prior to the current picture, and determining a reference picture set including at least one short term reconstructed picture having the same reproduction order as that of the current picture, among different view reconstructed pictures that are reconstructed prior to the current picture; determining at least one reference list between a first reference list including at least one reconstructed picture having a reproduction order earlier than that of the current picture and at least one reconstructed picture having the same reproduction order as that of the current picture and having a smaller view identifier (VID) than that of the current picture, among the determined reference picture sets, and a second reference list including at least one reconstructed picture having the same reproduction order as that of the current picture and having a later reproduction order than that of the current picture and at least one reconstructed picture having the same reproduction order as that of the current picture and having a greater VID than that of the current picture; determining at least one reference picture and reference block for a current block of the current picture by using the determined at least one reference list; and performing at least one selected from inter-prediction and inter-view prediction for the current block by using the reference block.

The determining of the reference picture set may include: determining a reference picture set including at least one non-reference reconstructed picture having a different reproduction order from that of the current picture, among same view reconstructed pictures that are reconstructed prior to the current picture; and determining a reference picture set including at least one non-reference reconstructed picture having the same reproduction order as that of the current picture, among different view reconstructed pictures that are reconstructed prior to the current picture.

According to another aspect according to the present invention, there is provided a prediction decoding method of decoding a multi-view video, the prediction decoding method including: determining a reference picture set including at least one short term reconstructed picture having a different reproduction order from that of a current picture and a reference picture set including at least one long term reconstructed picture, among same view reconstructed pictures that are reconstructed prior to the current picture, and determining a reference picture set including at least one short term reconstructed picture having the same reproduction order as that of the current picture, among different view reconstructed pictures that are reconstructed prior to the current picture; determining at least one reference list between a first reference list including at least one reconstructed picture having a reproduction order earlier than that of the current picture and at least one reconstructed picture having the same reproduction order as that of the current picture and having a smaller VID than that of the current picture, among the determined reference picture sets, and a second reference list including at least one reconstructed picture having the same reproduction order as that of the current picture and having a later reproduction order than that of the current picture and at least one reconstructed picture having the same reproduction order as that of the current picture and having a greater VID than that of the current picture; determining at least one reference picture and reference block for a current block of the current picture by using the determined at least one reference list; and performing at least one selected from motion compensation and disparity compensation for the current block by using the reference block.

The determining of the reference picture set may include: determining a reference picture set including at least one non-reference reconstructed picture having a different reproduction order from that of the current picture, among same view reconstructed pictures that are reconstructed prior to the current picture; and determining a reference picture set including at least one non-reference reconstructed picture having the same reproduction order as that of the current picture, among different view reconstructed pictures that are reconstructed prior to the current picture.

According to another aspect according to the present invention, there is provided a prediction encoding apparatus for encoding a multi-view video, the prediction encoding apparatus including: a reference picture set determiner for determining a reference picture set including at least one short term reconstructed picture having a different reproduction order from that of a current picture and a reference picture set including at least one long term reconstructed picture, among same view reconstructed pictures that are reconstructed prior to the current picture, and determining a reference picture set including at least one short term reconstructed picture having the same reproduction order as that of the current picture, among different view reconstructed pictures that are reconstructed prior to the current picture; a reference list determiner for determining at least one reference list between a first reference list including at least one reconstructed picture having a reproduction order earlier than that of the current picture and at least one reconstructed picture having the same reproduction order as that of the current picture and having a VID than that of the current picture, among the determined reference picture sets, and a second reference list including at least one reconstructed picture having the same reproduction order as that of the current picture and having a later reproduction order than that of the current picture and at least one reconstructed picture having the same reproduction order as that of the current picture and having a greater VID than that of the current picture; and a predictor for determining at least one reference picture and reference block for a current block of the current picture by using the determined at least one reference list, and performing at least one selected from inter-prediction and inter-view prediction for the current block by using the reference block.

According to another aspect according to the present invention, there is provided a prediction decoding apparatus for decoding a multi-view video, the prediction decoding apparatus including: a reference picture set determiner for determining a reference picture set including at least one short term reconstructed picture having a different reproduction order from that of a current picture and a reference picture set including at least one long term reconstructed picture, among same view reconstructed pictures that are reconstructed prior to the current picture, and determining a reference picture set including at least one short term reconstructed picture having the same reproduction order as that of the current picture, among different view reconstructed pictures that are reconstructed prior to the current picture; a reference list determiner for determining at least one reference list between a first reference list including at least one reconstructed picture having a reproduction order earlier than that of the current picture and at least one reconstructed picture having the same reproduction order as that of the current picture and having a smaller VID than that of the current picture, among the determined reference picture sets, and a second reference list including at least one reconstructed picture having the same reproduction order as that of the current picture and having a later reproduction order than that of the current picture and at least one reconstructed picture having the same reproduction order as that of the current picture and having a greater VID than that of the current picture; and a compensator for determining at least one reference picture and reference block for a current block of the current picture by using the determined at least one reference list, and performing at least one selected from motion compensation and disparity compensation for the current block by using the reference block.

According to another aspect according to the present invention, there is provided a computer readable recording medium having recorded thereon a program for executing the eo prediction encoding method. According to another aspect according to the present invention, there is provided a computer readable recording medium having recorded thereon a program for executing the prediction decoding method.

MODE OF THE INVENTION

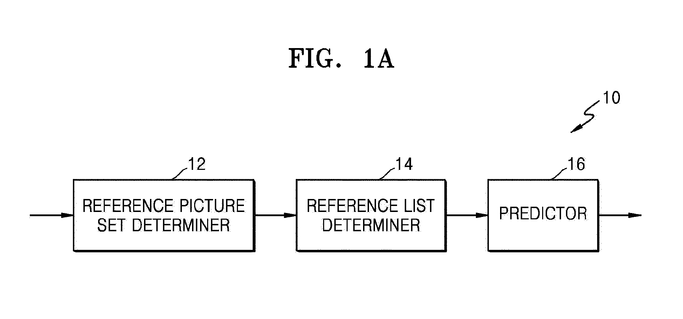

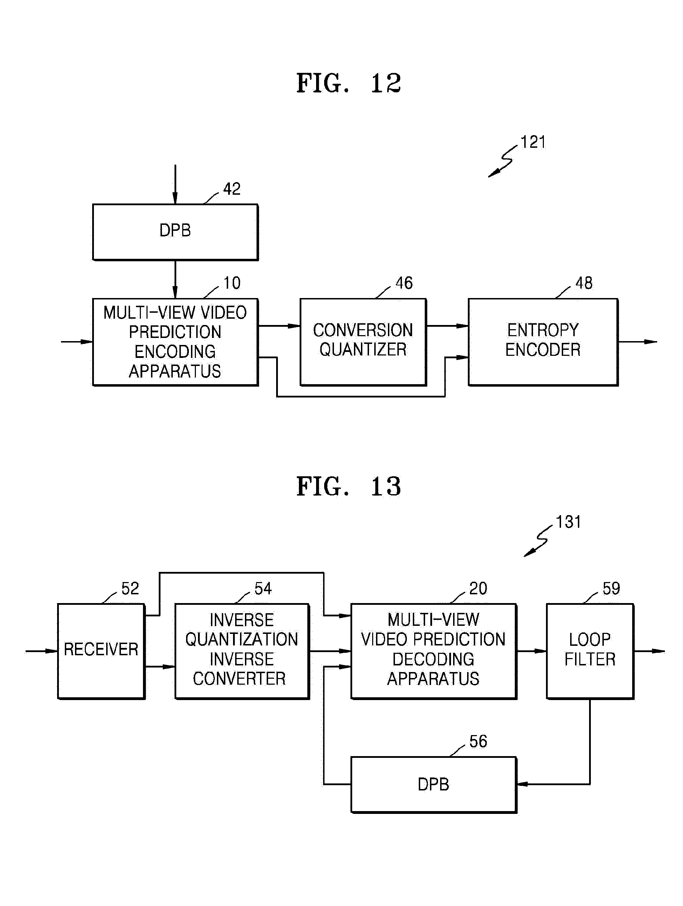

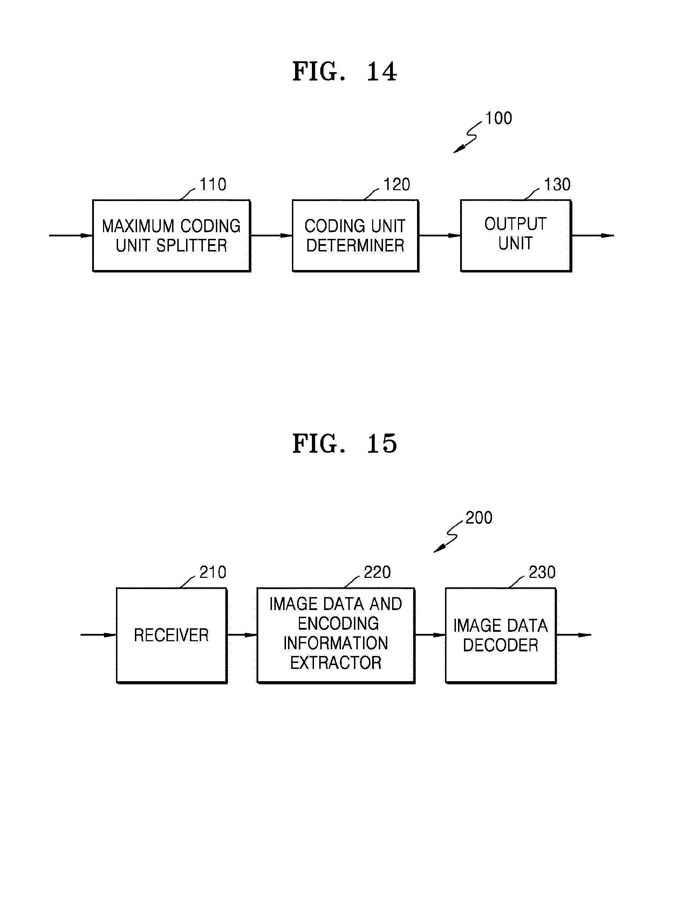

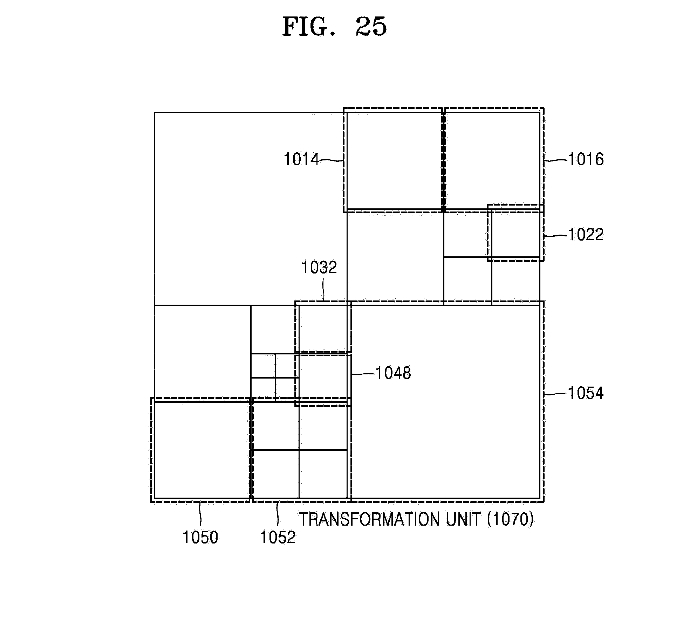

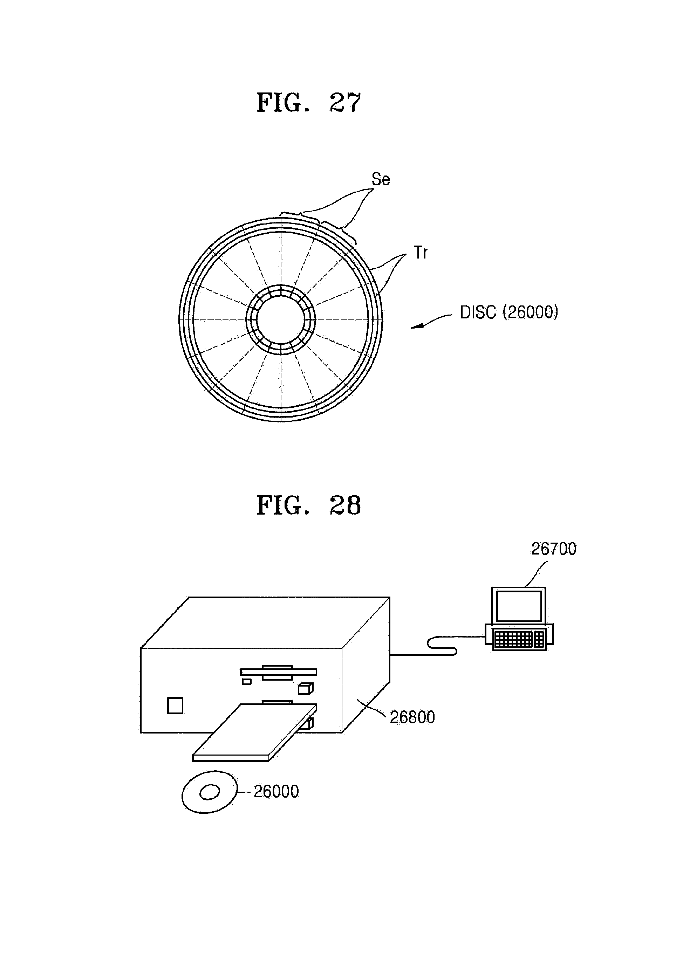

Hereinafter, a multi-view video prediction encoding apparatus, a multi-view video prediction encoding method, a multi-view video prediction decoding apparatus, and a multi-view video prediction decoding method, according to embodiments, will be described with reference to FIGS. 1A through 11. A multi-view video encoding apparatus including a multi-view video prediction encoding apparatus and a multi-view video decoding apparatus including a multi-view video prediction decoding apparatus, according to embodiments, will also be described with reference to FIGS. 12 and 13. A multi-view video encoding apparatus, a multi-view video decoding apparatus, a multi-view video encoding method, and a multi-view video decoding method, according to embodiments, which are based on coding units having a tree structure, will also be described with reference to FIGS. 14 through 26. Lastly, various embodiments to which a multi-view video encoding method, a multi-view video decoding method, a video encoding method, and a video decoding method according to embodiments are applicable, will be described with reference to FIGS. 27 through 33. Hereinafter, an "image" may denote a still image or a moving image of a video, or a video itself.

The multi-view video prediction encoding apparatus, the multi-view video prediction encoding method, the multi-view video prediction decoding apparatus, and the multi-view video prediction decoding method, according to embodiments, will be described with reference to FIGS. 1A through 11.

FIG. 1A is a block diagram of a multi-view video prediction encoding apparatus 10 according to an embodiment.

The multi-view video prediction encoding apparatus 10 according to an embodiment includes a reference picture set determiner 12, a reference list determiner 14, and a predictor 16.

The multi-view video prediction encoding apparatus 10 according to an embodiment encodes base view images and additional view images. For example, central view images, left view images, and right view images are encoded, wherein the central view images may be encoded as base view images, the left view images may be encoded as first additional view images, and the right view images may be encoded as second additional view images. Data generated by encoding images may be output as a separate bitstream, according to views.

When a number of additional views is at least three, the base view images, and the first additional view images of a first additional view, the second additional view images of a second additional view, ..., Kth additional view images of a Kth additional view may be encoded. Accordingly, an encoding result of the base view images may be output as a base view bitstream, and encoding results of the first additional view images, the second additional view images, ...., and the Kth additional view images may be respectively output as a first additional view bitstream a second additional view bitstream, ..., and a Kth additional view bitstream.

For example, the multi-view video prediction encoding apparatus 10 may encode the base view images to output a base layer stream including encoding symbols and samples. The multi-view video prediction encoding apparatus 10 may also encode the additional view images to output an additional layer bitstream by referring to the encoding symbols and samples generated by encoding the base view images.

The multi-view video prediction encoding apparatus 10 according to an embodiment performs encoding according to blocks of each image of a video. A block may have a square shape, a rectangular shape, or an arbitrary geometrical shape, and is not limited to a data unit having a predetermined size. The block according to an embodiment may be a maximum coding unit, a coding unit, a prediction unit, or a transformation unit, among coding units according to a tree structure. Video encoding and decoding methods based on coding units according to a tree structure will be described later with reference to FIGS. 14 through 26.

The multi-view video prediction encoding apparatus 10 according to an embodiment may perform inter-prediction that cross refers to same view images. By performing inter-prediction, a reference index indicating a reference picture for a current picture, a motion vector indicating motion information between the current picture and the reference picture, and residue data that is a difference component between the current picture and the reference picture may be generated.

Also, the multi-view video prediction encoding apparatus 10 according to an embodiment may perform inter-view prediction that predicts current view images by referring to different view images. By performing inter-view prediction, a reference index indicating a reference picture for a current picture of a current view, disparity between the current picture and a reference picture of a different view, and residue data that is a difference component between the current picture and the different view reference picture may be generated.

The multi-view video prediction encoding apparatus 10 according to an embodiment may perform at least one selected from inter-prediction between same view images and inter-view prediction between different view images on the image of the current view. Inter-prediction and inter-view prediction may be performed based on a data unit of a coding unit, a prediction unit, or a transformation unit.

Hereinafter, for convenience of description, an operation of the multi-view video prediction encoding apparatus 10 according to an embodiment will be described with respect to prediction for images of one view. However, the operation of the multi-view video prediction encoding apparatus 10 is not performed only on the images of one view but may be applied to different view images.

A reconstructed picture that may be referred to for prediction of other same view images may be stored in a decoded picture buffer (DPB) according to views. However, reconstructed pictures stored in the DPB for the current picture may be partially or wholly used to determine the reference list for inter-prediction and/or inter-view prediction of the current picture.

The multi-view video prediction encoding apparatus 10 according to an embodiment may refer to an image that is reconstructed prior to the current picture among same view images, in order to perform inter-prediction on the current image. A number indicating a reproduction order, i.e. a picture order count (POC), may be assigned to each image. Although a POC lower than that of the current image is assigned to an image, if the image is reconstructed prior to the current picture, inter-prediction may be performed on the current picture by referring to the reconstructed picture.

The multi-view video prediction encoding apparatus 10 according to an embodiment may generate a motion vector indicating a position difference between blocks corresponding to different images by performing inter-prediction.

The multi-view video prediction encoding apparatus 10 according to an embodiment may refer to an image that is reconstructed prior to the current picture among different view images of a same reproduction order, so as to perform inter-view prediction on the current image. A view identifier (VID) for cross identification may be assigned to each view. For example, the farther away from the current view to the left, the smaller the VID is, and the farther away from the current view to the right, the greater the VID is. Inter-view prediction may be performed on the current picture by referring to previously reconstructed pictures among the different view images having the same reproduction order as that of the current picture of the current view.

The multi-view video prediction encoding apparatus 10 according to an embodiment may generate disparity information between multi-view images through inter-view prediction. The multi-view video prediction encoding apparatus 10 may generate a depth map indicating an inter-view disparity vector or an inter-view depth as disparity information of different view images corresponding to a same scene, i.e. a same reproduction order.

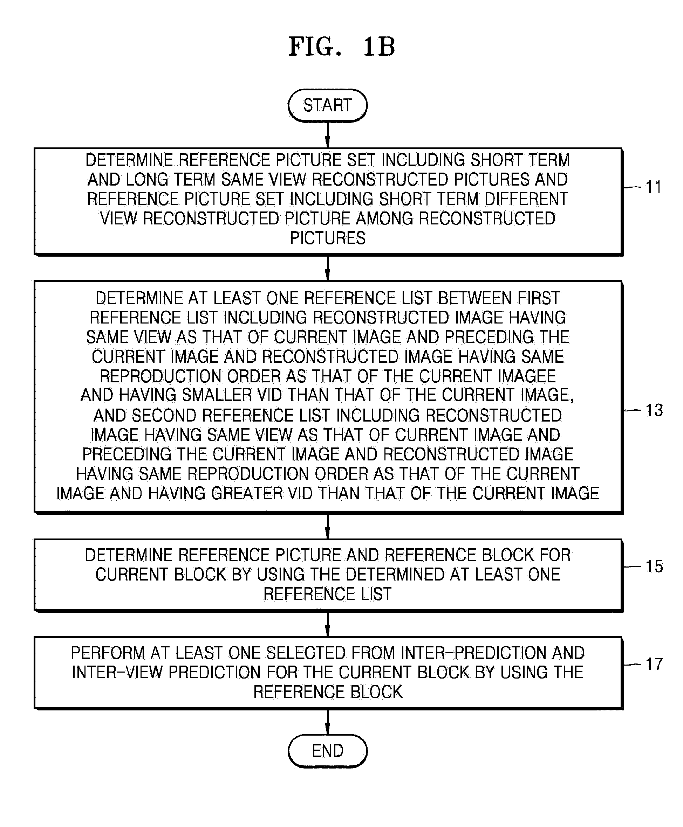

FIG. 1B is a flowchart of a multi-view video prediction encoding method according to an embodiment. Referring to FIG. 1B, operations of the elements of the multi-view video prediction encoding apparatus 10 according to an embodiment will now be described below.

In operation 11, the reference picture set determiner 12 according to an embodiment may determine a reference picture set that is a set of reconstructed pictures that may be candidate images to which a current picture may refer, among reconstructed pictures that are reconstructed prior to the current picture stored in a DPB.

The reference picture set according to an embodiment may include three subsets including same view reconstructed pictures that are reference objects for inter-prediction, according to statuses of the reconstructed pictures stored in the DPB. A first subset may be a short term reference picture set including at least one reconstructed picture that may be a short term reference picture among the same view reconstructed pictures stored in the DPB. A second subset may be a long term reference picture set including at least one same view reconstructed picture that may be a long term reference picture set. A third subset may be a non-use reference picture set including the same view reconstructed pictures that are not used as reference pictures.

The short term reference picture set for inter-prediction according to an embodiment may include preceding reconstructed pictures having an earlier reproduction order to that of the current picture and following reconstructed pictures having a later reproduction order than that of the current picture. Thus, the short term reference picture set may be divided into a subset including preceding reconstructed pictures that may be referred to, a subset including preceding reconstructed pictures that may not be referred to, a subset including following reconstructed pictures that may be referred to, and a subset including following reconstructed picture that may not be referred to.

A reference picture used for inter prediction of a current image needs to be an image that is decoded prior to the current image. Reference pictures used for inter prediction according to an embodiment may be classified into short term reference pictures and long term reference pictures. The DPB stores reconstructed pictures generated by performing motion compensation on previous images. Previously generated reconstructed pictures may be used as reference pictures for inter prediction of different images. Thus, among the reconstructed images stored in the DPB, at least one short term reference picture or at least one long term reference picture for inter prediction of the current image may be selected. The short term reference picture may be an image that is decoded just before or recently according to a decoding order of the short term reference picture and the current picture, whereas the long term reference picture may be an image that was decoded a long time before the current picture and is stored in the DPB after being selected as a reference picture for inter prediction of other images.

Among the reconstructed pictures stored in the DPB, short term reference pictures and long term reference pictures may be selected after being classified from each other. The long term reference pictures are images that may be referred to for inter prediction of a plurality of images and thus may be stored in the DPB for the long term.

The short term reference pictures necessary for each image by performing inter prediction on the current picture and a next image may be renewed, and thus the short term reference pictures may be renewed in the DPB. Thus, when a new short term reference picture is stored in the DPB, the previously stored short term reference pictures may be sequentially deleted from images that are stored for a longest term.

As a long term reference index indicating long term reference pictures according to an embodiment, least significant bits (LSB) information of picture order count (POC) information of the long term reference picture may be determined. According to an embodiment, the POC information of the long term reference picture may be split into most significant bits (MSB) information and the LSB information. Only the LSB information may be used as the long term reference index indicating the long term reference pictures.

The reference picture set according to an embodiment may include a short term reference picture set including different view reconstructed pictures that that are reference objects for inter-view prediction, according to the statuses of the reconstructed pictures stored in the DPB. The short term reference picture set for different inter-view prediction according to an embodiment may include reconstructed pictures to which a same reproduction order as that of the current picture are assigned among the different view reconstructed pictures stored in the DPB.

The multi-view video prediction encoding apparatus 10 according to an embodiment may perform inter-view prediction and inter-prediction on the current picture as well. The DPB according to an embodiment may store the different view reconstructed pictures which also have the same reproduction order as that of the current picture.

Therefore, the short term reference picture set for inter-view prediction may include minus (-) view reconstructed pictures having <u>smaller view numbers</u> than that of the current picture and plus (+) view reconstructed pictures having greater VIDs than that of the current picture, among the reconstructed pictures having the same reproduction order as that of the current picture stored in the DPB and having a different view from that of the current picture. Thus, the short term reference picture set may be divided into a subset including the minus (-) view reconstructed pictures that may be referred to and a subset including the plus (+) view reconstructed pictures that may be referred to.

The reference picture set determiner 12 according to an embodiment may determine a reference picture set including at least one short term reconstructed picture having a different reproduction order from that of the current picture stored in the DPB and a reference picture set including at least one long term reconstructed picture, among same view reconstructed pictures that are reconstructed prior to the current picture. The reference picture set determiner 12 according to an embodiment may determine a reference picture set including at least one short term reconstructed picture having the same reproduction order as that of the current picture stored in the DPB, among different view reconstructed pictures that are reconstructed prior to the current picture.

The reference picture set determiner 12 according to an embodiment may determine a reference picture set including at least one non-reference reconstructed picture having a different reproduction order from that of the current picture stored in the DPB, among the same view reconstructed pictures that are reconstructed prior to the current picture according to an embodiment.

The reference picture set determiner 12 according to an embodiment may further determine a reference picture set including at least one different view non-reference reconstructed picture that has the same reproduction order as that of the current picture, among the different view reconstructed pictures that are reconstructed prior to the current picture.

The reference picture set determiner 12 according to an embodiment may determine whether to user one of reference picture sets determined for the current picture, in a current slice.

If one of the reference picture sets determined for the current picture is determined, the reference picture set determiner 12 according to an embodiment may select an index from among the reference picture sets.

If the reference picture sets determined for the current picture are not determined, the reference picture set determiner 12 according to an embodiment may directly determine a reference picture set for the current slice.

As the reference picture set for inter-view prediction, a first number of pictures having a smaller VID than that of a current view and a second number of pictures having a greater VID than that of the current view may be determined, and a differential value between VIDs of the pictures having the smaller VID than that of the current view and a differential view between VIDs of the pictures having the greater VID than that of the current view may be determined.

In operation 13, the reference list determiner 14 according to an embodiment may determine a reference list that records candidate images that may be used as reference pictures, so as to determine the reference pictures for at least one selected from inter-prediction of the current picture and inter-view prediction. The reference list for the current picture may record information regarding an order of the reference pictures to which the current picture refers to, among the reconstructed pictures stored in the DPB.

The reference list determiner 14 according to an embodiment may generate one reference list or two reference lists according to a prediction mode. When the current picture is a P slice type image capable of forward prediction or a B slice type image capable of bi-directional prediction, the reference list determiner 14 may generate an L0 list as a first reference list.

In operation 13, the reference list determiner 14 according to an embodiment may determine the L0 list including at least one reconstructed picture having a reproduction order earlier than that of the current picture and at least one reconstructed picture having the same reproduction order as that of the current picture and having a smaller VID than that of the current picture, among same view images of the current picture.

The reference list determiner 14 according to an embodiment may generate the L0 list in the order of a subset including preceding reconstructed pictures that may be referred to and a subset including following reconstructed pictures that may be referred to, among a same view short term reference picture set, and a subset including minus (-) view reconstructed pictures that may be referred to and a subset including plus (+) view reconstructed pictures, among a different view short term reference picture set, and a long term reference picture set, by using reconstructed pictures of reference picture sets.

In operation 13, when the current picture is the B slice type image, the reference list determiner 14 according to an embodiment may further generate a L1 list as a second reference list. The reference list determiner 14 according to an embodiment may determine the L1 list including at least one reconstructed picture having a later reproduction order than that of the current picture and at least one reconstructed picture having the same reproduction order as that of the current picture and having a greater VID than that of the current picture.

The reference list determiner 14 according to an embodiment may generate the L0 list in the order of a subset including following reconstructed pictures that may be referred to and a subset including preceding reconstructed pictures that may be referred to, among the same view short term reference picture set, and a subset including plus (+) view reconstructed pictures that may be referred to and a subset including minus (-) view reconstructed pictures, among the different view short term reference picture set, and the long term reference picture set, by using the reconstructed pictures of the reference picture sets.

However, the L0 list may preferentially include the reconstructed picture having the reproduction order earlier than that of the current picture but may not include the reconstructed picture having the later reproduction order than that of the current picture, among the same view images. Likewise, the L0 list may preferentially include the reconstructed picture having the smaller VID than that of the current picture and may include the reconstructed picture having the greater VID than that of the current picture, among different view images having the same reproduction order.

Similarly, the L2 list may preferentially include the reconstructed picture having the later reproduction order than that of the current picture but may not include the reconstructed picture having the reproduction order earlier than that of the current picture, among the same view images. Likewise, the L2 list may preferentially include the reconstructed picture having the greater VID than that of the current picture and may include the reconstructed picture having the smaller VID than that of the current picture, among the different view images having the same reproduction order.

Therefore, the reference list determiner 14 according to an embodiment may determine at least one selected from the L0 list and the L1 list as the reference list for at least one selected from inter-prediction of the current picture and inter-view prediction.

In operation 15, the predictor 16 according to an embodiment may determine at least one reference picture and reference block for a current block of the current picture by using the at least one reference list determined by the reference list determiner 14. In operation 17, the predictor 16 according to an embodiment may perform at least one selected from inter-prediction and inter-view prediction for the current block by using the reference block determined in operation 15.

The reference list determiner 14 according to an embodiment may determine whether to optionally modify a reference order of reference indices of the determined at least one reference list in the current picture.

When it is possible to optionally modify the reference order in the current picture, the reference list determiner 14 may modify a reference order of reference indices of at least one reference list for a current slice that belongs to the current picture.

The reference list determiner 14 according to an embodiment may determine a first base number of the at least one reconstructed picture having the reproduction order earlier than that of the current picture and a second base number of the at least one reconstructed picture having the smaller VID than that of the current picture among the first reference list, for the current picture. The reference list determiner 14 may determine a third base number of the at least one reconstructed picture having the later reproduction order than that of the current picture and a fourth base number of the at least one reconstructed picture having the greater VID than that of the current picture among the second reference list, for the current picture.

The reference list determiner 14 according to an embodiment may determine whether to individually replace at least one selected from the first and second base numbers of the first reference list and the third and fourth base numbers of the second reference list that are set with respect to the current picture.

When the base numbers of the reconstructed pictures that belong to each reference list can be individually replaced, the reference list determiner 14 according to an embodiment may determine at least one selected from a number of the reconstructed pictures of the first reference list and a number of the reconstructed pictures of the second reference list that is independently applicable in the current slice.

That is, when the base numbers of the reconstructed pictures that belong to each reference list can be independently replaced in the current slice, the reference list determiner 14 according to an embodiment may replace a number of same view reconstructed picture as that of the current picture and having a reproduction order earlier than that of the current picture among the first reference list as a first valid number independently applicable to the current slice, instead of the first base number that is commonly applied to the current picture.

Likewise, the reference list determiner 14 according to an embodiment may replace a number of at least one same view reconstructed picture as that of the current picture and having a smaller VID than that of the current picture among the first reference list as a second valid number independently applicable to the current slice, instead of the second base number that is commonly applied to the current picture.

Likewise, the reference list determiner 14 according to an embodiment may replace a number of at least one same view reconstructed picture as that of the current picture and having a later reproduction order than that of the current picture among the second reference list as a third valid number independently applicable to the current slice, instead of the third base number that is commonly applied to the current picture.

Likewise, the reference list determiner 14 according to an embodiment may replace a number of one same view reconstructed picture as that of the current picture and having a greater VID than that of the current picture among the second reference list as a fourth valid number independently applicable to the current slice, instead of the fourth base number that is commonly applied to the current picture.

A maximum number of reference indices that belong to the first reference list according to an embodiment may be a sum of the first base number of the at least one reconstructed picture having the reproduction order earlier than that of the current picture and the second base number of the at least one reconstructed picture having the smaller VID than that of the current picture among the first reference list.

A maximum number of reference indices that belong to the second reference list according to an embodiment may be a sum of the third base number of the at least one reconstructed picture following that of the current picture and the fourth base number of the at least one reconstructed picture having the greater VID than that of the current picture among the second reference list.

The predictor 16 according to an embodiment may determine a reference picture for prediction of the current picture by comparing the current picture with the reconstructed pictures stored in the DPB according to the reference order based on at least one selected from the L0 list and the L1 list that are determined by the reference list determiner 14. The reference list determiner 14 may determine the reference block by detecting a most similar block to the current block within the reference picture.

The predictor 16 according to an embodiment may determine a reference index indicating the previously determined reference picture, and a position difference between the current block and the reference block as a motion vector or a disparity vector. The differential value between the current block and the reference block for each pixel may be determined as residue data.

When the predictor 16 according to an embodiment performs inter-prediction, the predictor 16 may determine the reference picture and the reference block in at least one selected from the at least one reconstructed picture having the reproduction order earlier than that of the current picture among the first reference list and the at least one reconstructed picture having the later reproduction order than that of the current picture among the second reference list. First residue data between the reference block and the current block determined by performing inter-prediction on the current block, a first motion vector indicating the reference block, and a first reference index indicating the reference picture may be generated as resultant data of inter-prediction.

When the predictor 16 according to an embodiment performs inter-view prediction, the predictor 16 may determine the reference picture and the reference block in at least one selected from the at least one reconstructed picture having the smaller VID than that of the current picture among the first reference list and the at least one reconstructed picture having the greater VID than that of the current picture among the second reference list. Second residue data between the reference block and the current block determined by performing inter-view prediction on the current block, a second disparity vector indicating the reference block, and a second reference index indicating the reference picture may be generated as resultant data of inter-view prediction.

The multi-view video prediction encoding apparatus 10 according to an embodiment may include a central processor (not shown) for generally controlling the reference list determiner 14 and the predictor 16. Alternatively, the reference list determiner 14 and the predictor 16 may operate by processors thereof (not shown), and the processors may mutually organically operate such that the multi-view video prediction encoding apparatus 10 operates in general. Alternatively, the reference list determiner 14 and the predictor 16 may be controlled by an external processor (not shown) of the multi-view video prediction encoding apparatus 10.

The multi-view video prediction encoding apparatus 10 according to an embodiment may include one or more data storage unit (not shown) for storing input and output data of the reference list determiner 14 and the predictor 16. The multi-view video prediction encoding apparatus 10 may include a memory controller (not shown) for controlling data input to/output from the data storage unit.

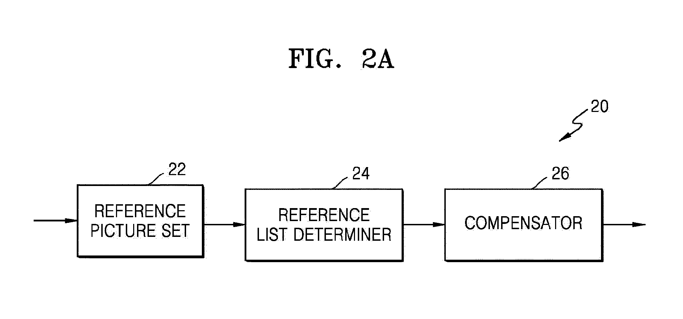

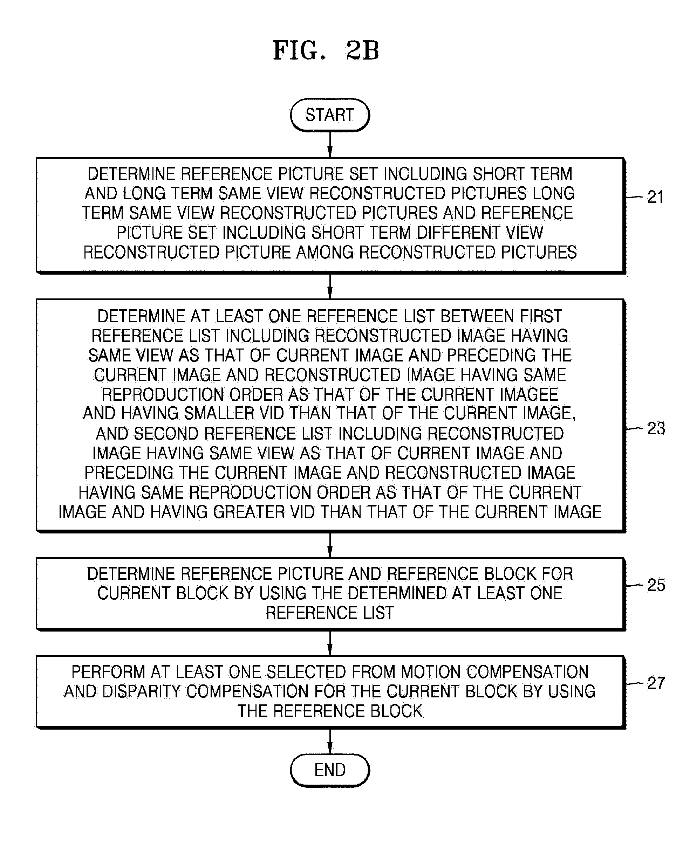

A multi-view video decoding apparatus for and a multi-view video decoding method of reconstructing a multi-view video bitstream prediction-encoded according to the embodiment described above with reference to FIGS. 1A and 1B will now be described with reference to FIGS. 2A and 2B.

FIG. 2A is a block diagram of a multi-view video prediction decoding apparatus 20 according to an embodiment. FIG. 2B is a flowchart of a block diagram of a multi-view video prediction decoding method according to an embodiment

The multi-view video prediction decoding apparatus 20 according to an embodiment includes a reference list determiner 24 and a compensator 26.

The multi-view video prediction decoding apparatus 20 according to an embodiment may receive a bitstream encoded from images of each view. A bitstream having recorded thereon encoding data of additional view images may be separately received from a bitstream having recorded thereon encoding data of base view images.

For example, the multi-view video prediction decoding apparatus 20 may reconstruct the base view images by decoding a base layer bitstream. The multi-view video prediction decoding apparatus 20 may also selectively decode an additional layer bitstream. The additional view images may be reconstructed by decoding the additional layer bitstream, by referring to encoding symbols and samples that are reconstructed from the base layer bitstream. The additional layer bitstream is selectively decoded, thereby reconstructing only a desired view video from a multi-view video.

For example, the multi-view video prediction decoding apparatus 20 according to an embodiment may decode the base view bitstream to reconstruct center view images, decode a first additional view bitstream to reconstruct left view images, and decode a second additional view bitstream to reconstruct right view images.

When a number of additional views is at least three, first additional view images of a first additional view may be reconstructed from the first additional view bitstream, second additional view images of a second additional view may be reconstructed from the second additional view bitstream, and Kth additional view images of a Kth additional view may be reconstructed from a Kth additional view bitstream.

The multi-view video prediction decoding apparatus 20 according to an embodiment performs decoding according to blocks of each image of a video. A block according to an embodiment may be a maximum coding unit, a coding unit, a prediction unit, or a transformation unit, from among coding units having a tree structure.

The multi-view video prediction decoding apparatus 20 according to an embodiment may receive a motion vector generated via inter-prediction and disparity information generated via inter-view prediction, together with bitstreams including encoded data of images according to views.

The multi-view video prediction decoding apparatus 20 according to an embodiment may reconstruct images by performing motion compensation that mutually refers to images predicted via same view inter-prediction. Motion compensation is an operation of synthesizing a reference picture determined by using a motion vector of a current image, and residue data of the current image and reconfiguring a reconstructed image of the current image.

The multi-view video prediction decoding apparatus 20 according to an embodiment may perform disparity compensation by referring to different view images so as to reconstruct the additional view images predicted via inter-view prediction. Disparity compensation is an operation of synthesizing a different view reference image determined by using disparity information of the current image, and the residue data of the current image and reconstructing a reconstructed image of the current image. The multi-view video prediction decoding apparatus 20 according to an embodiment may perform disparity compensation for reconstructing current view images predicted by referring to the different view images.

Reconstruction may be performed through inter-motion compensation and inter-view disparity compensation, based on a coding unit or a prediction unit.

The compensator 26 according to an embodiment may reconstruct the current view images via inter-view prediction that refers to the different view images reconstructed from a different view bitstream and inter-prediction that refers to the same view images, so as to decode bitstreams according to views.

The compensator 26 according to an embodiment may reconstruct the current view images via inter-view disparity compensation that refers to a reconstructed picture of the same reproduction order as that of a current picture among different view reconstructed pictures. According to circumstances, the current view images may be reconstructed via inter-view disparity compensation that refers to two or more different view images. The reference list determiner 24 may determine a reference list such that the compensator 26 may determine an exact reference picture for motion compensation of the current picture or disparity compensation.

Hereinafter, a method of determining a reference list for inter-prediction and inter-view prediction and finally performing at least one selected from inter-prediction and inter-view prediction by using the reference list will now be described with reference to FIG. 2B.

In operation 21, the reference picture set determiner 22 according to an embodiment may determine a reference picture set that is a set of reconstructed pictures that may be a candidate to which the current picture may refer to, from among reconstructed pictures that are reconstructed prior to the current picture stored in a DPB.

The multi-view video prediction encoding apparatus 10 according to an embodiment may perform inter-view prediction and inter-prediction on the current picture as well. The DPB according to an embodiment may store different view reconstructed pictures that have the same reproduction order as that of the current picture.

The reference picture set according to an embodiment may include a short term reference picture set for inter-prediction. The short term reference picture set for inter-prediction according to an embodiment may include reconstructed pictures to which a reproduction order different from that of the current picture is assigned among the same view reconstructed pictures stored in a DPB.

Thus, the short term reference picture set for inter-prediction may include preceding reconstructed pictures having a reproduction order earlier than that of the current picture and following reconstructed pictures having a later reproduction order than that of the current picture, among reconstructed pictures having the same view as that of the current picture stored in the DPB and having a different reproduction order from that of the current picture. Thus, the short term reference picture set may be divided into a subset including preceding reconstructed pictures that may be referred to, a subset including preceding reconstructed pictures that may not be referred to, a subset including following reconstructed pictures that may be referred to, and a subset including following reconstructed pictures that may not be referred to.

The reference picture set according to an embodiment may include a short term reference picture set for inter-view prediction. The short term reference picture set for inter-view prediction according to an embodiment may include reconstructed pictures to which the same reproduction order as that of the current picture is assigned among different view reconstructed pictures stored in the DPB.

Therefore, the short term reference picture set for inter-view prediction may include minus (-) view reconstructed pictures having smaller VIDs than that of the current picture and plus (+) view reconstructed pictures having greater VIDs than that of the current picture, among different view reconstructed pictures having the same reproduction order as that of the current picture stored in the DPB. Thus, the short term reference picture set may be divided into a subset including the minus (-) view reconstructed pictures that may be referred to and a subset including the plus (+) view reconstructed pictures that may be referred to.

The reference picture set determiner 22 according to an embodiment may determine a reference picture set including at least one short term reconstructed picture having a different reproduction order from that of the current picture and a reference picture set including at least one long term reconstructed picture, among same view reconstructed pictures that are reconstructed prior to the current picture stored in the DPB. The reference picture set determiner 22 according to an embodiment may determine a reference picture set including at least one short term reconstructed picture having the same reproduction order as that of the current picture, among different view reconstructed pictures that are reconstructed prior to the current picture stored in the DPB.

The reference picture set determiner 22 according to an embodiment may determine a reference picture set including at least one non-reference reconstructed picture having a different reproduction order from that of the current picture, among the same view reconstructed pictures that are reconstructed prior to the current picture according to an embodiment.

The reference picture set determiner 22 according to an embodiment may further include a reference picture set including at least one non-reference different view reconstructed picture having the same reproduction order as that of the current picture, among the different view reconstructed pictures that are reconstructed prior to the current picture.

The reference picture set determiner 22 according to an embodiment may determine whether to use one of the reference picture sets determined for the current picture in a current slice.

If one of the reference picture sets determined for the current picture is used, the reference picture set determiner 22 according to an embodiment may select an index from among the reference picture sets.

If the reference picture sets determined for the current picture are not used, the reference picture set determiner 22 according to an embodiment may directly determine a reference picture set for the current slice.

As the reference picture set for inter-view prediction, a first number of pictures having a smaller VID than that of a current view and a second number of pictures having a greater VID than that of the current view may be determined, and a differential value between VIDs of the pictures having the smaller VID than that of the current view and a differential view between VIDs of the pictures having the greater VID than that of the current view may be determined.

In operation S23, the reference list determiner 24 according to an embodiment may determine an L0 list for forward prediction and bi-directional prediction and an L1 list for bi-directional prediction.

The reference list determiner 24 according to an embodiment may determine a first reference list, i.e., the L0 list, including at least one reconstructed picture having a reproduction order earlier than that of the current picture and at least one reconstructed picture having the same reproduction order as that of the current picture and having a smaller VID than that of the current picture, among same view images of the current picture.

The reference list determiner 24 according to an embodiment may determine a second reference list, i.e., the L1 list, including at least one reconstructed picture having a later reproduction order than that of the current picture and at least one reconstructed picture having the same reproduction order as that of the current picture and having a greater VID than that of the current picture.

However, when the L0 list preferentially includes the reconstructed picture having the reproduction order earlier than that of the current picture and a valid reference index remains, the L0 list may include the reconstructed picture having the later reproduction order than that of the current picture, among the same view images. Likewise, when the L0 list preferentially includes the reconstructed picture having the smaller VID than that of the current picture, and the valid reference index remains, the L0 list may include the reconstructed picture having the greater VID than that of the current picture, among different view images having the same reproduction order

Similarly, when the L1 list preferentially includes the reconstructed picture having the later reproduction order than that of the current picture, and the valid reference index remains, the L1 list may include the reconstructed picture having the reproduction order earlier than that of the current picture, among the same view images. Likewise, when the L1 list preferentially includes the reconstructed picture having the greater VID than that of the current picture, and the valid reference index remains, the L1 list may include the reconstructed picture having the smaller VID than that of the current picture, among the different view images having the same reproduction order.

The multi-view video prediction apparatus 20 may store the reconstructed pictures in the DPB. The reference list records thereon information regarding an order of the reconstructed pictures stored in the DPB that are referred to for motion compensation of the current picture or disparity compensation.

In operation 25, the compensator 26 according to an embodiment may determine at least one reference picture and reference block for a current block of the current picture by using the at least one reference list determined by the reference list determiner 24.

In operation 27, the compensator 26 according to an embodiment may perform at least one selected from disparity compensation that refers to a different view reconstructed picture having a same reproduction order and motion compensation that refers to same view reconstructed pictures, with respect to a current bitstream to reconstruct the current block of the current picture.

In more detail, the multi-view video prediction apparatus 20 according to an embodiment may parse the current bitstream to obtain a reference index, disparity information, and residue date for inter-view prediction. The compensator 26 according to an embodiment may determine a reference picture among different view images by using the reference index and determine a reference block of the reference picture by using the disparity information. The reference block is compensated as much as the residue data, thereby reconstructing the current picture.

The compensator 26 according to an embodiment may perform motion compensation that refers to the same view reconstructed pictures to reconstruct the current picture.

In more detail, the multi-view video prediction apparatus 20 may parse the bitstream to obtain the reference index, a motion vector, and the residue date for motion compensation of the current picture. The compensator 26 may determine a reference picture among the same view reconstructed pictures by using the reference index, determine the reference block within the reference picture by using the motion vector, and compensate for the reference block as much as the residue data, thereby reconstructing the current picture.

The reference list determiner 24 according to an embodiment may determine whether to optionally modify a reference order of reference indices of at least one reference list in the current picture. Basically, since the reference index of the reference list indicates a reference order of reconstructed pictures corresponding to the reference index, if the reference index is modified, the reference order of reconstructed pictures corresponding to the reference index may be modified.

When the reference order of the reference list is optionally modified in the current picture according to an embodiment, the reference list determiner 24 according to an embodiment may modify the reference order of reference indices of at least one reference list for a current slice that belongs to the current picture.

The reference list determiner 24 according to an embodiment may also determine a first base number of at least one reconstructed picture having a preceding reproduction order to that of the current picture among the first reference list, a second base number of at least one reconstructed picture having a smaller VID than that of the current picture among the first reference list, a third base number of at least one reconstructed picture having a later reproduction order than that of the current picture among the second reference list, and a fourth base number of at least one reconstructed picture having a greater VID than that of the current picture among the second reference list, for the current picture.

The reference list determiner 24 according to an embodiment may individually replace at least one selected from the first and second base numbers of the first reference list and the third and fourth base numbers of the second reference list that are set with respect to the current picture, in the current slice.

That is, if base numbers of the reconstructed pictures that belong to each reference list are individually replaced in the current slice, the reference list determiner 24 according to an embodiment may replace a number of reconstructed pictures having the same view as that of the current picture and a preceding reproduction order to that of the current picture among the first reference list, instead of the first base number commonly applied to the current picture, with a first valid number solely applied to the current slice.

Likewise, the reference list determiner 24 according to an embodiment may replace a number of at least one reconstructed picture having the same reproduction order that of the current picture and a smaller VID than that of the current picture among the first reference list, instead of the second base number commonly applied to the current picture, with a second valid number solely applied to the current slice.

Likewise, the reference list determiner 24 according to an embodiment may replace a number of at least one reconstructed pictures having the same view as that of the current picture and a later reproduction order than that of the current picture among the second reference list, instead of the third base number commonly applied to the current picture, with a third valid number solely applied to the current slice.

Likewise, the reference list determiner 24 according to an embodiment may replace a number of at least one reconstructed picture having the same reproduction order as that of the current picture and a greater VID than that of the current picture among the second reference list, instead of the fourth base number commonly applied to the current picture, with a fourth valid number solely applied to the current slice.

A maximum number of reference indices that belong to the first reference list according to an embodiment may be a sum of the first base number of the at least one reconstructed picture having the preceding reproduction order to that of the current picture among the first reference list and the second base number of the at least one reconstructed picture having the smaller VID than that of the current picture among the first reference list.

A maximum number of reference indices that belong to the second reference list according to an embodiment may be a sum of the third base number of the at least one reconstructed picture having the later reproduction order than that of the current picture among the second reference list and the fourth base number of the at least one reconstructed picture having the greater VID than that of the current picture among the second reference list.

The compensator 26 may perform at least one selected from motion compensation and disparity compensation by using the determined reference lists. A reference list according to an embodiment may record thereon information for reconstructed pictures for inter-prediction and reconstructed pictures for inter-view prediction. Thus, the compensator 26 may perform at least one selected from motion compensation and disparity compensation by using one reference list.

The multi-view video prediction decoding apparatus 20 according to an embodiment may receive the reference index and the residue data for the current block of the current picture and receive the motion vector or a disparity vector. According to whether the received reference index indicates a same view reconstructed picture among the reference list or a same POC image of a different view, it may be determined whether a received vector is the motion vector or the disparity vector.

Thus, the compensator 26 according to an embodiment may determine a reference picture indicated by the reference index among the reference lists, if the determined reference picture is a same view reconstructed picture, determine a reference block indicated by the motion vector among the reconstructed pictures, and compensate for the residue data with respect to the reference block, thereby reconstructing the current block.

The compensator 26 according to an embodiment may determine a reference picture indicated by the reference index among the reference lists, if the determined reference picture is a different view reconstructed picture, determine a reference block indicated by the motion vector among the reconstructed pictures, and compensate for the residue data with respect to the reference block, thereby reconstructing the current block.

Like a process of reconstructing current view images from a current view bitstream as described above, second view images may be reconstructed from a second view bitstream.

The multi-view video prediction decoding apparatus 20 according to an embodiment may include a central processor (not shown) for generally controlling the reference list determiner 24 and the compensator 26. Alternatively, the reference list determiner 24 and the compensator 26 may operate by processors thereof (not shown), and the processors may mutually organically operate such that the multi-view video prediction decoding apparatus 20 operates in general. Alternatively, the reference list determiner 24 and the compensator 26 may be controlled by an external processor (not shown) of the multi-view video prediction decoding apparatus 20.

The multi-view video prediction decoding apparatus 20 according to an embodiment may include one or more data storage unit (not shown) for storing input and output data of the reference list determiner 24 and the compensator 26. The multi-view video prediction decoding apparatus 20 may include a memory controller (not shown) for controlling data input to/output from the data storage unit.

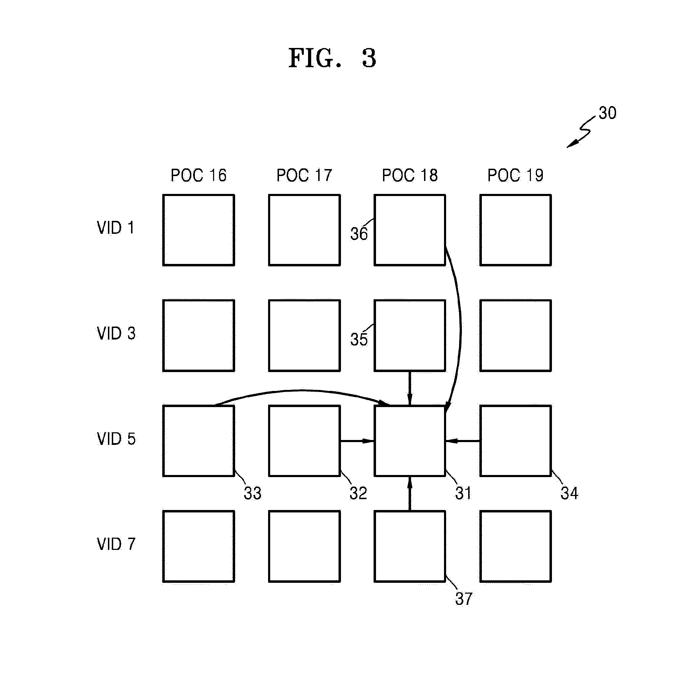

An operation of the present invention will now be described in detail by using an example of three reconstructed blocks for inter-prediction and three reconstructed blocks for inter-view prediction with respect to a reference list with reference to FIGS. 3, 4, 5A, and 5B.

FIG. 3 illustrates reference objects for inter-prediction of a current picture 31 and inter-view prediction according to an embodiment.

For example, images 30 of four views are encoded, and a reference list for inter prediction of the current picture 31 having a reproduction order number POC 18 of a view number VID 5 is determined. It is assumed that the current picture 31 may refer to three images 32, 33, and 34 that are reconstructed prior to the current picture 31 among images having a VID 5, for inter-prediction. It is also assumed that the current picture 31 may refer to three images 35, 36, and 37 that are reconstructed prior to the current picture 31 among different view images having a POC 18, for inter-prediction.

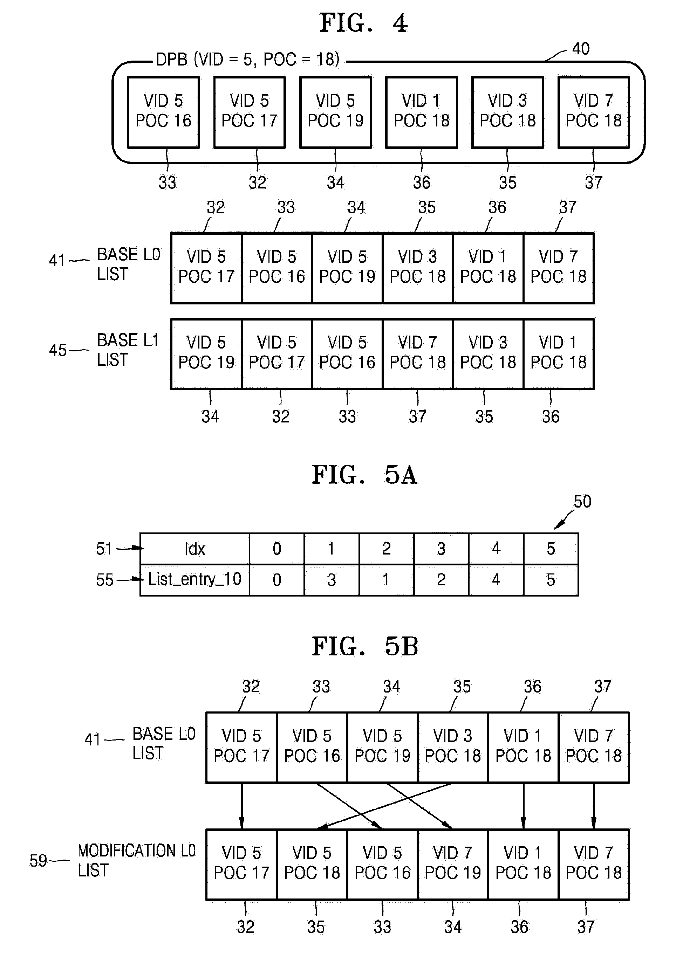

FIG. 4 illustrates a reference list configured based on the reference objects of FIG. 3 according to an embodiment.

Following FIG. 3, the reconstructed pictures 32, 33, 34, 35, 36, and 37 that may be referred to by the current picture 31 for prediction may be stored in the DPB 40 for the current picture 31.

In a base L0 list 41 according to an embodiment, a preferential reference order may be assigned to reconstructed pictures for forward prediction among inter-prediction, and a prior reference order may be assigned to reconstructed pictures closer to the current picture 31. The prior reference order may be assigned to reconstructed pictures for inter-prediction rather than reconstructed pictures for inter-view prediction. The prior reference order may be assigned to a reconstructed picture having a smaller VID than that of a current view rather than a reconstructed picture having a greater VID than that of the current view among reconstructed pictures according to views for inter-view prediction.

Like the base L0 list 41, in a base L1 list 45 according to an embodiment, the prior reference order may be assigned to reconstructed pictures closer to the current picture 31. The prior reference order may be assigned to the reconstructed pictures for inter-prediction rather than the reconstructed pictures for inter-view prediction. However, in the base L1 list 45, the preferential reference order may be assigned to reconstructed pictures for backward prediction among inter-prediction. The prior reference order may be assigned to the reconstructed picture having the greater VID than that of the current view rather than the reconstructed picture having the smaller VID than that of the current view among the reconstructed pictures according to views for inter-view prediction.

For convenience of description, an image having a VID A and a POC B is named as a VID A/POC B image.

Thus, the reconstructed pictures that belong to the base L0 list 41 may be a same view VID 5/POC 17 picture 32, a VID 5/POC 16 picture 33, a VID 5/POC 19 picture 34, a VID 3/POC 18 picture 35, a VID 1/POC 18 picture 36, and a VID 7/POC 18 picture 37 in a reference order.

The reconstructed pictures that belong to the base L1 list 45 may be the VID 5/POC 19 picture 34, the VID 5/POC 17 picture 32, the VID 5/POC 16 picture 33, the VID 7/POC 18 picture 37, the VID 3/POC 18 picture 35, and the VID 1/POC 18 picture 36 in a reference order.

FIGS. 5A and 5B are diagrams for explaining a process of changing a L0 list according to an embodiment.

In a reference index table 50 according to an embodiment, a reference index Idx 51 is generally a number indicating a base order of reconstructed pictures in a reference list. A reference index may basically indicate a reference order in the reference list. Thus, reconstructed pictures corresponding to the reference index may be referred to in an order of the reference index.

However, a reference order indicated by a reference index in a current slice may be optionally modified through an optional modification of the reference order. A modified index List_entry_l0 55 of a reference index table 50 according to an embodiment may be defined to optionally modify a reference order set in the base L0 list 41 in a current image.

In this regard, Idx 0, 1, 2, 3, 4, and 5 of the base L0 list 41 sequentially indicate the VID 5/POC 17 picture 32, the VID 5/POC 16 picture 33, the VID 5/POC 19 picture 34, the VID 3/POC 18 picture 35, the VID 1/POC 18 picture 36, and the VID 7/POC 18 picture 37.

That is, since the reference order is modified to Idx 0, 3, 1, 2, 4, and 5 according to the modified index List_entry_l0 55, reconstructed pictures that belong to a modified L0 list 59 may be modified to the VID 5/POC 17 picture 32, the VID 3/POC 18 picture 35, the VID 5/POC 16 picture 33, the VID 5/POC 19 picture 34, the VID 1/POC 18 picture 36, and the VID 7/POC 18 picture 37 in a reference order.

Therefore, in the base L0 list 41, a next reference order of the VID 5/POC 17 picture 32 that is the reconstructed picture that may be initially referred to for inter-prediction may be the VID 5/POC 16 picture 33 for inter-prediction, and different view reconstructed pictures for inter-view prediction may be referred to after all same view reconstructed pictures for inter-prediction are referred to.

However, in the modified L0 list 59 of the modified index List_entry_I0 55 according to an embodiment, a reference order following the same view VID 5/POC 17 picture 32 that may be initially referred to for inter-prediction may be the different view VID 5/POC 17 picture 32 that may be initially referred to for inter-view prediction.

However, although an example in which the three same view reconstructed pictures 32, 33, and 34 and the three different view reconstructed pictures 35, 36, and 37 belong to the one L0 list 41 for prediction encoding of a current picture is described above, the number of reconstructed pictures that belong to a reference list according to an embodiment should not be limited thereto.

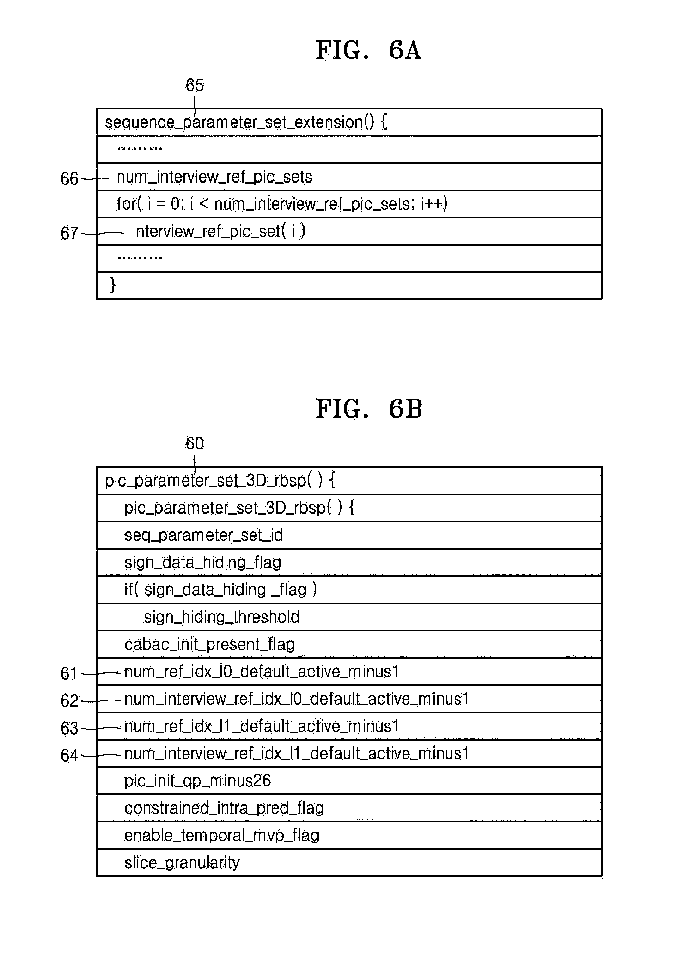

FIG. 6A illustrates a syntax of a sequence parameter set 65 according to an embodiment.

The multi-view video prediction encoding apparatus 10 according to an embodiment may generate the sequence parameter set 65 including information regarding default settings commonly applied within a current picture sequence. In particular, with regard to a reference list for inter-view prediction, information regarding reference picture sets that are to be used in each picture that belongs to a current sequence may be included in the sequence parameter set 65.

The sequence parameter set 65 according to an embodiment includes a parameter "num_interview_ref_pic_sets" 66 indicating a number of reference picture sets allowable to each picture that belongs to the current sequence. For example, if "num_interview_ref_pic_sets" 66 is determined as a number from 0 to 64, the number of reference picture sets that are as many as the corresponding number may be set for each picture?.

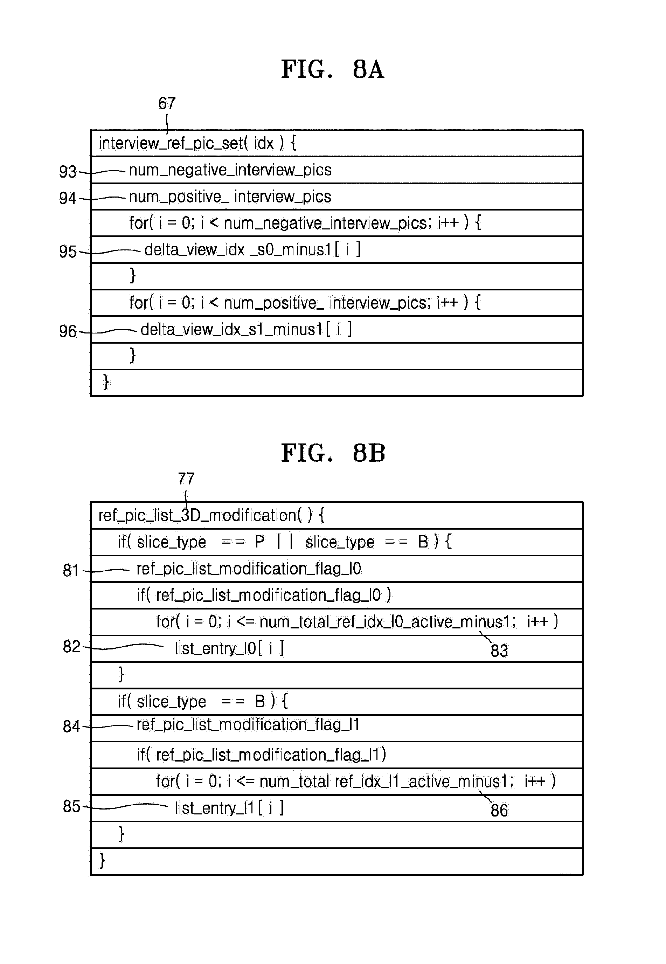

The sequence parameter set 65 according to an embodiment is linked with "interview_ref_pic_set(i)" 67 that is a parameter set of a reference picture set to define detailed parameters for each reference picture set. The parameter set of the reference picture set "interview_ref_pic_set(i)" 67 will be described in more detail with reference to FIG. 8A. FIG. 8A illustrates "interview_ref_pic_set(i)" 67 that is the parameter set of the reference picture set for inter-view prediction according to an embodiment.

The parameter set of the reference picture set "interview_ref_pic_set(i)" 67 according to an embodiment may include information "num_negative_interview_pics" 93 indicating a number of different view reconstructed images located in a direction (a minus (-) view direction) of VIDs smaller from a view of a current picture and information "num_positive_interview_pics" 94 indicating a number of different view reconstructed images located in a direction (a plus (+) view direction) of VIDs greater from the view of the current picture.

The parameter set of the reference picture set "interview_ref_pic_set(i)" 67 according to an embodiment may also include "delta_view_idx_s0_minus1[i]" 95 indicating a reduction of a VID of a corresponding view compared to a VID of a current view for each of reconstructed images located in the minus (-) view direction and "delta_view_idx_s1_minus1[i]" 96 indicating an increase of a VID of a corresponding view compared to the VID of the current view for each of reconstructed images located in the plus (+) view direction.

Referring back to the sequence parameter set 65 of FIG. 6A, the multi-view video prediction decoding apparatus 20 according to an embodiment may parse "num_interview_ref_pic_sets" 66 from the sequence parameter set 65 to read a number of reference picture sets that may be used in pictures that belong to the current sequence.

The multi-view video prediction decoding apparatus 20 according to an embodiment may parse "interview_ref_pic_set(i)" 67 for each reference picture set to read a number of the different view reconstructed images located in the minus (-) view direction from "num_negative_interview_pics" 93 and "num_positive_interview_pics" 94 that is a number of the different view reconstructed images located in the plus (+) view direction from.

The multi-view video prediction decoding apparatus 20 according to an embodiment may parse the parameter set of the reference picture set "interview_ref_pic_set(i)" 67 according to an embodiment to read a differential value between a VID of a corresponding view and the VID of the current view for each reconstructed image located in the minus (-) view direction from "delta_view_idx _s0_minus1[]" 95, thereby reading VIDs of the reconstructed images located in the minus (-) view direction.

Similarly, the multi-view video prediction decoding apparatus 20 according to an embodiment may parse the parameter set of the reference picture set "interview_ref_pic_set(i)" 67 according to an embodiment to read a differential value between a VID of a corresponding view and the VID of the current view for each reconstructed image located in the plus (+) view direction from "delta_view_idx_s1_minus1[i]" 96, thereby reading VIDs of the reconstructed images located in the plus (+) view direction.

FIG. 6B illustrates a syntax of a picture parameter set 60 according to an embodiment.

The multi-view video prediction encoding apparatus 10 according to an embodiment may generate the picture parameter set 60 including information regarding default settings commonly applied within a current picture. In particular, with regard to a reference list, information regarding a base number of reconstructed pictures that belong to a L0 list and an L1 list that are used by each prediction block for at least one selected from inter-prediction and inter-view prediction within a current picture may be included in the picture parameter set 60.

For example, "num_ref_idx_l0_default_active_minus1" 61 indicates a base number of same view valid reconstructed pictures having a prior reproduction order to that of the current picture in the L0 list. "num_interview_ref_idx_l0_default_active_minus1" 62 indicates a base number of valid reconstructed pictures having a same reproduction order as that of the current picture and VIDs smaller than that of a current view in the L0 list. "num_ref_idx_l1_default_active_minus1" 63 indicates a base number of same view valid reconstructed pictures having the reproduction order later than that of the current picture in the L1 list. "num_interview_ref_idx_l1_default_active_minus1" 64 indicates a base number of valid reconstructed pictures having the same reproduction order as that of the current picture and VIDs greater than that of the current view in the L1 list.

The multi-view video prediction decoding apparatus 20 according to an embodiment may extract the picture parameter set 60 from a received bitstream. The multi-view video prediction decoding apparatus 20 according to an embodiment may parse "num_ref_idx_l0_default_active_minus1" 61 from the picture parameter set 60 to read the base number of the same view valid reconstructed pictures having the prior reproduction order to that of the current picture in the L0 list. The multi-view video prediction decoding apparatus 20 according to an embodiment may parse "num_interview_ref_idx_l0_default_active_minus1" 62 to read the base number of the valid reconstructed pictures having the same reproduction order as that of the current picture and VIDs smaller than that of the current view in the L0 list. The multi-view video prediction decoding apparatus 20 according to an embodiment may parse "num_ref_idx_l1_default_active_minus1" 63 to read the base number of the same view valid reconstructed pictures having the reproduction order later than that of the current picture in the L1 list. The multi-view video prediction decoding apparatus 20 may parse "num_interview_ref_idx_l1_default_active_minus1" 64 to read the base number of the valid reconstructed pictures having the same reproduction order as that of the current picture and VIDs greater than that of the current view in the L1 list.

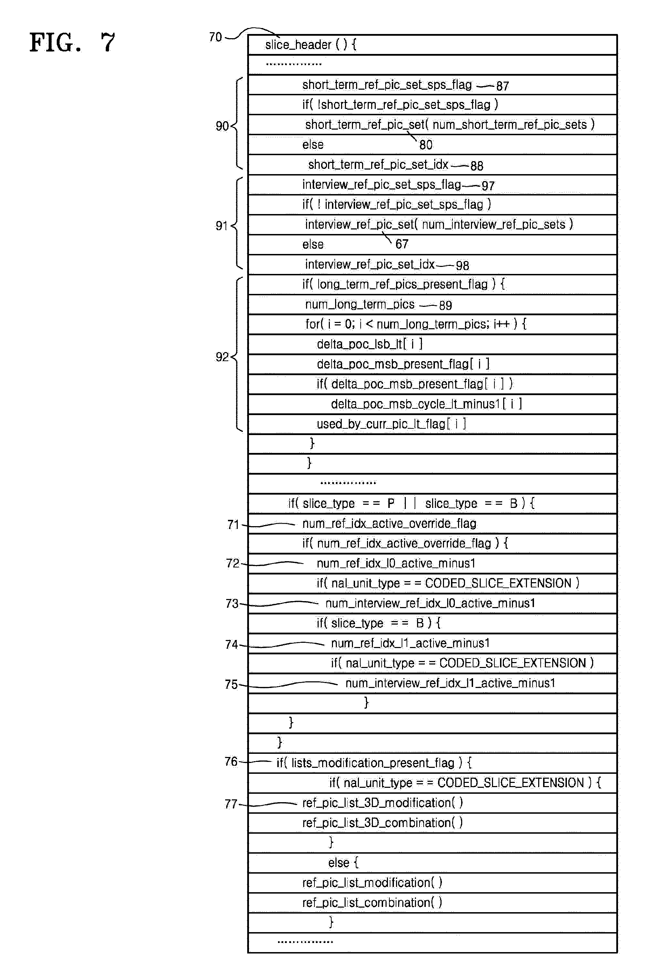

FIG. 7 illustrates a syntax of a slice header 70 according to an embodiment.

The multi-view video prediction encoding apparatus 10 according to an embodiment may generate the slice header 70 including information regarding settings commonly applied in a current slice.

The slice header 70 according to an embodiment may include parameters 90 of a short term reference picture set for inter-prediction, parameters 91 of a reference picture set for inter-view prediction, and parameters 92 of a long term reference picture set for inter-prediction.

The parameters 90 of the short term reference picture set for inter-prediction according to an embodiment may include information "short_term_ref_pic_set_sps_flag" 87 regarding whether to use a short term reference picture set determined in the sequence parameter set 65.

If the short term reference picture set determined in the sequence parameter set 65 is not used in the current slice, the parameters 90 may include a parameter set "short_term_ref_pic_set(num_short_term_ref_pic_sets)" 80 to define a short term reference picture set for the current slice.

Meanwhile, if the short term reference picture set determined in the sequence parameter set 65 is used in the current slice, the parameters 90 may include an index "short_term_ref_pic_set_idx" 88 of a short term reference picture set that is to be used in the current slice and is determined in the sequence parameter set 65.

The parameters 91 of the reference picture set for inter-view prediction may include information "interview_ref_pic_set_sps_flag" 97 indicating whether to use a reference picture set for inter-view prediction determined in the sequence parameter set 65.

If the reference picture set for inter-view prediction determined in the sequence parameter set 65 is not used in the current slice, the parameters 91 may include a parameter set "interview_ref_pic_set(num_interview_ref_pic_sets)" 80 to define a reference picture set for inter-view prediction for the current slice.

Meanwhile, if the reference picture set for inter-view prediction determined in the sequence parameter set 65 is used in the current slice, the parameters 91 may include an index "interview_ref_pic_set_idx" 98 of a reference picture set for inter-view prediction that is to be used in the current slice and is determined in the sequence parameter set 65.

The parameters 92 of the long term reference picture set for inter-prediction may include a number of long term reference pictures "num_long_term_pics" 89 and information relating to a POC of the long term reference pictures.

With regard to a reference list, information optionally modified in the current slice may be included in the slice header 70 instead of base settings of the current picture.

When the current slice is a P or B slice type in a forward prediction mode or a bi-directional prediction mode, the slice header 70 may include "num_ref_idx_active_override_flag" 71. "num_ref_idx_active_override_flag" 71 indicates whether to replace at least one selected from base numbers of reconstructed pictures of "num_ref_idx_l0_default_active_minus1" 61, "num_interview_ref_idx_l0_default_active_minus1" 62, "num_ref_idx_l1_default_active_minus1" 63, and "num_interview_ref_idx_l1_default_active_minus1 "64 that are determined in the current picture parameter set 60 with another value in the current slice.

If base numbers of reconstructed pictures may be replaced with other values in the current slice by using "num_ref_idx_active_override_flag" 71, "num_ref_idx_active_override_flag" 72 indicating a number of valid reconstructed pictures for inter-prediction in a L0 list may be included in the slice header 70. If encoding and decoding of 3D video is allowed with respect to a current nal unit, "num_interview_ref_idx_l0_active_minus1" 73 indicating a number of valid reconstructed pictures for inter-view prediction in the L0 list may be included in the slice header 70.

If base numbers of reconstructed pictures may be replaced with other values in the current slice by using "num_ref_idx_active_override_flag" 71, and the current slice is the B slice type, "num_ref_idx_l1_active_minus1" 74 indicating a number of valid reconstructed pictures for inter-prediction in a L1 list may be included in the slice header 70. If encoding and decoding of 3D video is allowed with respect to the current nal unit, "num_interview_ref_idx_l1_active_minus1" 75 indicating a number of valid reconstructed pictures for inter-view prediction in the L1 list may be included in the slice header 70.

The multi-view video prediction decoding apparatus 20 according to an embodiment may extract the slice header 70 from a received bitstream. When the current slice is the P or B slice type in the forward prediction mode or the bi-directional prediction mode, the multi-view video prediction decoding apparatus 20 may parse "num_ref_idx_active_override_flag" 71 from the slice header 70 to read whether to replace a base number of reconstructed pictures of a reference list set in a current picture with another value.

The multi-view video prediction decoding apparatus 20 according to an embodiment may parse the parameters 90 of the short term reference picture set of the slice header 70 according to an embodiment to read whether to use a short term reference picture set determined in the short term reference picture set determined in the sequence parameter set 65 from "short_term_ref_pic_set_sps_flag" 87.

If the short term reference picture set determined in the sequence parameter set 65 is not used in the current slice, parameters for defining the short term reference picture set for the current slice may be extracted from "short_term_ref_pic_set(num_short_term_ref_pic_sets)" 80.

Meanwhile, if the short term reference picture set determined in the sequence parameter set 65 is used in the current slice, an index of the short term reference picture set determined in the sequence parameter set 65 that is to be used in the current slice may be read from "short_term_ref_pic_set_idx" 88.

The multi-view video prediction decoding apparatus 20 according to an embodiment may parse the parameters 91 of the reference picture set for inter-view prediction of the slice header 70 according to an embodiment to read whether to use the reference picture set for inter-view prediction determined in the sequence parameter set 65 from "interview_ref_pic_set_sps_flag" 97.

If the short term reference picture set determined in the sequence parameter set 65 is not used in the current slice, a parameter set for defining the reference picture set for inter-view prediction for the current slice may be extracted from "short_term_ref_pic_set(num_short_term_ref_pic_sets)" 80.

Meanwhile, if the short term reference picture set determined in the sequence parameter set 65 is used in the current slice, an index of the reference picture set for inter-view prediction determined in the sequence parameter set 65 that is to be used in the current slice may be read from "interview_ref_pic_set_idx" 98.

The parameters 92 of the long term reference picture set according to an embodiment may read the number of long term reference pictures "num_long_term_pics" 89 and the information relating to the POC of the long term reference pictures.

If the base number of reconstructed pictures of the reference list set is replaced with another value, the multi-view video prediction decoding apparatus 20 may parse "num_ref_idx_active_override_flag" 72 from the slice header 70 to read the number of valid reconstructed pictures for inter-prediction in the L0 list. If encoding and decoding of 3D video is allowed with respect to the current nal unit, the multi-view video prediction decoding apparatus 20 may parse "num_interview_ref_idx_l0_active_minus1" 73 from the slice header 70 to read the number of valid reconstructed pictures for inter-view prediction in the L0 list.

If base numbers of reconstructed pictures may be replaced with other values in the current slice by using "num_ref_idx_active_override_flag" 71, and the current slice is the B slice type, the multi-view video prediction decoding apparatus 20 may parse "num_ref_idx_l1_active_minus1" 74 from the slice header 70 to read the number of valid reconstructed pictures for inter-prediction in the L1 list. If encoding and decoding of 3D video is allowed with respect to the current nal unit, the multi-view video prediction decoding apparatus 20 may parse "num_interview_ref_idx_l1_active_minus1" 75 from the slice header 70 to read the number of valid reconstructed pictures for inter-view prediction in the L1 list.

The multi-view video prediction encoding apparatus 10 and the multi-view video prediction decoding apparatus 20 may determine 76 whether to modify a reference order previously determined in the reference list in the current slice. If the reference order of the reference list may be modified in the current slice and encoding and decoding of 3D video is allowed with respect to the current nal unit, a reference list modification parameter set 77 may be called.

FIG. 8B illustrates a syntax of parameters for changing a reference list according to an embodiment.

When a current slice is a P or B slice type in a forward prediction mode or a bi-directional prediction mode, the reference list modification parameter set 77 according to an embodiment may include "ref_pic_list_modification_flag_l0" 81, information indicating whether to optionally modify a reference order of reconstructed pictures that belong to a L0 reference list.

When the reference order is optionally modified in the current slice, reference indices of the L0 list, "list_entry_l0" 82, for forward prediction or bi-directional prediction of the current slice may be optionally modified. In this regard, a maximum number 83 of reference indices that belong to the L0 list may be a sum of a base number 61 of at least one reconstructed picture having a preceding reproduction order to that of a current picture and a base number 62 of at least one reconstructed picture having a smaller VID than that of the current picture in the L1 list. Thus, new reference indices may match with reference indices of the L0 list, "list_entry_l0" 82, by as many as the maximum number 83 of reference indices that belong to the L0 list so that a reference order of reconstructed pictures corresponding to each reference index may be optionally modified in the current slice.

When the current slice is the B slice type in the bi-directional prediction mode, a reference list modification parameter set 84 according to an embodiment may include "ref_pic_list_modification_flag_l1" 84, information indicating whether to optionally modify a reference order of reconstructed pictures that belong to a L1 reference list.

When the reference order is optionally modified in the current slice, reference indices of the L1 list, "list_entry_l1" 85, for forward prediction or bi-directional prediction of the current slice may be optionally modified. In this regard, a maximum number 86 of reference indices that belong to the L1 list may be a sum of a base number 63 of at least one reconstructed picture having a preceding reproduction order to that of a current picture and a base number 64 of at least one reconstructed picture having a smaller VID than that of the current picture in the L1 list. Thus, new reference indices may match with reference indices of the L1 list, "list_entry_l1" 85, by as many as the maximum number 86 of reference indices that belong to the L1 list so that a reference order of reconstructed pictures corresponding to each reference index may be optionally modified in the current slice.

Therefore, the multi-view video prediction decoding apparatus 20 according to an embodiment may parse "ref_pic_list_modification_flag_l0" 81 or "ref_pic_list_modification_flag_l1" 84 from the reference list modification parameter set 77 to read whether the reference order is optionally modified in the L0 list or L1 list. If it is determined that the reference order of the L0 list is optionally modified, the reference order of the L0 list may be modified according to "list_entry_l0" 82 that are reference indices optionally modified in the current slice by as many as the maximum number 83 of reference indices that belong to the L0 list. Likewise, if it is determined that the reference order of the L1 list is optionally modified, the reference order of the L1 list may be modified according to "list_entry_l1" 85 that are reference indices optionally modified in the current slice by as many as the maximum number 86 of reference indices that belong to the L1 list.

The multi-view video prediction encoding apparatus 10 and the multi-view video prediction decoding apparatus 20 according to another embodiment may perform inter-prediction or inter-view prediction by using a new reference list in combination of existing reference lists.

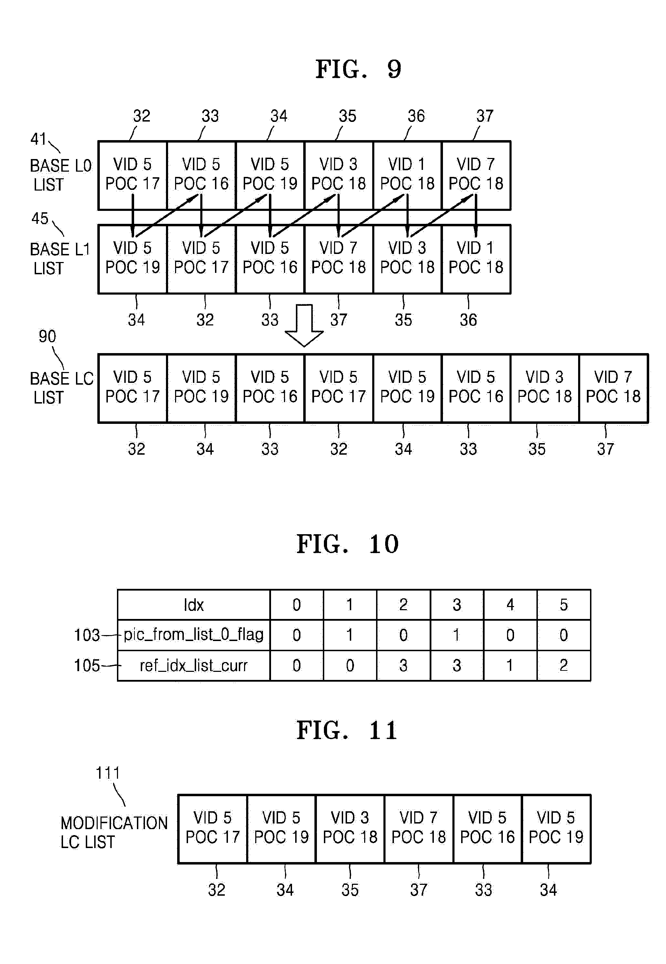

FIG. 9 illustrates a combined reference list according to an embodiment.

That is, a new base LC list 90 may be generated by combining reconstructed pictures that belong to the base L0 list 41 and reconstructed pictures that belong to the base L1 reference list 45.

A reference order of reconstructed pictures that belong to the base LC list 90 according to another embodiment may be determined in an order of alternately referring to the reconstructed pictures that belong to the base L0 list 41 and the base L1 reference list 45 in a zigzag order.

For example, a base LC list 90 may be determined in a reference order of the VID 5/POC 19 picture 34 of the base L1 list 45, the VID 5/POC 16 picture 33 of the base L0 list 41, the VID 5/POC 17 picture 32 of the base L1 list 45, the VID 5/POC 19 picture 34 of the base L1 list 41, the VID 5/POC 16 picture 33 of the base L1 list 45, the VID 3/POC 18 picture 35 of the base L0 list 41, the VID 7/POC 18 picture 37 of the base L1 list 45, starting from the VID 5/POC 17 picture 32 that is a first reconstructed picture of the base L0 list 41.

FIGS. 10 and 11 are diagrams for explaining a process of changing the combined reference list according to an embodiment.

The multi-view video prediction encoding apparatus 10 and the multi-view video prediction decoding apparatus 20 according to another embodiment may optionally modify the combined reference list, i.e., a reference order of reconstructed pictures that belong to the base LC list 90, in a current slice. Thus, the base LC list 90 is not used for a current slice. Instead, the multi-view video prediction encoding apparatus 10 and the multi-view video prediction decoding apparatus 20 may generate a modification LC list 11 by using reconstructed pictures of the base L0 list 40 and the base L1 list 41 by referring to a reference index table of FIG. 10.

In the reference index table 50 according to an embodiment, a reference index 101 Idx is a number of a reference order of reconstructed pictures in a modification LC list 111. "pic_from_list_0_flag" 103 may indicate whether each of reconstructed pictures that belong to the modification LC list 111 belongs to the base L0 list 41 or the base L1 list 45. "ref_idx_list_curr" 105 may indicate a reference index of a corresponding reconstructed picture in the base L0 list 41 or the base L1 list 45.

Therefore, the reconstructed pictures that belong to the modification LC list 111 may be determined as the VID 5/POC 17 picture 32 of the base L0 list 41, the VID 5/POC 19 picture 34 of the base L1 list 45, the VID 3/POC 18 picture 35 of the base L0 list 41, the VID 7/POC 18 picture 37 of the base L1 list 45, the VID 5/POC 16 picture 33 of the base L0 list 41, and the VID 5/POC 19 picture 34 of the base L0 list 41 in a reference order according to pic_from_list_0_flag" 103 or "ref_idx_list_curr" 105.

Therefore, when the multi-view video prediction encoding apparatus 10 and the multi-view video prediction decoding apparatus 20 according to another embodiment uses LC lists, if encoding and decoding of 3D video is allowed with respect to a current nal unit, a reference list combination parameter set "ref_pic_list_3D_combination" and the reference list modification parameter set 77 "ref_pic_list_3D_modification" as well may be recorded on a slice header for a current slice. The reference list combination parameter set "ref_pic_list_3D_combination" according to another embodiment may include parameters for determining the combined reference list.

The multi-view video prediction decoding apparatus 20 according to another embodiment may parse the reference list combination parameter set "ref_pic_list_3D_combination" from the slice header to read whether to combine L0 and L1 lists and use an LC list from "ref_pic_list_3D_combination". If it is determined that the LC list is used, a maximum number of reference indices that belong to the LC list may be read. Reconstructed pictures of the L0 and L1 lists basically belong to the LC list in a zigzag order, and thus, if the maximum number of reference indices that belong to the LC list is determined, reconstructed pictures that belong to the LC list and a reference order thereof may be determined.

The multi-view video prediction decoding apparatus 20 according to another embodiment may read whether a reference order of the reconstructed pictures that belong to the LC list is modified from the slice header. If the reference order of the reconstructed pictures that belong to the LC list is modified, a current reference order may be newly set in a modification LC list in each reference index by as many as the maximum number of reference indices that belong to the LC list from the slice header.

FIG. 12 is a block diagram of a multi-view video encoding apparatus 121 including the multi-view video prediction encoding apparatus 10 according to an embodiment.

The multi-view video encoding apparatus 121 according to an embodiment includes a DPB 42, the multi-view video prediction encoding apparatus 10, a conversion quantizer 46, and an entropy encoder 48.

The DPB 42 according to an embodiment stores previously reconstructed pictures of the same view as that of a current picture and previously reconstructed pictures of the same POC number as that of the current picture and a different view from that of the current picture. Reference pictures for inter-prediction and inter-view prediction may be determined among the reconstructed pictures stored in the DPB 42. The operations of the multi-view video prediction encoding apparatus 10 according to an embodiment described with reference to FIGS. 1A, 1B, and 3 through 8 above may be performed by the multi-view video encoding apparatus 121.

The multi-view video prediction encoding apparatus 10 according to an embodiment may determine a L0 list including at least one reconstructed picture to which a POC preceding the current picture is assigned and at least one reconstructed picture to which the same POC as that of the current picture is assigned and having a VID smaller than that of the current picture from among same view images of the current picture that is a P slice type or a B slice type. The multi-view video prediction encoding apparatus 10 may determine a L1 list including at least one reconstructed picture to which a POC following the current picture is assigned and at least one reconstructed picture to which the same POC as that of the current picture is assigned and having a VID greater than that of the current picture from among the same view images of the current picture that is the B slice type.

Therefore, the multi-view video prediction encoding apparatus 10 may determine the L0 list and the L1 list for inter-prediction and inter-view prediction of multi-view video by using the reconstructed pictures stored in the DPB 42. According to circumstances, a reference order of the reconstructed pictures defined in the L0 list and the L1 list may be optionally modified.

The multi-view video prediction encoding apparatus 10 may determine a reference picture of the current picture by referring to the L0 list or referring to the L0 list and the L1 list and determine a reference block of the reference picture to perform at least one selected from inter-prediction and inter-view prediction.

The multi-view video prediction encoding apparatus 10 according to an embodiment may configure a reference list by using the reconstructed pictures stored in the DPB 42, perform inter-prediction and inter-view prediction on a current image by using the reference picture selected from the reference list, and generate residue data.

The conversion quantizer 46 according to an embodiment may perform conversion and quantization on the residue date generated by the multi-view video prediction encoding apparatus 10, and generate a quantized conversion coefficient. The entropy encoder 48 according to an embodiment may perform entropy encoding on the quantized conversion coefficient and symbols including a motion vector and a reference index.

The multi-view video encoding apparatus 121 according to an embodiment may perform inter prediction on images of video for each block, generate the quantized conversion coefficient for each block by performing conversion and quantization on the residue date for each block generated by inter-prediction prediction or inter-view prediction, and output a bitstream by performing entropy encoding on the quantized conversion coefficient, thereby encoding the video.

The multi-view video encoding apparatus 121 may perform motion compensation or disparity compensation of the current picture by referring to the previous reconstructed pictures stored in the DPB 42 and generate a reconstructed picture of the current picture. The reconstructed picture of the current picture may be used as a reference picture for inter-prediction or inter-view prediction of different images. Thus, the multi-view video encoding apparatus 121 may also perform the operation of the multi-view video prediction decoding apparatus 20 that performs motion compensation or disparity compensation for inter-prediction or inter-view prediction.

The multi-view video encoding apparatus 121 according to an embodiment may interact with an internal video encoding processor embedded therein or an external video encoding processor in order to output a video encoding result, thereby performing a video encoding operation including intra prediction, inter prediction, conversion, and quantization. When the multi-view video encoding apparatus 121 according to an embodiment includes the internal video encoding processor and the multi-view video encoding apparatus 121 or a central processing unit (CPU) or a graphic processing unit (GPU) that controls the multi-view video encoding apparatus 121 includes a video encoding processing module, the video encoding operation may be implemented.

FIG. 13 is a block diagram of a multi-view video decoding apparatus 131 including the multi-view video prediction decoding apparatus 20 according to an embodiment.

The multi-view video decoding apparatus 131 according to an embodiment may include a receiver 52, an inverse quantization inverse converter 54, a DPB 56, the multi-view video prediction decoding apparatus 20, and an in-loop filter 59.

The receiver 52 according to an embodiment may receive a bitstream, perform entropy decoding on the received bitstream, and parse encoded image data.

The inverse quantization inverse converter 54 may perform inverse quantization and inverse conversion on the encoded image data parsed by the receiver 52 and reconstruct residue data.

The receiver 52 according to an embodiment may parse a motion vector and/or a disparity vector from the bitstream. The DPB 56 according to an embodiment may store previously reconstructed pictures that may be used as reference pictures for motion compensation or disparity compensation of another image. The multi-view video prediction decoding apparatus 20 according to an embodiment may configure a reference list by using the reconstructed pictures stored in the DPB 56 and perform motion compensation that uses the motion vector and residue date or disparity compensation that uses the disparity vector and the residue data by using the reference list.

The multi-view video prediction decoding apparatus 20 according to an embodiment may perform the same operation as that of the multi-view video prediction decoding apparatus 20 described with reference to FIGS. 2A and 2B above.

The multi-view video prediction decoding apparatus 20 according to an embodiment may determine a L0 list including at least one reconstructed picture to which a POC preceding a current picture is assigned and at least one reconstructed picture to which the same POC as that of the current picture is assigned and having a VID smaller than that of the current picture from among same view images, for the current picture that is a P slice type or a B slice type.

The multi-view video prediction decoding apparatus 20 may determine a L1 list including at least one reconstructed picture to which a POC following the current picture is assigned and at least one reconstructed picture to which the same POC as that of the current picture is assigned and having a VID greater than that of the current picture from among the same view images of the current picture that is the B slice type.

Therefore, the multi-view video prediction decoding apparatus 20 may determine the L0 list and the L1 list for inter-prediction and inter-view prediction of multi-view video. According to circumstances, a reference order of the reconstructed pictures defined in the L0 list and the L1 list may be optionally modified.

The multi-view video prediction decoding apparatus 20 according to an embodiment may determine a reference picture of the current picture by referring to the L0 list or referring to the L0 list and the L1 list and determine a reference block of the reference picture to perform at least one selected from inter-prediction and inter-view prediction.

The multi-view video decoding apparatus 131 according to an embodiment may perform decoding on a block of each image of video according to views and reconstruct video. The receiver 52 may parse encoded data for each block and the motion vector or disparity information. The inverse quantization inverse converter 54 may perform inverse quantization and inverse conversion on the encoded data for each block and reconstruct the residue data for each block. The multi-view video prediction decoding apparatus 20 may determine a reference block indicated by the motion vector or the disparity vector for each block among the reference pictures and synthesize the reference block and the residue data, thereby regenerating reconstructed blocks.

The in-loop filter 59 may perform de-blocking filtering and sample adaptive offset (SAO) filtering on the reconstructed pictures that are output by the multi-view video prediction decoding apparatus 20. The in-loop filter 59 may perform de-blocking filtering and SAO filtering for each block and output a final reconstructed picture. An output image of the in-loop filter 59 may be stored in the DPB 56 and used as a reference picture for motion compensation of a next image.

The multi-view video decoding apparatus 131 according to an embodiment may interact with an internal video decoding processor embedded therein or an external video decoding processor in order to output a video decoding result, thereby performing a video decoding operation including inverse quantization, inverse conversion, intra prediction, and motion compensation. When the multi-view video decoding apparatus 131 according to an embodiment includes the internal video decoding processor and the multi-view video decoding apparatus 131 or a GPU that controls the multi-view video decoding apparatus 131 includes a video decoding processing module, the video decoding operation may be implemented.

The multi-view video prediction encoding apparatus 10, the multi-view video prediction decoding apparatus 20, the multi-view video encoding apparatus 121, and the multi-view video decoding apparatus 131 described with reference to FIGS. 1A through 13 above may configure reference lists for inter-prediction and inter-view prediction of multi-view videos according to a prediction encoding apparatus for multi-view video of the present invention. Both a reference image for inter-prediction and a reference image for inter-view prediction may be included in one reference list.

Information regarding a reference picture set that explicitly reflects a state of a decoding picture set may be transmitted and received through a sequence parameter set and a slice header. A reference list is determined according to the reference picture set, and thus a reference image may be determined and used in inter-prediction/motion compensation and inter-view prediction/disparity compensation in the reference list determined in consideration of the state of the decoding picture set.

A prediction decoding apparatus for multi-view video according to the present invention may generate at least one reference list including both a reference image for inter-prediction and a reference image for inter-view prediction. The prediction decoding apparatus for multi-view video may determine a reference image of a current image by referring to one reference list, determine a reference block among the reference image, and perform at least one selected from motion compensation and disparity compensation.

The multi-view video prediction encoding apparatus 10, the multi-view video prediction decoding apparatus 20, the multi-view video encoding apparatus 121, and the multi-view video decoding apparatus 131 according to an embodiment may spilt blocks of video data into coding units having a tree structure, and prediction units may be used for inter prediction of coding units as described above. Hereinafter, a video encoding method, a video encoding apparatus, a video decoding method, and a video decoding apparatus based on coding units having a tree structure and transformation units will be described with reference to FIGS. 6 through 18.

The multi-view video prediction encoding apparatus 10 according to an embodiment, the multi-view video prediction decoding apparatus 20 according to an embodiment, the multi-view video encoding apparatus 121, and the multi-view video decoding apparatus 131 may spilt blocks of video data into coding units having a tree structure, and coding units, prediction units, and transformation units may be used for inter-view prediction or inter-prediction of coding units as described above. Hereinafter, a video encoding method, a video encoding apparatus, a video decoding method, and a video decoding apparatus based on coding units having a tree structure and transformation units will be described with reference to FIGS. 14 through 26.

In principle, during encoding and decoding processes for a multi-view video, encoding and decoding processes for base view images and encoding and decoding processes for additional view images are separately performed. In other words, when inter-view prediction is performed on a multi-view video, encoding and decoding results of single-view videos may be mutually referred to, but separate encoding and decoding processes are performed according to single-view videos.

Accordingly, since video encoding and decoding processes based on coding units having a tree structure as described below with reference to FIGS. 14 through 26 are video encoding and decoding processes for processing a single-view video, only inter-prediction and motion compensation are performed. However, as described above with reference to FIGS. 1A through 13, in order to encode and decode a multi-view video, inter-view prediction and inter-view disparity compensation are performed on base view images and additional view images.

Therefore, in order for the multi-view video prediction encoding apparatus 10 and the multi-view video encoding apparatus 121 according to an embodiment to prediction encode a multi-view video based on coding units having a tree structure, the multi-view video prediction encoding apparatus 10 and the multi-view video encoding apparatus 121 may include as many video encoding apparatuses 100 of FIG. 14 as the number of views so as to perform video encoding according to each single-view video, thereby controlling each video encoding apparatus 100 to encode an assigned single-view video. Also, the video encoding apparatus 100 for encoding single-view video may perform inter-view prediction by using an encoding result of individual single view of each video encoding apparatus 100 for encoding different view video. Accordingly, the multi-view video prediction encoding apparatus 10 and the multi-view video encoding apparatus 121 each may generate a bitstream which includes encoding results according to views, according to views.

Similarly, in order for the multi-view video prediction decoding apparatus 20 and the multi-view video decoding apparatus 131 according to an embodiment to prediction decode a multi-view video based on coding units having a tree structure, the multi-view video prediction decoding apparatus 20 and the multi-view video decoding apparatus 131 may include as many video encoding apparatuses 200 of FIG. 15 as the number of views of the multi-view video so as to perform video decoding according to views with respect to a received base view image stream and a received additional view image stream, thereby controlling each video decoding apparatus 200 to decode an assigned single-view video. Also, the video decoding apparatus 200 for decoding single-view video may perform inter-view prediction by using a decoding result of individual single view of each video decoding apparatus 200 for decoding different view video. Accordingly, the multi-view video prediction decoding apparatus 20 and the multi-view video decoding apparatus 131 may each generate a bitstream which includes decoding results according to views, according to views.

FIG. 14 is a block diagram of a video encoding apparatus 100 based on coding units according to a tree structure, according to an embodiment of the present invention.

The video encoding apparatus 100 involving video prediction based on coding units according to a tree structure according to an embodiment includes a maximum coding unit splitter 110, a coding unit determiner 120, and an output unit 130. Hereinafter, for convenience of description, video encoding apparatus 100 involving video prediction based on coding units according to a tree structure according to an embodiment is referred to as 'the video encoding apparatus 100'.

The maximum coding unit splitter 110 may split a current picture based on a maximum coding unit that is a coding unit having a maximum size for a current picture of an image. If the current picture is larger than the maximum coding unit, image data of the current picture may be split into the at least one maximum coding unit. The maximum coding unit according to an embodiment of the present invention may be a data unit having a size of 32x32, 64x64, 128x128, 256x256, etc., wherein a shape of the data unit is a square having a width and length in squares of 2. The image data may be output to the coding unit determiner 120 according to the at least one maximum coding unit.

A coding unit according to an embodiment of the present invention may be characterized by a maximum size and a depth. The depth denotes the number of times the coding unit is spatially split from the maximum coding unit, and as the depth deepens, deeper coding units according to depths may be split from the maximum coding unit to a minimum coding unit. A depth of the maximum coding unit is an uppermost depth and a depth of the minimum coding unit is a lowermost depth. Since a size of a coding unit corresponding to each depth decreases as the depth of the maximum coding unit deepens, a coding unit corresponding to an upper depth may include a plurality of coding units corresponding to lower depths.

As described above, the image data of the current picture is split into the maximum coding units according to a maximum size of the coding unit, and each of the maximum coding units may include deeper coding units that are split according to depths. Since the maximum coding unit according to an embodiment of the present invention is split according to depths, the image data of a spatial domain included in the maximum coding unit may be hierarchically classified according to depths.

A maximum depth and a maximum size of a coding unit, which limit the total number of times a height and a width of the maximum coding unit are hierarchically split, may be predetermined.

The coding unit determiner 120 encodes at least one split region obtained by splitting a region of the maximum coding unit according to depths, and determines a depth to output a finally encoded image data according to the at least one split region. In other words, the coding unit determiner 120 determines a coded depth by encoding the image data in the deeper coding units according to depths, according to the maximum coding unit of the current picture, and selecting a depth having the least encoding error. The determined coded depth and the encoded image data according to the determined coded depth are output to the output unit 130.

The image data in the maximum coding unit is encoded based on the deeper coding units corresponding to at least one depth equal to or below the maximum depth, and results of encoding the image data are compared based on each of the deeper coding units. A depth having the least encoding error may be selected after comparing encoding errors of the deeper coding units. At least one coded depth may be selected for each maximum coding unit.

The size of the maximum coding unit is split as a coding unit is hierarchically split according to depths, and as the number of coding units increases. Also, even if coding units correspond to the same depth in one maximum coding unit, it is determined whether to split each of the coding units corresponding to the same depth to a lower depth by measuring an encoding error of the image data of the each coding unit, separately. Accordingly, even when image data is included in one maximum coding unit, the encoding errors may differ according to regions in the one maximum coding unit, and thus the coded depths may differ according to regions in the image data. Thus, one or more coded depths may be determined in one maximum coding unit, and the image data of the maximum coding unit may be divided according to coding units of at least one coded depth.

Accordingly, the coding unit determiner 120 according to an embodiment may determine coding units having a tree structure included in the maximum coding unit. The 'coding units having a tree structure' according to an embodiment of the present invention include coding units corresponding to a depth determined to be the coded depth, from among all deeper coding units included in the maximum coding unit. A coding unit of a coded depth may be hierarchically determined according to depths in the same region of the maximum coding unit, and may be independently determined in different regions. Similarly, a coded depth in a current region may be independently determined from a coded depth in another region.

A maximum depth according to an embodiment of the present invention is an index related to the number of splitting times from a maximum coding unit to a minimum coding unit. A first maximum depth according to an embodiment of the present invention may denote the total number of splitting times from the maximum coding unit to the minimum coding unit. A second maximum depth according to an embodiment of the present invention may denote the total number of depth levels from the maximum coding unit to the minimum coding unit. For example, when a depth of the maximum coding unit is 0, a depth of a coding unit, in which the maximum coding unit is split once, may be set to 1, and a depth of a coding unit, in which the maximum coding unit is split twice, may be set to 2. Here, if the minimum coding unit is a coding unit in which the maximum coding unit is split four times, 5 depth levels of depths 0, 1, 2, 3, and 4 exist, and thus the first maximum depth may be set to 4, and the second maximum depth may be set to 5.

Prediction encoding and transformation may be performed according to the maximum coding unit. The prediction encoding and the transformation are also performed based on the deeper coding units according to a depth equal to or depths less than the maximum depth, according to the maximum coding unit.

Since the number of deeper coding units increases whenever the maximum coding unit is split according to depths, encoding, including the prediction encoding and the transformation, is performed on all of the deeper coding units generated as the depth deepens. For convenience of description, the prediction encoding and the transformation will now be described based on a coding unit of a current depth, in a maximum coding unit.

The video encoding apparatus 100 according to an embodiment may variously select a size or shape of a data unit for encoding the image data. In order to encode the image data, operations, such as prediction encoding, transformation, and entropy encoding, are performed, and at this time, the same data unit may be used for all operations or different data units may be used for each operation.

For example, the video encoding apparatus 100 may select not only a coding unit for encoding the image data, but also a data unit different from the coding unit so as to perform the prediction encoding on the image data in the coding unit.

In order to perform prediction encoding in the maximum coding unit, the prediction encoding may be performed based on a coding unit corresponding to a coded depth, i.e., based on a coding unit that is no longer split to coding units corresponding to a lower depth. Hereinafter, the coding unit that is no longer split and becomes a basis unit for prediction encoding will now be referred to as a 'prediction unit'. A partition obtained by splitting the prediction unit may include a prediction unit or a data unit obtained by splitting at least one selected from a height and a width of the prediction unit. A partition is a data unit where a prediction unit of a coding unit is split, and a prediction unit may be a partition having the same size as a coding unit.

For example, when a coding unit of 2Nx2N (where N is a positive integer) is no longer split and becomes a prediction unit of 2Nx2N, and a size of a partition may be 2Nx2N, 2NxN, Nx2N, or NxN. Examples of a partition type include symmetrical partitions that are obtained by symmetrically splitting a height or width of the prediction unit, partitions obtained by asymmetrically splitting the height or width of the prediction unit, such as 1:n or n:1, partitions that are obtained by geometrically splitting the prediction unit, and partitions having arbitrary shapes.

A prediction mode of the prediction unit may be at least one selected from an intra mode, a inter mode, and a skip mode. For example, the intra mode or the inter mode may be performed on the partition of 2Nx2N, 2NxN, Nx2N, or NxN. Also, the skip mode may be performed only on the partition of 2Nx2N. The encoding is independently performed on one prediction unit in a coding unit, thereby selecting a prediction mode having a least encoding error.

The video encoding apparatus 100 according to an embodiment may also perform the transformation on the image data in a coding unit based not only on the coding unit for encoding the image data, but also based on a data unit that is different from the coding unit. In order to perform the transformation in the coding unit, the transformation may be performed based on a data unit having a size smaller than or equal to the coding unit. For example, the data unit for the transformation may include a data unit for an intra mode and a data unit for an inter mode.

The transformation unit in the coding unit may be recursively split into smaller sized regions in a manner similar to that in which the coding unit is split according to the tree structure according to an embodiment. Thus, residual data in the coding unit may be divided according to the transformation unit having the tree structure according to transformation depths.

A transformation depth indicating the number of splitting times to reach the transformation unit by splitting the height and width of the coding unit may also be set in the transformation unit according to an embodiment. For example, in a current coding unit of 2Nx2N, a transformation depth may be 0 when the size of a transformation unit is 2Nx2N, may be 1 when the size of the transformation unit is NxN, and may be 2 when the size of the transformation unit is N/2xN/2. In other words, the transformation unit having the tree structure may be set according to the transformation depths.

Encoding information according to coding units corresponding to a coded depth requires not only information about the coded depth, but also about information related to prediction encoding and transformation. Accordingly, the coding unit determiner 120 not only determines a coded depth having a least encoding error, but also determines a partition type in a prediction unit, a prediction mode according to prediction units, and a size of a transformation unit for transformation.

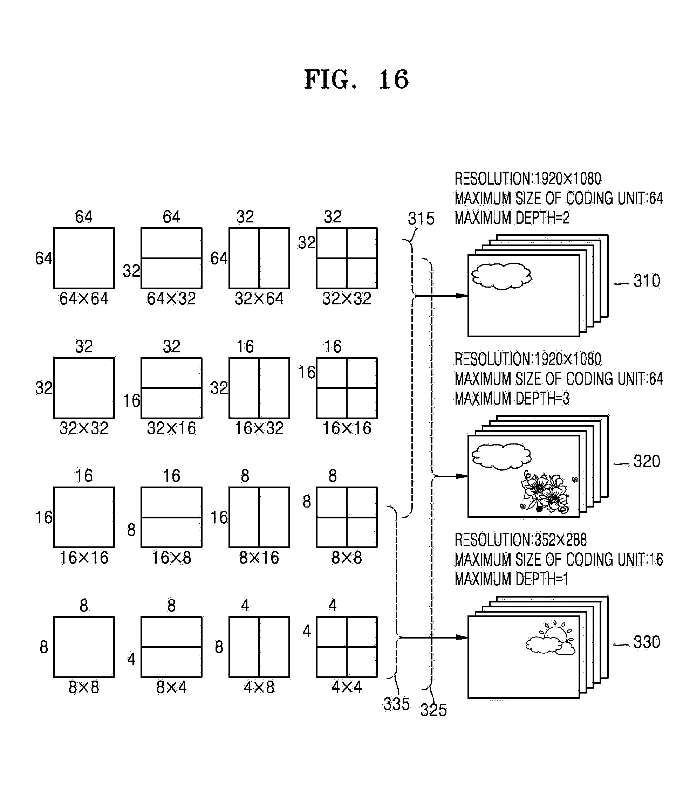

Coding units according to a tree structure in a maximum coding unit and methods of determining a prediction unit/partition, and a transformation unit, according to embodiments of the present invention, will be described in detail later with reference to FIGS. 16 through 26.

The coding unit determiner 120 may measure an encoding error of deeper coding units according to depths by using Rate-Distortion Optimization based on Lagrangian multipliers.

The output unit 130 outputs the image data of the maximum coding unit, which is encoded based on the at least one coded depth determined by the coding unit determiner 120, and information about the encoding mode according to the coded depth, in bitstreams.

The encoded image data may be obtained by encoding residual data of an image.

The information about the encoding mode according to coded depth may include information about the coded depth, about the partition type in the prediction unit, the prediction mode, and the size of the transformation unit.

The information about the coded depth may be defined by using split information according to depths, which indicates whether encoding is performed on coding units of a lower depth instead of a current depth. If the current depth of the current coding unit is the coded depth, image data in the current coding unit is encoded and output, and thus the split information may be defined not to split the current coding unit to a lower depth. Alternatively, if the current depth of the current coding unit is not the coded depth, the encoding is performed on the coding unit of the lower depth, and thus the split information may be defined to split the current coding unit to obtain the coding units of the lower depth.

If the current depth is not the coded depth, encoding is performed on the coding unit that is split into the coding unit of the lower depth. Since at least one coding unit of the lower depth exists in one coding unit of the current depth, the encoding is repeatedly performed on each coding unit of the lower depth, and thus the encoding may be recursively performed for the coding units having the same depth.

Since the coding units having a tree structure are determined for one maximum coding unit, and information about at least one encoding mode is determined for a coding unit of a coded depth, information about at least one encoding mode may be determined for one maximum coding unit. Also, a coded depth of the image data of the maximum coding unit may be different according to locations since the image data is hierarchically split according to depths, and thus information about the coded depth and the encoding mode may be set for the image data.

Accordingly, the output unit 130 according to an embodiment may assign encoding information about a corresponding coded depth and an encoding mode to at least one selected from the coding unit, the prediction unit, and a minimum unit included in the maximum coding unit.

The minimum unit according to an embodiment of the present invention is a square data unit obtained by splitting the minimum coding unit constituting the lowermost depth by 4. Alternatively, the minimum unit according to an embodiment may be a maximum square data unit that may be included in all of the coding units, prediction units, partition units, and transformation units included in the maximum coding unit.

For example, the encoding information output by the output unit 130 may be classified into encoding information according to deeper coding units, and encoding information according to prediction units. The encoding information according to the deeper coding units may include the information about the prediction mode and about the size of the partitions. The encoding information according to the prediction units may include information about an estimated direction of an inter mode, about a reference image index of the inter mode, about a motion vector, about a chroma component of an intra mode, and about an interpolation method of the intra mode.

Information about a maximum size of the coding unit defined according to pictures, slices, or GOPs, and information about a maximum depth may be inserted into a header of a bitstream, a sequence parameter set, or a picture parameter set.

Information about a maximum size of the transformation unit permitted with respect to a current video, and information about a minimum size of the transformation unit may also be output through a header of a bitstream, a sequence parameter set, or a picture parameter set. The output unit 130 may encode and output reference information related to prediction, prediction information, and slice type information.

In the video encoding apparatus 100, the deeper coding unit may be a coding unit obtained by dividing a height or width of a coding unit of an upper depth, which is one layer above, by two. In other words, when the size of the coding unit of the current depth is 2Nx2N, the size of the coding unit of the lower depth is NxN. Also, the coding unit with the current depth having a size of 2Nx2N may include a maximum of 4 of the coding units with the lower depth.

Accordingly, the video encoding apparatus 100 may form the coding units having the tree structure by determining coding units having an optimum shape and an optimum size for each maximum coding unit, based on the size of the maximum coding unit and the maximum depth determined considering characteristics of the current picture. Also, since encoding may be performed on each maximum coding unit by using any one of various prediction modes and transformations, an optimum encoding mode may be determined considering characteristics of the coding unit of various image sizes.

Thus, if an image having a high resolution or a large data amount is encoded in a conventional macroblock, the number of macroblocks per picture excessively increases. Accordingly, the number of pieces of compressed information generated for each macroblock increases, and thus it is difficult to transmit the compressed information and data compression efficiency decreases. However, by using the video encoding apparatus 100, image compression efficiency may be increased since a coding unit is adjusted while considering characteristics of an image while increasing a maximum size of a coding unit while considering a size of the image.

The multi-view video encoding apparatus 10 described above with reference to FIG. 1A may include as many video encoding apparatuses 100 as the number of views, in order to encode single-view images according to views of a multi-view video.

When the video encoding apparatus 100 encodes single view images, the coding unit determiner 120 may determine, for each maximum coding unit, a prediction unit for inter-prediction according to coding units having a tree structure, and perform inter-prediction according to prediction units.

In particular, the coding unit determiner 120 may perform inter-prediction that refers to a same view reconstructed picture and inter-view prediction that refers to a different view reconstructed picture. The coding unit determiner 120 according to an embodiment may determine a L0 list including at least one reconstructed picture to which a POC preceding the current picture is assigned and at least one reconstructed picture to which the same POC as that of the current picture is assigned and having a VID smaller than that of the current picture from among same view images of the current picture that is a P slice type or a B slice type. The coding unit determiner 120 may determine a L1 list including at least one reconstructed picture to which a POC following the current picture is assigned and at least one reconstructed picture to which the same POC as that of the current picture is assigned and having a VID greater than that of the current picture from among the same view images of the current picture that is the B slice type.

Therefore, the coding unit determiner 120 may determine the L0 list and the L1 list for inter-prediction and inter-view prediction of multi-view video by using the reconstructed pictures stored in a DPB. According to circumstances, a reference order of the reconstructed pictures defined in the L0 list and the L1 list may be optionally modified in a predetermined slice.

The coding unit determiner 120 according to an embodiment may determine a reference picture of the current picture by referring to the L0 list or referring to the L0 list and the L1 list and determine a reference block of the reference picture to perform at least one selected from inter-prediction and inter-view prediction.

FIG. 15 is a block diagram of a video decoding apparatus 200 based on coding units having a tree structure, according to an embodiment of the present invention.

The video decoding apparatus 200 that involves video prediction based on coding units having a tree structure according to an embodiment includes a receiver 210, an image data and encoding information extractor 220, and an image data decoder 230. Hereinafter, for convenience of description, the video decoding apparatus 200 involving video prediction based on coding units according to a tree structure according to an embodiment is referred to as 'the video decoding apparatus 200'.

Definitions of various terms, such as a coding unit, a depth, a prediction unit, a transformation unit, and information about various encoding modes, for decoding operations of the video decoding apparatus 200 are identical to those described with reference to FIG. 14 and the video encoding apparatus 100.

The receiver 210 receives and parses a bitstream of an encoded video. The image data and encoding information extractor 220 extracts encoded image data for each coding unit from the parsed bitstream, wherein the coding units have a tree structure according to each maximum coding unit, and outputs the extracted image data to the image data decoder 230. The image data and encoding information extractor 220 may extract information about a maximum size of a coding unit of a current picture, from a header about the current picture, a sequence parameter set, or a picture parameter set.

Also, the image data and encoding information extractor 220 extracts information about a coded depth and an encoding mode for the coding units having a tree structure according to each maximum coding unit, from the parsed bitstream. The extracted information about the coded depth and the encoding mode is output to the image data decoder 230. In other words, the image data in a bit stream is split into the maximum coding unit so that the image data decoder 230 decodes the image data for each maximum coding unit.

The information about the coded depth and the encoding mode according to the maximum coding unit may be set for information about at least one coding unit corresponding to the coded depth, and information about an encoding mode may include information about a partition type of a corresponding coding unit corresponding to the coded depth, about a prediction mode, and a size of a transformation unit. Also, splitting information according to depths may be extracted as the information about the coded depth.

The information about the coded depth and the encoding mode according to each maximum coding unit extracted by the image data and encoding information extractor 220 is information about a coded depth and an encoding mode determined to generate a minimum encoding error when an encoder, such as the video encoding apparatus 100, repeatedly performs encoding for each deeper coding unit according to depths according to each maximum coding unit. Accordingly, the video decoding apparatus 200 may restore an image by decoding the image data according to a coded depth and an encoding mode that generates the minimum encoding error.

Since encoding information about the coded depth and the encoding mode according to an embodiment may be assigned to a predetermined data unit from among a corresponding coding unit, a prediction unit, and a minimum unit, the image data and encoding information extractor 220 may extract the information about the coded depth and the encoding mode according to the predetermined data units. If information about a coded depth and encoding mode of a corresponding maximum coding unit is recorded according to predetermined data units, the predetermined data units to which the same information about the coded depth and the encoding mode is assigned may be inferred to be the data units included in the same maximum coding unit.

The image data decoder 230 restores the current picture by decoding the image data in each maximum coding unit based on the information about the coded depth and the encoding mode according to the maximum coding units. In other words, the image data decoder 230 may decode the encoded image data based on the extracted information about the partition type, the prediction mode, and the transformation unit for each coding unit from among the coding units having the tree structure included in each maximum coding unit. A decoding process may include a prediction including intra prediction and motion compensation, and an inverse transformation.

The image data decoder 230 may perform intra prediction or motion compensation according to a partition and a prediction mode of each coding unit, based on the information about the partition type and the prediction mode of the prediction unit of the coding unit according to coded depths.

In addition, the image data decoder 230 may read information about a transformation unit according to a tree structure for each coding unit so as to perform inverse transformation based on transformation units for each coding unit, for inverse transformation for each maximum coding unit. Via the inverse transformation, a pixel value of a spatial region of the coding unit may be restored.

The image data decoder 230 may determine a coded depth of a current maximum coding unit by using split information according to depths. If the split information indicates that image data is no longer split in the current depth, the current depth is a coded depth. Accordingly, the image data decoder 230 may decode encoded data in the current maximum coding unit by using the information about the partition type of the prediction unit, the prediction mode, and the size of the transformation unit for each coding unit corresponding to the coded depth.

In other words, data units containing the encoding information including the same split information may be gathered by observing the encoding information set assigned for the predetermined data unit from among the coding unit, the prediction unit, and the minimum unit, and the gathered data units may be considered to be one data unit to be decoded by the image data decoder 230 in the same encoding mode. As such, the current coding unit may be decoded by obtaining the information about the encoding mode for each coding unit.

The multi-view video prediction encoding apparatus 10 and the multi-view video encoding apparatus 121 described above with reference to FIGS. 1A and 12 may include as many image data decoders 230 as the number of views, so as to generate a reference picture for inter-prediction and inter-view prediction according to views of a multi-view video.

Also, the multi-view video prediction decoding apparatus 20 and the multi-view video decoding apparatus 131 described above with reference to FIGS. 2A and 13 may include the number of video decoding apparatuses 200 as much as the number of views, so as to restore images according to views by decoding received bitstreams.

When a bitstream of a predetermined view video among the multi-view video is received, the image data decoder 230 of the video decoding apparatus 200 may split samples of images extracted from the bitstream by the image data and encoding information extractor 220 into coding units having a tree structure. The image data decoder 230 may restore the images by performing motion compensation according to prediction units for inter-prediction, on the coding units having the tree structure obtained by splitting the samples of the images.

In particular, the image data decoder 230 may perform inter-prediction that refers to a same view reconstructed picture and inter-view prediction that refers to a different view reconstructed picture. The image data decoder 230 according to an embodiment may determine a L0 list including at least one reconstructed picture to which a POC preceding the current picture is assigned and at least one reconstructed picture to which the same POC as that of the current picture is assigned and having a VID smaller than that of the current picture from among same view images of the current picture that is a P slice type or a B slice type. The image data decoder 230 may determine a L1 list including at least one reconstructed picture to which a POC following the current picture is assigned and at least one reconstructed picture to which the same POC as that of the current picture is assigned and having a VID greater than that of the current picture from among the same view images of the current picture that is the B slice type.

Therefore, the image data decoder 230 may determine the L0 list and the L1 list for inter-prediction and inter-view prediction of multi-view video by using the reconstructed pictures stored in a DPB. According to circumstances, a reference order of the reconstructed pictures defined in the L0 list and the L1 list may be optionally modified in a predetermined slice.

The image data decoder 230 according to an embodiment may determine a reference picture of the current picture by referring to the L0 list or referring to the L0 list and the L1 list. The image data decoder 230 may determine a reference prediction unit of a reference image by using a motion vector or a disparity vector parsed by image data and encoding information extractor 220. A current prediction unit may be reconstructed by compensating for residue data on the reference prediction unit through at least one selected from motion compensation and disparity compensation.

Thus, the video decoding apparatus 200 may obtain information about at least one coding unit that generates the minimum encoding error when encoding is recursively performed for each maximum coding unit, and may use the information to decode the current picture. In other words, the coding units having the tree structure determined to be the optimum coding units in each maximum coding unit may be decoded.

Accordingly, even if image data has high resolution and a large amount of data, the image data may be efficiently decoded and restored by using a size of a coding unit and an encoding mode, which are adaptively determined according to characteristics of the image data, by using information about an optimum encoding mode received from an encoder.

FIG. 16 is a diagram for describing a concept of coding units according to an embodiment of the present invention.

A size of a coding unit may be expressed by width x height, and may be 64x64, 32x32, 16x16, and 8x8. A coding unit of 64x64 may be split into partitions of 64x64, 64x32, 32x64, or 32x32, and a coding unit of 32x32 may be split into partitions of 32x32, 32x16, 16x32, or 16x16, a coding unit of 16x16 may be split into partitions of 16x16, 16x8, 8x16, or 8x8, and a coding unit of 8x8 may be split into partitions of 8x8, 8x4, 4x8, or 4x4.

In video data 310, a resolution is 1920x1080, a maximum size of a coding unit is 64, and a maximum depth is 2. In video data 320, a resolution is 1920x1080, a maximum size of a coding unit is 64, and a maximum depth is 3. In video data 330, a resolution is 352x288, a maximum size of a coding unit is 16, and a maximum depth is 1. The maximum depth shown in FIG. 16 denotes a total number of splits from a maximum coding unit to a minimum decoding unit.

If a resolution is high or a data amount is large, a maximum size of a coding unit may be large so as to not only increase encoding efficiency but also to accurately reflect characteristics of an image. Accordingly, the maximum size of the coding unit of the video data 310 and 320 having a higher resolution than the video data 330 may be 64.

Since the maximum depth of the video data 310 is 2, coding units 315 of the vide data 310 may include a maximum coding unit having a long axis size of 64, and coding units having long axis sizes of 32 and 16 since depths are deepened to two layers by splitting the maximum coding unit twice. Since the maximum depth of the video data 330 is 1, coding units 335 of the video data 330 may include a maximum coding unit having a long axis size of 16, and coding units having a long axis size of 8 since depths are deepened to one layer by splitting the maximum coding unit once.

Since the maximum depth of the video data 320 is 3, coding units 325 of the video data 320 may include a maximum coding unit having a long axis size of 64, and coding units having long axis sizes of 32, 16, and 8 since the depths are deepened to 3 layers by splitting the maximum coding unit three times. As a depth deepens, detailed information may be precisely expressed.

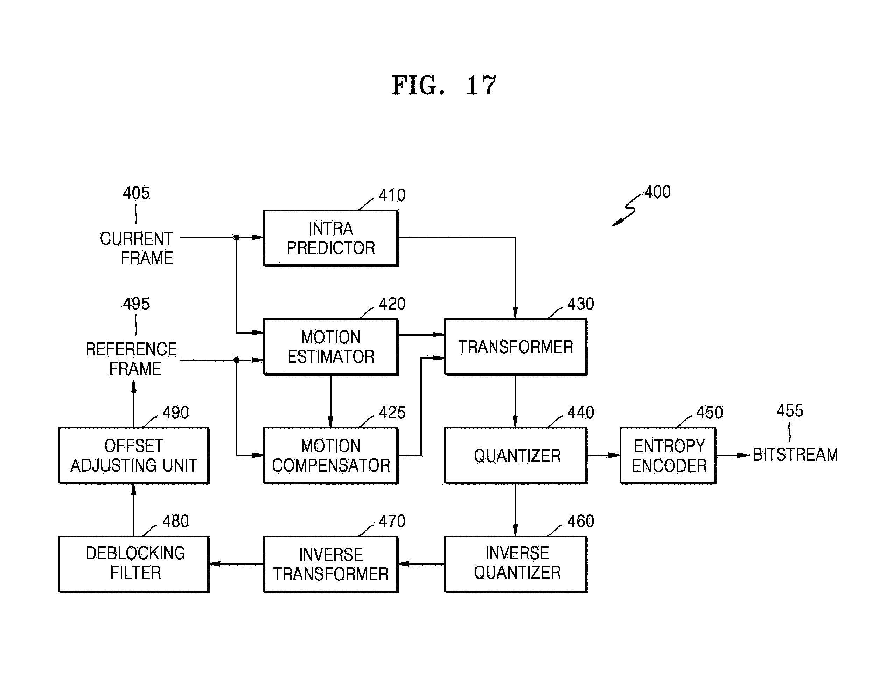

FIG. 17 is a block diagram of an image encoder 400 based on coding units, according to an embodiment of the present invention.

The image encoder 400 according to an embodiment performs operations of the coding unit determiner 120 of the video encoding apparatus 100 to encode image data. In other words, an intra predictor 410 performs intra prediction on coding units in an intra mode, from among a current frame 405, and a motion estimator 420 and a motion compensator 425 respectively perform inter estimation and motion compensation on coding units in an inter mode from among the current frame 405 by using the current frame 405, and a reference frame 495.

Data output from the intra predictor 410, the motion estimator 420, and the motion compensator 425 is output as a quantized transformation coefficient through a transformer 430 and a quantizer 440. The quantized transformation coefficient is restored as data in a spatial domain through an inverse quantizer 460 and an inverse transformer 470, and the restored data in the spatial domain is output as the reference frame 495 after being post-processed through a deblocking unit 480 and an offset adjusting unit 490. The quantized transformation coefficient may be output as a bitstream 455 through an entropy encoder 450.

In order for the image encoder 400 to be applied in the video encoding apparatus 100 according to an embodiment, all elements of the image encoder 400, i.e., the intra predictor 410, the motion estimator 420, the motion compensator 425, the transformer 430, the quantizer 440, the entropy encoder 450, the inverse quantizer 460, the inverse transformer 470, the deblocking unit 480, and the offset adjusting unit 490 perform operations based on each coding unit among coding units having a tree structure while considering the maximum depth of each maximum coding unit.

Specifically, the intra predictor 410, the motion estimator 420, and the motion compensator 425 determines partitions and a prediction mode of each coding unit from among the coding units having a tree structure while considering the maximum size and the maximum depth of a current maximum coding unit, and the transformer 430 determines the size of the transformation unit in each coding unit from among the coding units having a tree structure.

The motion compensator 420 may perform inter-prediction that refers to same view images according to prediction units and estimate inter-motion. The motion compensator 420 may also perform inter-view prediction that refers to different view images having a same reproduction order according to prediction units and estimate inter-view disparity.

The motion compensator 425 may perform motion compensation that refers to the same view images according to prediction units and reconstruct the prediction units. The motion compensator 425 may also perform disparity compensation that refers to the different view images having a same reproduction order according to prediction units and reconstruct the prediction units.

A method in which the motion estimator 420 and the motion compensator 425 determine reference lists is the same as described with reference to FIGS. 1A through 11 above.

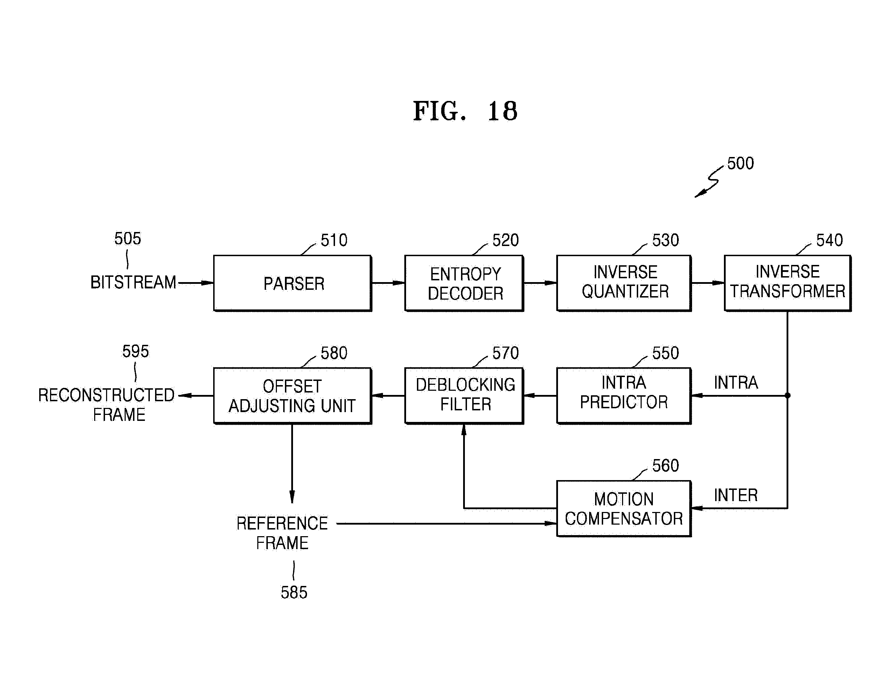

FIG. 18 is a block diagram of an image decoder 500 based on coding units, according to an embodiment of the present invention.

A parser 510 parses encoded image data to be decoded and information about encoding required for decoding from a bitstream 505. The encoded image data is output as inverse quantized data through an entropy decoder 520 and an inverse quantizer 530, and the inverse quantized data is restored to image data in a spatial domain through an inverse transformer 540.

An intra predictor 550 performs intra prediction on coding units in an intra mode with respect to the image data in the spatial domain, and a motion compensator 560 performs motion compensation on coding units in an inter mode by using a reference frame 585.

The image data in the spatial domain, which passed through the intra predictor 550 and the motion compensator 560, may be output as a restored frame 595 after being post-processed through a deblocking unit 570 and an offset adjustor 580. Also, the image data that is post-processed through the deblocking unit 570 and the offset adjustor 580 may be output as the reference frame 585.

In order to decode the image data in the image data decoder 230 of the video decoding apparatus 200 , the image decoder 500 may perform operations that are performed after the parser 510.

In order for the image decoder 500 to be applied in the video decoding apparatus 200, all elements of the image decoder 500, i.e., the parser 510, the entropy decoder 520 according to an embodiment, the inverse quantizer 530, the inverse transformer 540, the intra predictor 550, the motion compensator 560, the deblocking unit 570, and the offset adjustor 580 perform operations based on coding units having a tree structure for each maximum coding unit.

Specifically, the intra prediction 550 and the motion compensator 560 perform operations based on partitions and a prediction mode for each of the coding units having a tree structure, and the inverse transformer 540 perform operations based on a size of a transformation unit for each coding unit.

The motion compensator 560 may perform motion compensation that refers to the same view images according to prediction units and reconstruct the prediction units. The motion compensator 560 may also perform disparity compensation that refers to the different view images having a same reproduction order according to prediction units and reconstruct the prediction units. A method in which the motion compensator 560 determines a reference list is the same as described with reference to FIGS. 1A through 11 above.

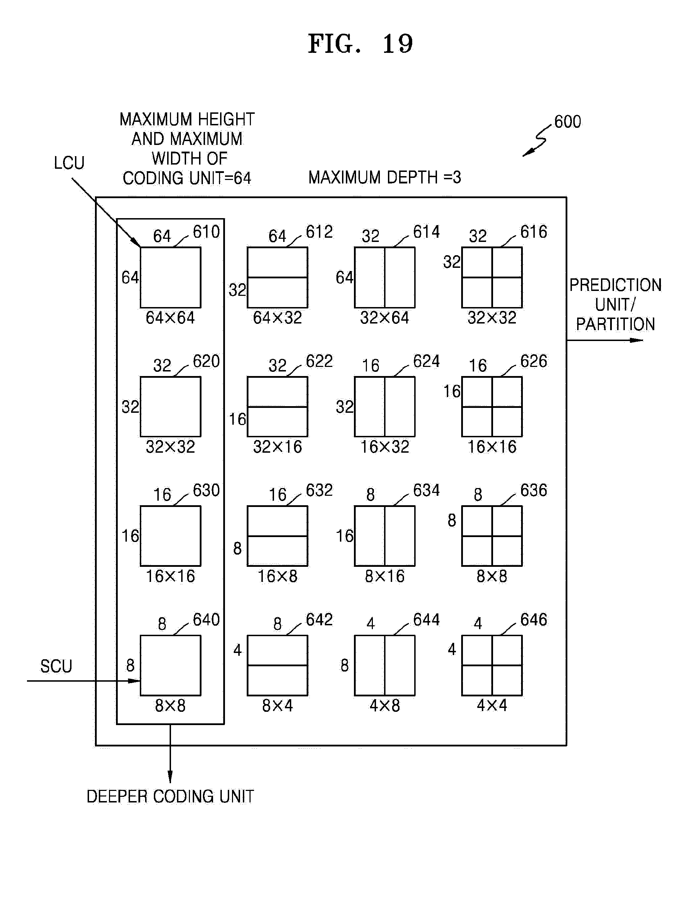

FIG. 19 is a diagram illustrating deeper coding units according to depths, and partitions, according to an embodiment of the present invention.

The video encoding apparatus 100 according to an embodiment and the video decoding apparatus 200 according to an embodiment use hierarchical coding units so as to consider characteristics of an image. A maximum height, a maximum width, and a maximum depth of coding units may be adaptively determined according to the characteristics of the image, or may be differently set by a user. Sizes of deeper coding units according to depths may be determined according to the predetermined maximum size of the coding unit.

In a hierarchical structure 600 of coding units according to an embodiment, according to an embodiment of the present invention, the maximum height and the maximum width of the coding units are each 64, and the maximum depth is 3. In this case, the maximum depth refers to a total number of times the coding unit is split from the maximum coding unit to the minimum coding unit. Since a depth deepens along a vertical axis of the hierarchical structure 600 according to an embodiment, a height and a width of the deeper coding unit are each split. Also, a prediction unit and partitions, which are bases for prediction encoding of each deeper coding unit, are shown along a horizontal axis of the hierarchical structure 600.

In other words, a coding unit 610 is a maximum coding unit in the hierarchical structure 600, wherein a depth is 0 and a size, i.e., a height by width, is 64x64. The depth deepens along the vertical axis, and a coding unit 620 having a size of 32x32 and a depth of 1, a coding unit 630 having a size of 16x16 and a depth of 2, and a coding unit 640 having a size of 8x8 and a depth of 3. The coding unit 640 having a size of 8x8 and a depth of 3 is a minimum coding unit.

The prediction unit and the partitions of a coding unit are arranged along the horizontal axis according to each depth. In other words, if the coding unit 610 having a size of 64x64 and a depth of 0 is a prediction unit, the prediction unit may be split into partitions include in the encoding unit 610, i.e. a partition 610 having a size of 64x64, partitions 612 having the size of 64x32, partitions 614 having the size of 32x64, or partitions 616 having the size of 32x32.

Similarly, a prediction unit of the coding unit 620 having the size of 32x32 and the depth of 1 may be split into partitions included in the coding unit 620, i.e. a partition 620 having a size of 32x32, partitions 622 having a size of 32x16, partitions 624 having a size of 16x32, and partitions 626 having a size of 16x16.

Similarly, a prediction unit of the coding unit 630 having the size of 16x16 and the depth of 2 may be split into partitions included in the coding unit 630, i.e. a partition having a size of 16x16 included in the coding unit 630, partitions 632 having a size of 16x8, partitions 634 having a size of 8x16, and partitions 636 having a size of 8x8.

Similarly, a prediction unit of the coding unit 640 having the size of 8x8 and the depth of 3 may be split into partitions included in the coding unit 640, i.e. a partition having a size of 8x8 included in the coding unit 640, partitions 642 having a size of 8x4, partitions 644 having a size of 4x8, and partitions 646 having a size of 4x4.

In order to determine the at least one coded depth of the coding units constituting the maximum coding unit 610, the coding unit determiner 120 of the video encoding apparatus 100 according to an embodiment performs encoding for coding units corresponding to each depth included in the maximum coding unit 610. A number of deeper coding units according to depths including data in the same range and the same size increases as the depth deepens. For example, four coding units corresponding to a depth of 2 are required to cover data that is included in one coding unit corresponding to a depth of 1. Accordingly, in order to compare encoding results of the same data according to depths, the coding unit corresponding to the depth of 1 and four coding units corresponding to the depth of 2 are each encoded.

In order to perform encoding for a current depth from among the depths, a least encoding error may be selected for the current depth by performing encoding for each prediction unit in the coding units corresponding to the current depth, along the horizontal axis of the hierarchical structure 600. Alternatively, the minimum encoding error may be searched for by comparing the least encoding errors according to depths, by performing encoding for each depth as the depth deepens along the vertical axis of the hierarchical structure 600. A depth and a partition having the minimum encoding error in the coding unit 610 may be selected as the coded depth and a partition type of the coding unit 610.

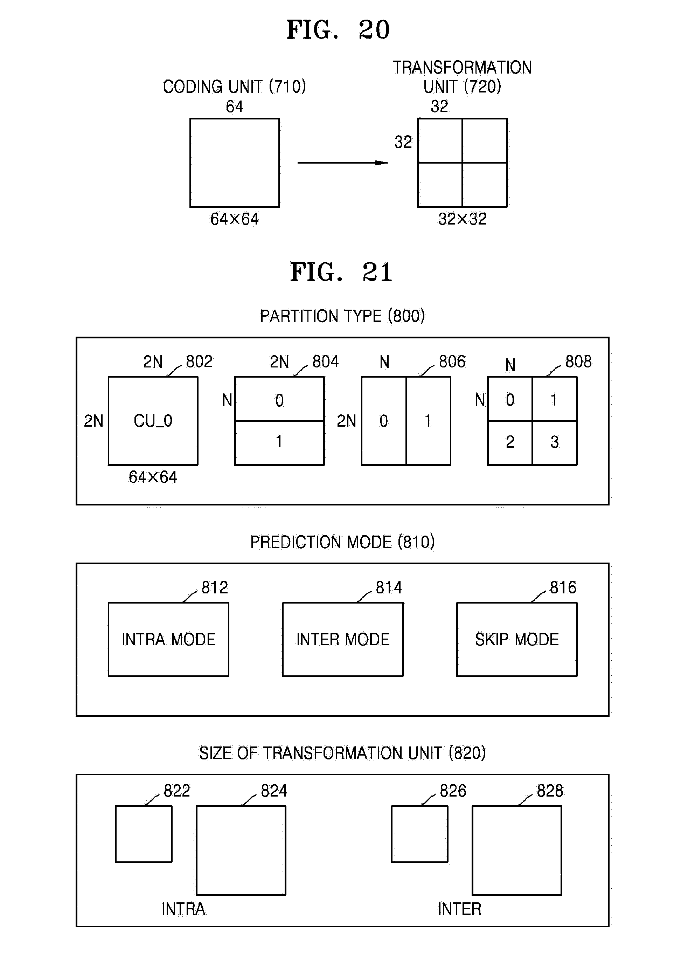

FIG. 20 is a diagram for describing a relationship between a coding unit 710 and transformation units 720, according to an embodiment of the present invention.

The video encoding apparatus 100 according to an embodiment or the video decoding apparatus 200 according to an embodiment encodes or decodes an image according to coding units having sizes smaller than or equal to a maximum coding unit for each maximum coding unit. Sizes of transformation units for transformation during encoding may be selected based on data units that are not larger than a corresponding coding unit.

For example, in the video encoding apparatus 100 according to an embodiment or the video decoding apparatus 200 according to an embodiment, if a size of the coding unit 710 is 64x64, transformation may be performed by using the transformation units 720 having a size of 32x32.

Also, data of the coding unit 710 having the size of 64x64 may be encoded by performing the transformation on each of the transformation units having the size of 32x32, 16x16, 8x8, and 4x4, which are smaller than 64x64, and then a transformation unit having the least coding error may be selected.

FIG. 21 is a diagram fro describing encoding information of coding units corresponding to a coded depth, according to an embodiment of the present invention.

The output unit 130 of the video encoding apparatus 100 according to an embodiment may encode and transmit information 800 about a partition type, information 810 about a prediction mode, and information 820 about a size of a transformation unit for each coding unit corresponding to a coded depth, as information about an encoding mode.

The information 800 indicates information about a shape of a partition obtained by splitting a prediction unit of a current coding unit, wherein the partition is a data unit for prediction encoding the current coding unit. For example, a current coding unit CU_0 having a size of 2Nx2N may be split into any one of a partition 802 having a size of 2Nx2N, a partition 804 having a size of 2NxN, a partition 806 having a size of Nx2N, and a partition 808 having a size of NxN. Here, the information 800 about a partition type is set to indicate one of the partition 804 having a size of 2NxN, the partition 806 having a size of Nx2N, and the partition 808 having a size of NxN.

The information 810 indicates a prediction mode of each partition. For example, the information 810 may indicate a mode of prediction encoding performed on a partition indicated by the information 800, i.e., an intra mode 812, an inter mode 814, or a skip mode 816.

The information 820 indicates a transformation unit to be based on when transformation is performed on a current coding unit. For example, the transformation unit may be a first intra transformation unit 822, a second intra transformation unit 824, a first inter transformation unit 826, or a second intra transformation unit 828.

The image data and encoding information extractor 220 of the video decoding apparatus 200 may extract and use the information 800, 810, and 820 for decoding, according to each deeper coding unit.

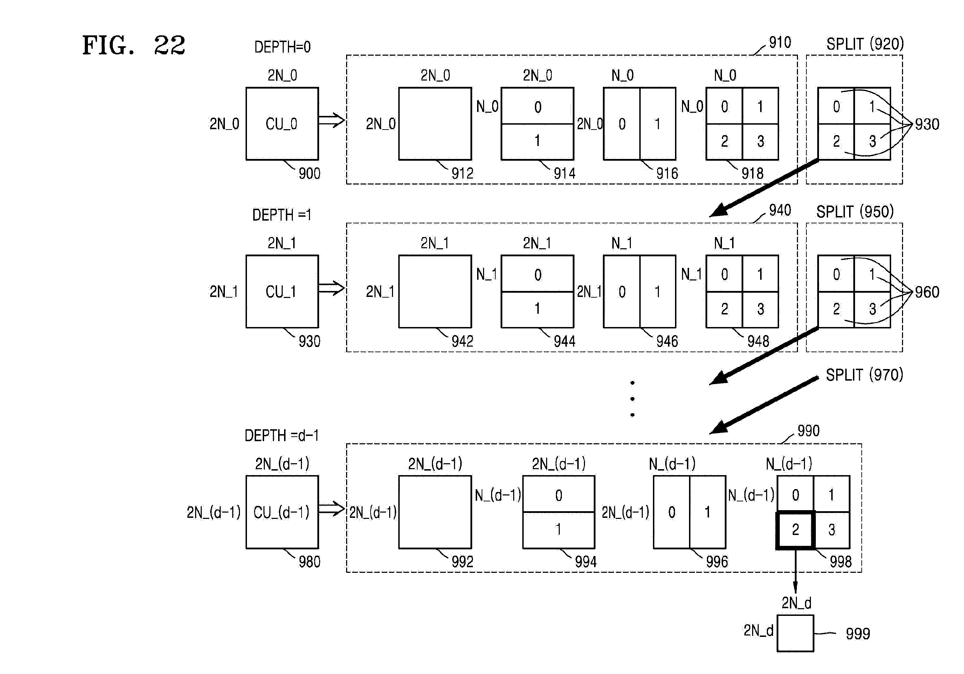

FIG. 22 is a diagram of deeper coding units according to depths, according to an embodiment of the present invention.

Split information may be used to indicate a change of a depth. The spilt information indicates whether a coding unit of a current depth is split into coding units of a lower depth.

A prediction unit 910 for prediction encoding a coding unit 900 having a depth of 0 and a size of 2N_0x2N_0 may include partitions of a partition type 912 having a size of 2N_0x2N_0, a partition type 914 having a size of 2N_0xN_0, a partition type 916 having a size of N_0x2N_0, and a partition type 918 having a size of N_0xN_0. FIG. 9 only illustrates the partition types 912 through 918 which are obtained by symmetrically splitting the prediction unit 910, but a partition type is not limited thereto, and the partitions of the prediction unit 910 may include asymmetrical partitions, partitions having a predetermined shape, and partitions having a geometrical shape.

Prediction encoding is repeatedly performed on one partition having a size of 2N_0x2N_0, two partitions having a size of 2N_0xN_0, two partitions having a size of N_0x2N_0, and four partitions having a size of N_0xN_0, according to each partition type. The prediction encoding in an intra mode and an inter mode may be performed on the partitions having the sizes of 2N_0x2N_0, N_0x2N_0, 2N_0xN_0, and N_0xN_0. The prediction encoding in a skip mode is performed only on the partition having the size of 2N_0x2N_0.

If an encoding error is smallest in one of the partition types 912 through 916, the prediction unit 910 may not be split into a lower depth.

If the encoding error is the smallest in the partition type 918, a depth is changed from 0 to 1 to split the partition type 918 in operation 920, and encoding is repeatedly performed on coding units 930 having a depth of 2 and a size of N_0xN_0 to search for a minimum encoding error.

A prediction unit 940 for prediction encoding the coding unit 930 having a depth of 1 and a size of 2N_1x2N_1 (=N_0xN_0) may include partitions of a partition type 942 having a size of 2N_1 x2N_1, a partition type 944 having a size of 2N_1xN_1, a partition type 946 having a size of N_1x2N_1, and a partition type 948 having a size of N_1xN_1.

If an encoding error is the smallest in the partition type 948, a depth is changed from 1 to 2 to split the partition type 948 in operation 950, and encoding is repeatedly performed on coding units 960, which have a depth of 2 and a size of N_2xN_2 to search for a minimum encoding error.

When a maximum depth is d, split operation according to each depth may be performed up to when a depth becomes d-1, and split information may be encoded as up to when a depth is one of 0 to d-2. In other words, when encoding is performed up to when the depth is d-1 after a coding unit corresponding to a depth of d-2 is split in operation 970, a prediction unit 990 for prediction encoding a coding unit 980 having a depth of d-1 and a size of 2N_(d-1)x2N_(d-1) may include partitions of a partition type 992 having a size of 2N_(d-1)x2N_(d-1), a partition type 994 having a size of 2N_(d-1)xN_(d-1), a partition type 996 having a size of N_(d-1)x2N_(d-1), and a partition type 998 having a size of N_(d-1)xN_(d-1).

Prediction encoding may be repeatedly performed on one partition having a size of 2N_(d-1)x2N_(d-1), two partitions having a size of 2N_(d-1)xN_(d-1), two partitions having a size of N_(d-1)x2N_(d-1), four partitions having a size of N_(d-1)xN_(d-1) from among the partition types 992 through 998 to search for a partition type having a minimum encoding error.

Even when the partition type 998 has the minimum encoding error, since a maximum depth is d, a coding unit CU_(d-1) having a depth of d-1 is no longer split to a lower depth, and a coded depth for the coding units constituting a current maximum coding unit 900 is determined to be d-1 and a partition type of the current maximum coding unit 900 may be determined to be N_(d-1)xN_(d-1). Also, since the maximum depth is d and a minimum coding unit 980 having a lowermost depth of d-1 is no longer split to a lower depth, split information for the minimum coding unit 980 is not set.

A data unit 999 may be a 'minimum unit' for the current maximum coding unit. A minimum unit according to an embodiment of the present invention may be a square data unit obtained by splitting a minimum coding unit 980 by 4. By performing the encoding repeatedly, the video encoding apparatus 100 may select a depth having the least encoding error by comparing encoding errors according to depths of the coding unit 900 to determine a coded depth, and set a corresponding partition type and a prediction mode as an encoding mode of the coded depth.

As such, the minimum encoding errors according to depths are compared in all of the depths of 1 through d, and a depth having the least encoding error may be determined as a coded depth. The coded depth, the partition type of the prediction unit, and the prediction mode may be encoded and transmitted as information about an encoding mode. Also, since a coding unit is split from a depth of 0 to a coded depth, only split information of the coded depth is set to 0, and split information of depths excluding the coded depth is set to 1.

The image data and encoding information extractor 220 of the video decoding apparatus 200 according to an embodiment may extract and use the information about the coded depth and the prediction unit of the coding unit 900 to decode the partition 912. The video decoding apparatus 200 according to an embodiment may determine a depth, in which split information is 0, as a coded depth by using split information according to depths, and use information about an encoding mode of the corresponding depth for decoding.

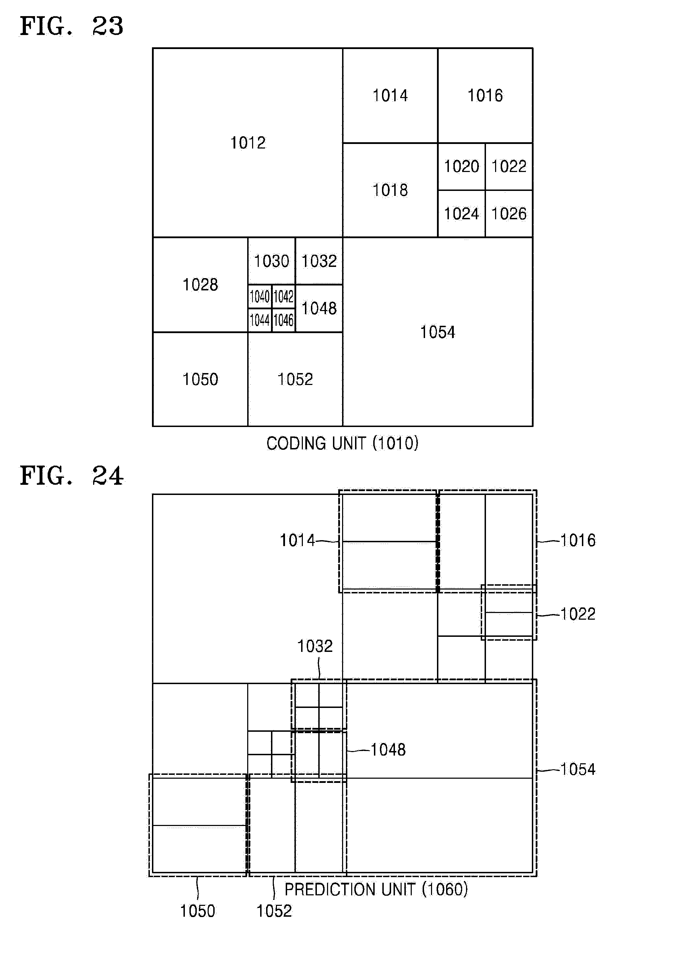

FIGS. 23 through 25 are diagrams for describing a relationship between coding units 1010, prediction units 1060, and transformation units 1070, according to an embodiment of the present invention.

The coding units 1010 are coding units having a tree structure, corresponding to coded depths determined by the video encoding apparatus 100, in a maximum coding unit. The prediction units 1060 are partitions of prediction units of each of the coding units 1010, and the transformation units 1070 are transformation units of each of the coding units 1010.

When a depth of a maximum coding unit is 0 in the coding units 1010, depths of coding units 1012 and 1054 are 1, depths of coding units 1014, 1016, 1018, 1028, 1050, and 1052 are 2, depths of coding units 1020, 1022, 1024, 1026, 1030, 1032, and 1048 are 3, and depths of coding units 1040, 1042, 1044, and 1046 are 4.

In the prediction units 1060, some encoding units 1014, 1016, 1022, 1032, 1048, 1050, 1052, and 1054 are obtained by splitting the coding units in the encoding units 1010. In other words, partition types in the coding units 1014, 1022, 1050, and 1054 have a size of 2NxN, partition types in the coding units 1016, 1048, and 1052 have a size of Nx2N, and a partition type of the coding unit 1032 has a size of NxN. Prediction units and partitions of the coding units 1010 are smaller than or equal to each coding unit.

Transformation or inverse transformation is performed on image data of the coding unit 1052 in the transformation units 1070 in a data unit that is smaller than the coding unit 1052. Also, the coding units 1014, 1016, 1022, 1032, 1048, 1050, and 1052 in the transformation units 1070 are different from those in the prediction units 1060 in terms of sizes and shapes. In other words, the video encoding and decoding apparatuses 100 and 200 according to embodiments may perform intra prediction, motion estimation, motion compensation, transformation, and inverse transformation individually on a data unit in the same coding unit.

Accordingly, encoding is recursively performed on each of coding units having a hierarchical structure in each region of a maximum coding unit to determine an optimum coding unit, and thus coding units having a recursive tree structure may be obtained. Encoding information may include split information about a coding unit, information about a partition type, information about a prediction mode, and information about a size of a transformation unit. Table 1 shows the encoding information that may be set by the video encoding and decoding apparatuses 100 and 200 according to embodiments.

Table 1

| Split Information 0 (Encoding on Coding Unit having Size of 2Nx2N and Current Depth of d) | | | | | Split Information 1 |
|---|---|---|---|---|---|
| Prediction Mode | Partition Type | | Size of Transformation Unit | | |
| Intra<br>Inter<br><br>Skip (Only 2Nx2N) | Symmetrical Partition Type | Asymmetrical Partition Type | Split Information 0 of Transformation Unit | Split Information 1 of Transformation Unit | Repeatedly Encode Coding Units having Lower Depth of d+1 |
| | 2Nx2N<br>2NxN<br>Nx2N<br>NxN | 2NxnU<br>2NxnD<br>nLx2N<br>nRx2N | 2Nx2N | NxN (Symmetrical Type)<br>N/2xN/2 (Asymmetrical Type) | |

The output unit 130 of the video encoding apparatus 100 according to an embodiment may output the encoding information about the coding units having a tree structure, and the image data and encoding information extractor 220 of the video decoding apparatus 200 according to an embodiment may extract the encoding information about the coding units having a tree structure from a received bitstream.

Split information indicates whether a current coding unit is split into coding units of a lower depth. If split information of a current depth d is 0, a depth, in which a current coding unit is no longer split into a lower depth, is a coded depth, and thus information about a partition type, prediction mode, and a size of a transformation unit may be defined for the coded depth. If the current coding unit is further split according to the split information, encoding is independently performed on four split coding units of a lower depth.

A prediction mode may be one of an intra mode, an inter mode, and a skip mode. The intra mode and the inter mode may be defined in all partition types, and the skip mode is defined only in a partition type having a size of 2Nx2N.

The information about the partition type may indicate symmetrical partition types having sizes of 2Nx2N, 2NxN, Nx2N, and NxN, which are obtained by symmetrically splitting a height or a width of a prediction unit, and asymmetrical partition types having sizes of 2NxnU, 2NxnD, nLx2N, and nRx2N, which are obtained by asymmetrically splitting the height or width of the prediction unit. The asymmetrical partition types having the sizes of 2NxnU and 2NxnD may be respectively obtained by splitting the height of the prediction unit in 1:3 and 3:1, and the asymmetrical partition types having the sizes of nLx2N and nRx2N may be respectively obtained by splitting the width of the prediction unit in 1:3 and 3:1

The size of the transformation unit may be set to be two types in the intra mode and two types in the inter mode. In other words, if split information of the transformation unit is 0, the size of the transformation unit may be 2Nx2N, which is the size of the current coding unit. If split information of the transformation unit is 1, the transformation units may be obtained by splitting the current coding unit. Also, if a partition type of the current coding unit having the size of 2Nx2N is a symmetrical partition type, a size of a transformation unit may be NxN, and if the partition type of the current coding unit is an asymmetrical partition type, the size of the transformation unit may be N/2xN/2.

The encoding information about coding units having a tree structure according to an embodiment may include at least one selected from a coding unit corresponding to a coded depth, a prediction unit, and a minimum unit. The coding unit corresponding to the coded depth may include at least one selected from a prediction unit and a minimum unit containing the same encoding information.

Accordingly, it is determined whether adjacent data units are included in the same coding unit corresponding to the coded depth by comparing encoding information of the adjacent data units. Also, a corresponding coding unit corresponding to a coded depth is determined by using encoding information of a data unit, and thus a distribution of coded depths in a maximum coding unit may be determined.

Accordingly, if a current coding unit is predicted based on encoding information of adjacent data units, encoding information of data units in deeper coding units adjacent to the current coding unit may be directly referred to and used.

Alternatively, if a current coding unit is predicted based on encoding information of adjacent data units, data units adjacent to the current coding unit are searched using encoded information of the data units, and the searched adjacent coding units may be referred for predicting the current coding unit.

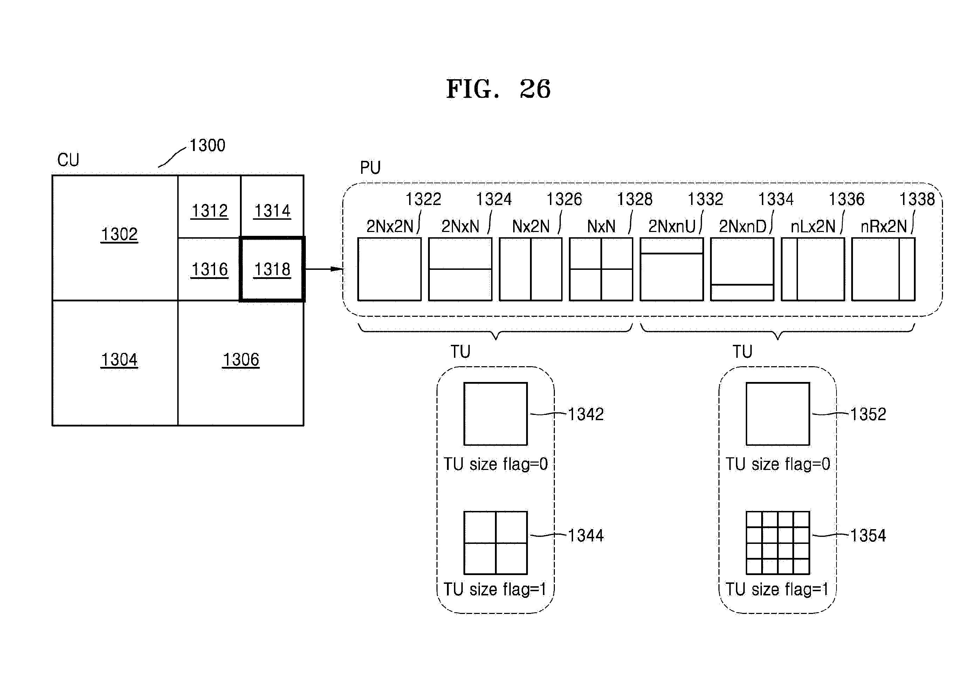

FIG. 26 is a diagram for describing a relationship between a coding unit, a prediction unit, and a transformation unit, according to encoding mode information of Table 1.

A maximum coding unit 1300 includes coding units 1302, 1304, 1306, 1312, 1314, 1316, and 1318 of coded depths. Here, since the coding unit 1318 is a coding unit of a coded depth, split information may be set to 0. Information about a partition type of the coding unit 1318 having a size of 2Nx2N may be set to be one of a partition type 1322 having a size of 2Nx2N, a partition type 1324 having a size of 2NxN, a partition type 1326 having a size of Nx2N, a partition type 1328 having a size of NxN, a partition type 1332 having a size of 2NxnU, a partition type 1334 having a size of 2NxnD, a partition type 1336 having a size of nLx2N, and a partition type 1338 having a size of nRx2N.

Split information (TU size flag) of a transformation unit is a type of a transformation index. The size of the transformation unit corresponding to the transformation index may be changed according to a prediction unit type or partition type of the coding unit.

For example, when the partition type is set to be symmetrical, i.e. the partition type 1322, 1324, 1326, or 1328, a transformation unit 1342 having a size of 2Nx2N is set if a TU size flag of a transformation unit is 0, and a transformation unit 1344 having a size of NxN is set if a TU size flag is 1.

When the partition type is set to be asymmetrical, i.e., the partition type 1332, 1334, 1336, or 1338, a transformation unit 1352 having a size of 2Nx2N is set if a TU size flag is 0, and a transformation unit 1354 having a size of N/2xN/2 is set if a TU size flag is 1.

Referring to FIG. 20, the TU size flag is a flag having a value or 0 or 1, but the TU size flag is not limited to 1 bit, and a transformation unit may be hierarchically split having a tree structure while the TU size flag increases from 0. Split information (TU size flag) of a transformation unit may be an example of a transformation index.

In this case, the size of a transformation unit that has been actually used may be expressed by using a TU size flag of a transformation unit, according to an embodiment according to the present invention, together with a maximum size and minimum size of the transformation unit. The video encoding apparatus 100 is capable of encoding maximum transformation unit size information, minimum transformation unit size information, and a maximum TU size flag. The result of encoding the maximum transformation unit size information, the minimum transformation unit size information, and the maximum TU size flag may be inserted into an SPS. The video decoding apparatus 200 may decode video by using the maximum transformation unit size information, the minimum transformation unit size information, and the maximum TU size flag.

For example, (a) if the size of a current coding unit is 64x64 and a maximum transformation unit size is 32x32, (a-1) then the size of a transformation unit may be 32x32 when a TU size flag is 0, (a-2) may be 16x16 when the TU size flag is 1, and (a-3) may be 8x8 when the TU size flag is 2.

As another example, (b) if the size of the current coding unit is 32x32 and a minimum transformation unit size is 32x32, (b-1) then the size of the transformation unit may be 32x32 when the TU size flag is 0. Here, the TU size flag cannot be set to a value other than 0, since the size of the transformation unit cannot be less than 32x32.

As another example, (c) if the size of the current coding unit is 64x64 and a maximum TU size flag is 1, then the TU size flag may be 0 or 1. Here, the TU size flag cannot be set to a value other than 0 or 1.

Thus, if it is defined that the maximum TU size flag is 'MaxTransformSizeIndex', a minimum transformation unit size is 'MinTransformSize', and a transformation unit size is 'RootTuSize' when the TU size flag is 0, then a current minimum transformation unit size 'CurrMinTuSize' that can be determined in a current coding unit, may be defined by Equation (1):

$$\text{CurrMinTuSize}$$
$$= \max(\text{MinTransformSize}, \text{RootTuSize}/(2^{\text{MaxTransformSizeIndex}})) \dots (1)$$

Compared to the current minimum transformation unit size 'CurrMinTuSize' that can be determined in the current coding unit, a transformation unit size 'RootTuSize' when the TU size flag is 0 may denote a maximum transformation unit size that can be selected in the system. In Equation (1), 'RootTuSize/(2^MaxTransformSizeIndex)' denotes a transformation unit size when the transformation unit size 'RootTuSize', when the TU size flag is 0, is split a number of times corresponding to the maximum TU size flag, and 'MinTransformSize' denotes a minimum transformation size.

Thus, a smaller value from among 'RootTuSize/(2^MaxTransformSizeIndex)' and 'MinTransformSize' may be the current minimum transformation unit size 'CurrMinTuSize' that can be determined in the current coding unit.

According to an embodiment according to the present invention, the maximum transformation unit size RootTuSize may vary according to the type of a prediction mode.

For example, if a current prediction mode is an inter mode, then 'RootTuSize' may be determined by using Equation (2) below. In Equation (2), 'MaxTransformSize' denotes a maximum transformation unit size, and 'PUSize' denotes a current prediction unit size.

$$RootTuSize = min(MaxTransformSize, PUSize) ......... (2)$$

That is, if the current prediction mode is the inter mode, the transformation unit size 'RootTuSize', when the TU size flag is 0, may be a smaller value from among the maximum transformation unit size and the current prediction unit size.

If a prediction mode of a current partition unit is an intra mode, 'RootTuSize' may be determined by using Equation (3) below. In Equation (3), 'PartitionSize' denotes the size of the current partition unit.

$$RootTuSize = min(MaxTransformSize, PartitionSize) ...........(3)$$

That is, if the current prediction mode is the intra mode, the transformation unit size 'RootTuSize' when the TU size flag is 0 may be a smaller value from among the maximum transformation unit size and the size of the current partition unit.

However, the current maximum transformation unit size 'RootTuSize' that varies according to the type of a prediction mode in a partition unit is just an example and the present invention is not limited thereto.

According to the video encoding method based on coding units having a tree structure as described with reference to FIGS. 14 through 26, image data of a spatial region is encoded for each coding unit of a tree structure. According to the video decoding method based on coding units having a tree structure, decoding is performed for each maximum coding unit to restore image data of a spatial region. Thus, a picture and a video that is a picture sequence may be restored. The restored video may be reproduced by a reproducing apparatus, stored in a storage medium, or transmitted through a network.

The embodiments according to the present invention may be written as computer programs and may be implemented in general-use digital computers that execute the programs using a computer-readable recording medium. Examples of the computer-readable recording medium include magnetic storage media (e.g., ROM, floppy discs, hard discs, etc.) and optical recording media (e.g., CD-ROMs, or DVDs).

For convenience of description, the video encoding method according to the multi-view video prediction method, the multi-view video prediction restoration method, or the multi-view video encoding method described above with reference to FIGS. 1A through 20 will be collectively referred to as a 'video encoding method according to the present invention'. In addition, the video decoding method according to the multi-view video prediction restoration method or the multi-view video decoding method described above with reference to FIGS. 1A through 20 will be referred to as a 'video decoding method according to the present invention'.

Also, a video encoding apparatus including the multi-view video prediction encoding apparatus 10, the multi-view video encoding apparatus 121, the video encoding apparatus 100, or the image encoder 400, which has been described with reference to FIGS. 1A through 26, will be referred to as a 'video encoding apparatus according to the present invention'. In addition, a video decoding apparatus including the multi-view video prediction decoding apparatus 20, the multi-view video decoding apparatus 131, the video decoding apparatus 200, or the image decoder 500, which has been descried with reference to FIGS. 1A through 26, will be referred to as a 'video decoding apparatus according to the present invention'.

A computer-readable recording medium storing a program, e.g., a disc 26000, according to an embodiment of the present invention will now be described in detail.

FIG. 27 is a diagram of a physical structure of the disc 26000 in which a program is stored, according to an embodiment of the present invention. The disc 26000, which is a storage medium, may be a hard drive, a compact discread only memory (CD-ROM) disc, a Blu-ray disc, or a digital versatile disc (DVD). The disc 26000 includes a plurality of concentric tracks Tr that are each divided into a specific number of sectors Se in a circumferential direction of the disc 26000. In a specific region of the disc 26000, a program that executes the quantization parameter determining method, the video encoding method, and the video decoding method described above may be assigned and stored.

A computer system embodied using a storage medium that stores a program for executing the video encoding method and the video decoding method as described above will now be described with reference to FIG. 28.

FIG. 28 is a diagram of a disc drive 26800 for recording and reading a program by using the disc 26000. A computer system 27000 may store a program that executes at least one selected from a video encoding method and a video decoding method according to an embodiment of the present invention, in the disc 26000 via the disc drive 26800. To run the program stored in the disc 26000 in the computer system 27000, the program may be read from the disc 26000 and be transmitted to the computer system 26700 by using the disc drive 27000.

The program that executes at least one selected from a video encoding method and a video decoding method according to an embodiment of the present invention may be stored not only in the disc 26000 illustrated in FIG. 27 or 28 but also in a memory card, a ROM cassette, or a solid state drive (SSD).

A system to which the video encoding method and a video decoding method described above are applied will be described below.

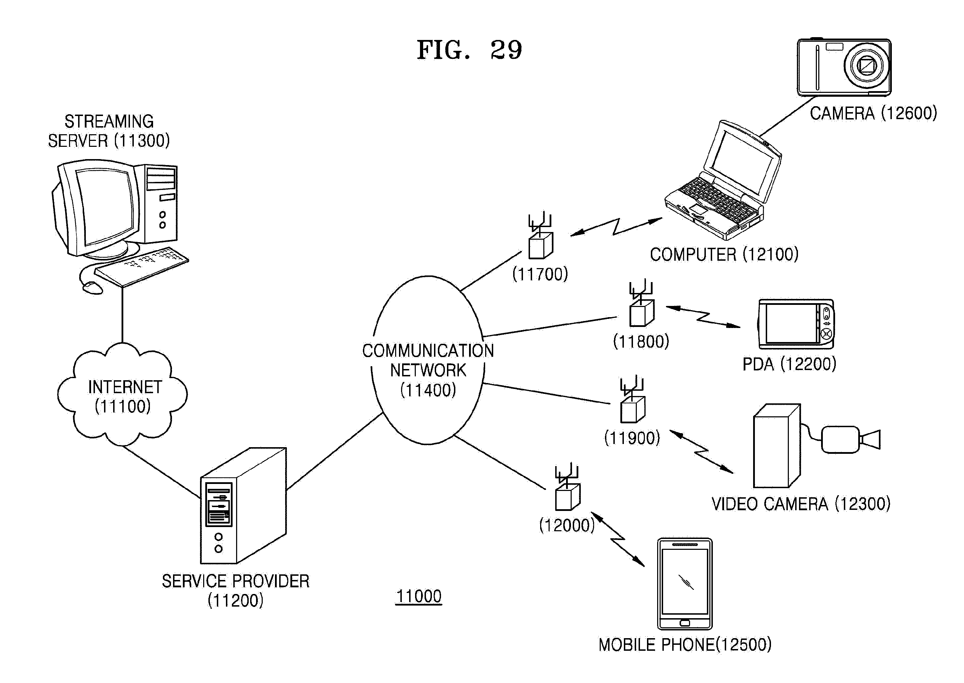

FIG. 29 is a diagram of an overall structure of a content supply system 11000 for providing a content distribution service. A service area of a communication system is divided into predetermined-sized cells, and wireless base stations 11700, 11800, 11900, and 12000 are installed in these cells, respectively.

The content supply system 11000 includes a plurality of independent devices. For example, the plurality of independent devices, such as a computer 12100, a personal digital assistant (PDA) 12200, a video camera 12300, and a mobile phone 12500, are connected to the Internet 11100 via an internet service provider 11200, a communication network 11400, and the wireless base stations 11700, 11800, 11900, and 12000.

However, the content supply system 11000 is not limited to as illustrated in FIG. 29, and devices may be selectively connected thereto. The plurality of independent devices may be directly connected to the communication network 11400, not via the wireless base stations 11700, 11800, 11900, and 12000.

The video camera 12300 is an imaging device, e.g., a digital video camera, which is capable of capturing video images. The mobile phone 12500 may employ at least one communication method from among various protocols, e.g., Personal Digital Communications (PDC), Code Division Multiple Access (CDMA), Wideband-Code Division Multiple Access (W-CDMA), Global System for Mobile Communications (GSM), and Personal Handyphone System (PHS).

The video camera 12300 may be connected to a streaming server 11300 via the wireless base station 11900 and the communication network 11400. The streaming server 11300 allows content received from a user via the video camera 12300 to be streamed via a real-time broadcast. The content received from the video camera 12300 may be encoded using the video camera 12300 or the streaming server 11300. Video data captured by the video camera 12300 may be transmitted to the streaming server 11300 via the computer 12100.

Video data captured by a camera 12600 may also be transmitted to the streaming server 11300 via the computer 12100. The camera 12600 is an imaging device capable of capturing both still images and video images, similar to a digital camera. The video data captured by the camera 12600 may be encoded using the camera 12600 or the computer 12100. Software that performs encoding and decoding video may be stored in a computer-readable recording medium, e.g., a CD-ROM disc, a floppy disc, a hard disc drive, an SSD, or a memory card, which may be accessible by the computer 12100.

If video data is captured by a camera built in the mobile phone 12500, the video data may be received from the mobile phone 12500.

The video data may also be encoded by a large scale integrated circuit (LSI) system installed in the video camera 12300, the mobile phone 12500, or the camera 12600.

The content supply system 11000 may encode content data recorded by a user using the video camera 12300, the camera 12600, the mobile phone 12500, or another imaging device, e.g., content recorded during a concert, and transmit the encoded content data to the streaming server 11300. The streaming server 11300 may transmit the encoded content data in a type of a streaming content to other clients that request the content data.

The clients are devices capable of decoding the encoded content data, e.g., the computer 12100, the PDA 12200, the video camera 12300, or the mobile phone 12500. Thus, the content supply system 11000 allows the clients to receive and reproduce the encoded content data. Also, the content supply system 11000 allows the clients to receive the encoded content data and decode and reproduce the encoded content data in real time, thereby enabling personal broadcasting.

Encoding and decoding operations of the plurality of independent devices included in the content supply system 11000 may be similar to those of a video encoding apparatus and a video decoding apparatus according to an embodiment of the present invention.

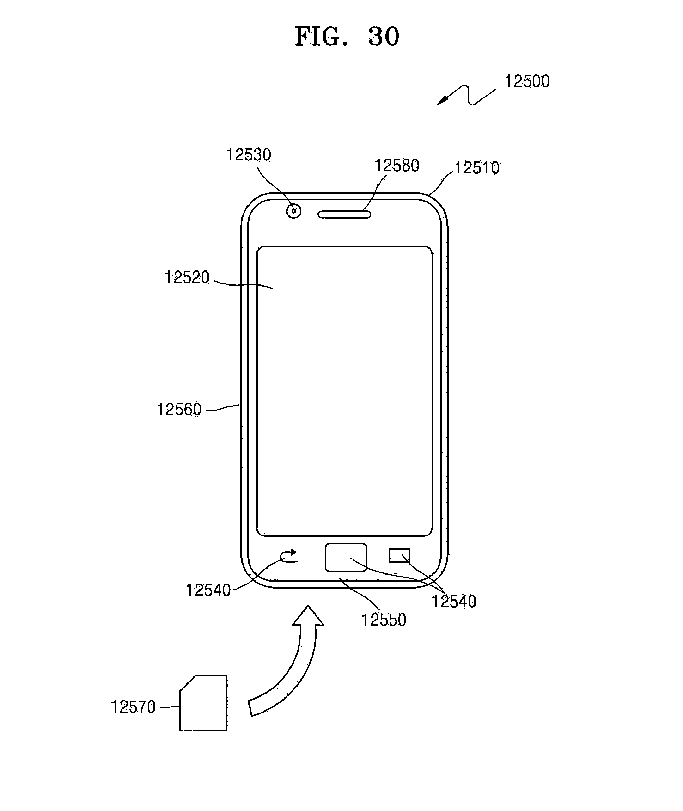

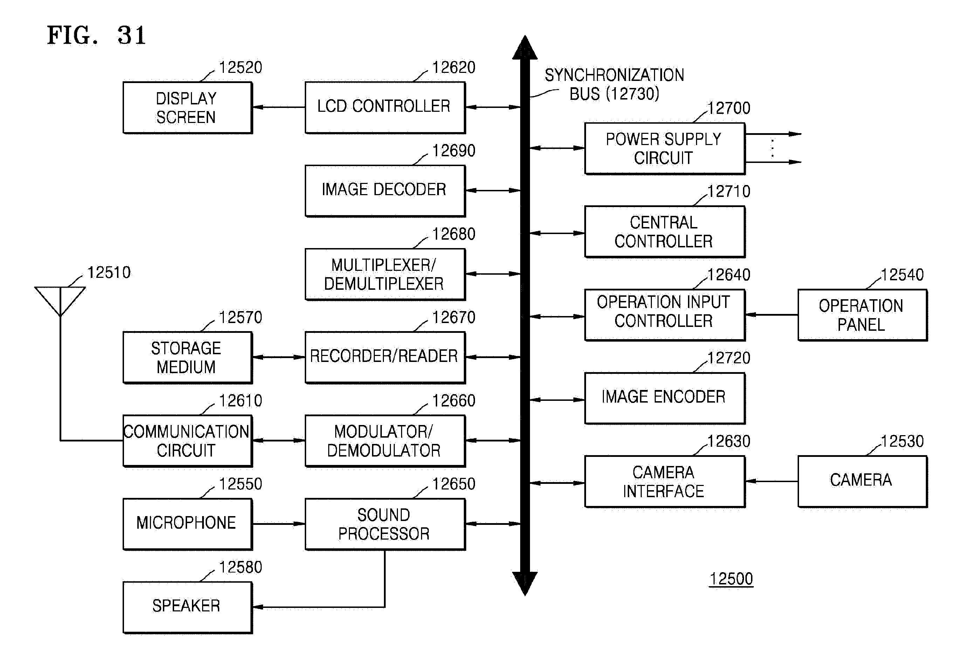

The mobile phone 12500 included in the content supply system 11000 according to an embodiment of the present invention will now be described in greater detail with referring to FIGS. 30 and 31.

FIG. 30 illustrates an external structure of the mobile phone 12500 to which a video encoding method and a video decoding method are applied, according to an embodiment of the present invention. The mobile phone 12500 may be a smart phone, the functions of which are not limited and a large number of the functions of which may be changed or expanded.

The mobile phone 12500 includes an internal antenna 12510 via which a radio-frequency (RF) signal may be exchanged with the wireless base station 12000 of FIG. 21, and includes a display screen 12520 for displaying images captured by a camera 12530 or images that are received via the antenna 12510 and decoded, e.g., a liquid crystal display (LCD) or an organic light-emitting diode (OLED) screen. The mobile phone 12500 includes an operation panel 12540 including a control button and a touch panel. If the display screen 12520 is a touch screen, the operation panel 12540 further includes a touch sensing panel of the display screen 12520. The mobile phone 12500 includes a speaker 12580 for outputting voice and sound or another type of sound output unit, and a microphone 12550 for inputting voice and sound or another type sound input unit. The mobile phone 12500 further includes the camera 12530, such as a charge-coupled device (CCD) camera, to capture video and still images. The mobile phone 12500 may further include a storage medium 12570 for storing encoded/decoded data, e.g., video or still images captured by the camera 12530, received via email, or obtained according to various ways; and a slot 12560 via which the storage medium 12570 is loaded into the mobile phone 12500. The storage medium 12570 may be a flash memory, e.g., a secure digital (SD) card or an electrically erasable and programmable read only memory (EEPROM) included in a plastic case.

FIG. 31 illustrates an internal structure of the mobile phone 12500, according to an embodiment of the present invention. To systemically control parts of the mobile phone 12500 including the display screen 12520 and the operation panel 12540, a power supply circuit 12700, an operation input controller 12640, an image encoding unit 12720, a camera interface 12630, an LCD controller 12620, an image decoding unit 12690, a multiplexer/demultiplexer 12680, a recording/reading unit 12670, a modulation/demodulation unit 12660, and a sound processor 12650 are connected to a central controller 12710 via a synchronization bus 12730.

If a user operates a power button and sets from a 'power off' state to a power on' state, the power supply circuit 12700 supplies power to all the parts of the mobile phone 12500 from a battery pack, thereby setting the mobile phone 12500 in an operation mode.

The central controller 12710 includes a CPU, a ROM, and a RAM.

While the mobile phone 12500 transmits communication data to the outside, a digital signal is generated by the mobile phone 12500 under control of the central controller 12710. For example, the sound processor 12650 may generate a digital sound signal, the image encoding unit 12720 may generate a digital image signal, and text data of a message may be generated via the operation panel 12540 and the operation input controller 12640. When a digital signal is transmitted to the modulation/demodulation unit 12660 under control of the central controller 12710, the modulation/demodulation unit 12660 modulates a frequency band of the digital signal, and a communication circuit 12610 performs digital-to-analog conversion (DAC) and frequency conversion on the frequency band-modulated digital sound signal. A transmission signal output from the communication circuit 12610 may be transmitted to a voice communication base station or the wireless base station 12000 via the antenna 12510.

For example, when the mobile phone 12500 is in a conversation mode, a sound signal obtained via the microphone 12550 is transformed into a digital sound signal by the sound processor 12650, under control of the central controller 12710. The digital sound signal may be transformed into a transformation signal via the modulation/demodulation unit 12660 and the communication circuit 12610, and may be transmitted via the antenna 12510.

When a text message, e.g., email, is transmitted in a data communication mode, text data of the text message is input via the operation panel 12540 and is transmitted to the central controller 12610 via the operation input controller 12640. Under control of the central controller 12610, the text data is transformed into a transmission signal via the modulation/demodulation unit 12660 and the communication circuit 12610 and is transmitted to the wireless base station 12000 via the antenna 12510.

To transmit image data in the data communication mode, image data captured by the camera 12530 is provided to the image encoding unit 12720 via the camera interface 12630. The captured image data may be directly displayed on the display screen 12520 via the camera interface 12630 and the LCD controller 12620.

A structure of the image encoding unit 12720 may correspond to that of the video encoding apparatus 100 described above. The image encoding unit 12720 may transform the image data received from the camera 12530 into compressed and encoded image data according to the video encoding method described above, and then output the encoded image data to the multiplexer/demultiplexer 12680. During a recording operation of the camera 12530, a sound signal obtained by the microphone 12550 of the mobile phone 12500 may be transformed into digital sound data via the sound processor 12650, and the digital sound data may be transmitted to the multiplexer/demultiplexer 12680.

The multiplexer/demultiplexer 12680 multiplexes the encoded image data received from the image encoding unit 12720, together with the sound data received from the sound processor 12650. A result of multiplexing the data may be transformed into a transmission signal via the modulation/demodulation unit 12660 and the communication circuit 12610, and may then be transmitted via the antenna 12510.

While the mobile phone 12500 receives communication data from the outside, frequency recovery and ADC are performed on a signal received via the antenna 12510 to transform the signal into a digital signal. The modulation/demodulation unit 12660 modulates a frequency band of the digital signal. The frequency-band modulated digital signal is transmitted to the video decoding unit 12690, the sound processor 12650, or the LCD controller 12620, according to the type of the digital signal.

In the conversation mode, the mobile phone 12500 amplifies a signal received via the antenna 12510, and obtains a digital sound signal by performing frequency conversion and ADC on the amplified signal. A received digital sound signal is transformed into an analog sound signal via the modulation/demodulation unit 12660 and the sound processor 12650, and the analog sound signal is output via the speaker 12580, under control of the central controller 12710.

When in the data communication mode, data of a video file accessed at an Internet website is received, a signal received from the wireless base station 12000 via the antenna 12510 is output as multiplexed data via the modulation/demodulation unit 12660, and the multiplexed data is transmitted to the multiplexer/demultiplexer 12680.

To decode the multiplexed data received via the antenna 12510, the multiplexer/demultiplexer 12680 demultiplexes the multiplexed data into an encoded video data stream and an encoded audio data stream. Via the synchronization bus 12730, the encoded video data stream and the encoded audio data stream are provided to the video decoding unit 12690 and the sound processor 12650, respectively.

A structure of the image decoding unit 12690 may correspond to that of the video decoding apparatus 200 described above. The image decoding unit 12690 may decode the encoded video data to obtain restored video data and provide the restored video data to the display screen 12520 via the LCD controller 12620, according to a video decoding method employed by the video decoding apparatus 200 or the image decoder 500 described above.

Thus, the data of the video file accessed at the Internet website may be displayed on the display screen 12520. At the same time, the sound processor 12650 may transform audio data into an analog sound signal, and provide the analog sound signal to the speaker 12580. Thus, audio data contained in the video file accessed at the Internet website may also be reproduced via the speaker 12580.

The mobile phone 12500 or another type of communication terminal may be a transceiving terminal including both a video encoding apparatus and a video decoding apparatus according to an embodiment of the present invention, may be a transceiving terminal including only the video encoding apparatus, or may be a transceiving terminal including only the video decoding apparatus.

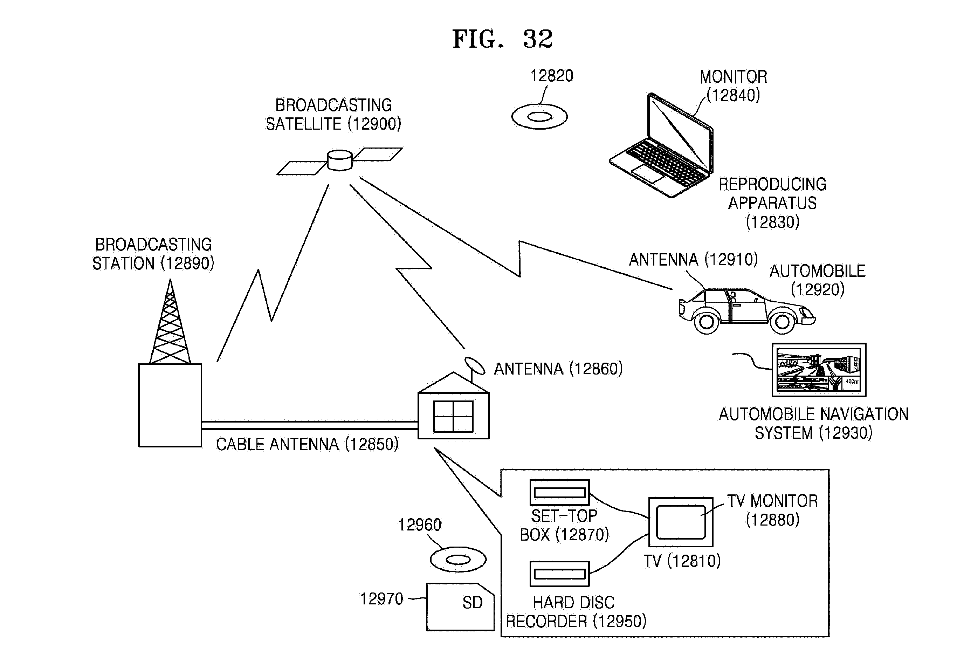

A communication system according to the present invention is not limited to the communication system described above with reference to FIG. 30. For example, FIG. 32 illustrates a digital broadcasting system employing a communication system, according to an embodiment of the present invention. The digital broadcasting system of FIG. 32 may receive a digital broadcast transmitted via a satellite or a terrestrial network by using a video encoding apparatus and a video decoding apparatus according to an embodiment of the present invention.

Specifically, a broadcasting station 12890 transmits a video data stream to a communication satellite or a broadcasting satellite 12900 by using radio waves. The broadcasting satellite 12900 transmits a broadcast signal, and the broadcast signal is transmitted to a satellite broadcast receiver via a household antenna 12860. In every house, an encoded video stream may be decoded and reproduced by a TV receiver 12810, a set-top box 12870, or another device.

When a video decoding apparatus according to an embodiment of the present invention is implemented in a reproducing apparatus 12830, the reproducing apparatus 12830 may parse and decode an encoded video stream recorded on a storage medium 12820, such as a disc or a memory card to restore digital signals. Thus, the restored video signal may be reproduced, for example, on a monitor 12840.

In the set-top box 12870 connected to the antenna 12860 for a satellite/terrestrial broadcast or a cable antenna 12850 for receiving a cable television (TV) broadcast, a video decoding apparatus according to an embodiment of the present invention may be installed. Data output from the set-top box 12870 may also be reproduced on a TV monitor 12880.

As another example, a video decoding apparatus according to an embodiment of the present invention may be installed in the TV receiver 12810 instead of the set-top box 12870.

An automobile 12920 that has an appropriate antenna 12910 may receive a signal transmitted from the satellite 12900 or the wireless base station 11700. A decoded video may be reproduced on a display screen of an automobile navigation system 12930 installed in the automobile 12920.

A video signal may be encoded by a video encoding apparatus according to an embodiment of the present invention and may then be stored in a storage medium. Specifically, an image signal may be stored in a DVD disc 12960 by a DVD recorder or may be stored in a hard disc by a hard disc recorder 12950. As another example, the video signal may be stored in an SD card 12970. If the hard disc recorder 12950 includes a video decoding apparatus according to an embodiment of the present invention, a video signal recorded on the DVD disc 12960, the SD card 12970, or another storage medium may be reproduced on the TV monitor 12880.

The automobile navigation system 12930 may not include the camera 12530, the camera interface 12630, and the image encoding unit 12720 of FIG. 31. For example, the computer 12100 and the TV receiver 12810 may not be included in the camera 12530, the camera interface 12630, and the image encoding unit 12720 of FIG. 31.

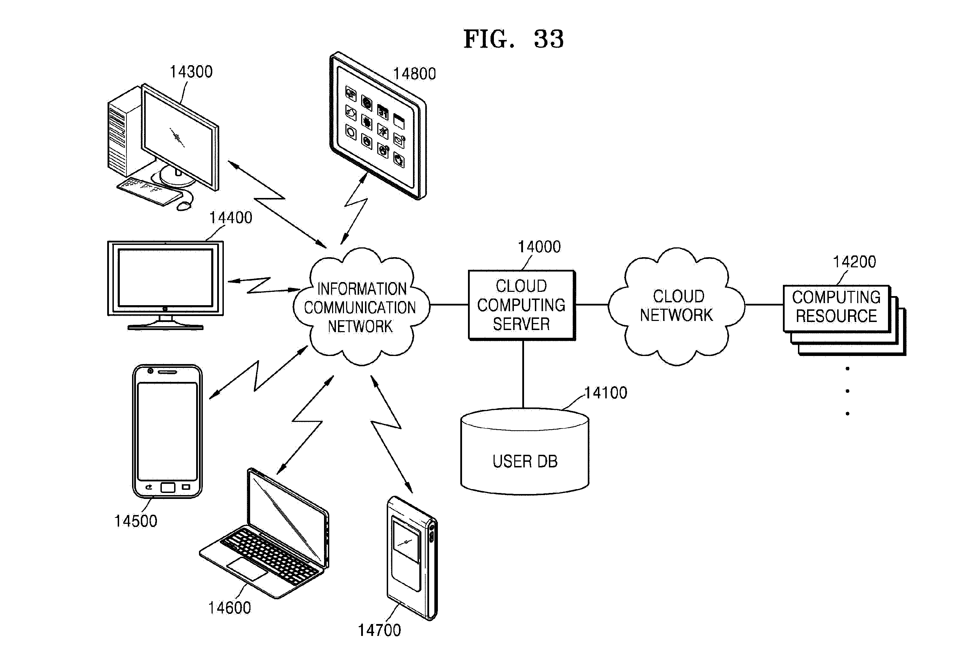

FIG. 33 is a diagram illustrating a network structure of a cloud computing system using a video encoding apparatus and a video decoding apparatus, according to an embodiment of the present invention.

The cloud computing system may include a cloud computing server 14000, a user database (DB) 14100, a plurality of computing resources 14200, and a user terminal.

The cloud computing system provides an on-demand outsourcing service of the plurality of computing resources 14200 via a data communication network, e.g., the Internet, in response to a request from the user terminal. Under a cloud computing environment, a service provider provides users with desired services by combining computing resources at data centers located at physically different locations by using virtualization technology. A service user does not have to install computing resources, e.g., an application, a storage, an operating system (OS), and security, into his/her own terminal in order to use them, but may select and use desired services from among services in a virtual space generated through the virtualization technology, at a desired point in time.

A user terminal of a specified service user is connected to the cloud computing server 14000 via a data communication network including the Internet and a mobile telecommunication network. User terminals may be provided cloud computing services, and particularly video reproduction services, from the cloud computing server 14000. The user terminals may be various types of electronic devices capable of being connected to the Internet, e.g., a desktop PC 14300, a smart TV 14400, a smart phone 14500, a notebook computer 14600, a portable multimedia player (PMP) 14700, a tablet PC 14800, and the like.

The cloud computing server 14000 may combine the plurality of computing resources 14200 distributed in a cloud network and provide user terminals with a result of combining. The plurality of computing resources 14200 may include various data services, and may include data uploaded from user terminals. As described above, the cloud computing server 14000 may provide user terminals with desired services by combining video database distributed in different regions according to the virtualization technology.

User information about users who have subscribed for a cloud computing service is stored in the user DB 14100. The user information may include logging information, addresses, names, and personal credit information of the users. The user information may further include indexes of videos. Here, the indexes may include a list of videos that have already been reproduced, a list of videos that are being reproduced, a pausing point of a video that was being reproduced, and the like.

Information about a video stored in the user DB 14100 may be shared between user devices. For example, when a video service is provided to the notebook computer 14600 in response to a request from the notebook computer 14600, a reproduction history of the video service is stored in the user DB 14100. When a request to reproduce this video service is received from the smart phone 14500, the cloud computing server 14000 searches for and reproduces this video service, based on the user DB 14100. When the smart phone 14500 receives a video data stream from the cloud computing server 14000, a process of reproducing video by decoding the video data stream is similar to an operation of the mobile phone 12500 described above with reference to FIG. 30.

The cloud computing server 14000 may refer to a reproduction history of a desired video service, stored in the user DB 14100. For example, the cloud computing server 14000 receives a request to reproduce a video stored in the user DB 14100, from a user terminal. If this video was being reproduced, then a method of streaming this video, performed by the cloud computing server 14000, may vary according to the request from the user terminal, i.e., according to whether the video will be reproduced, starting from a start thereof or a pausing point thereof. For example, if the user terminal requests to reproduce the video, starting from the start thereof, the cloud computing server 14000 transmits streaming data of the video starting from a first frame thereof to the user terminal. If the user terminal requests to reproduce the video, starting from the pausing point thereof, the cloud computing server 14000 transmits streaming data of the video starting from a frame corresponding to the pausing point, to the user terminal.

In this case, the user terminal may include a video decoding apparatus as described above with reference to FIGS. 1A to 26. As another example, the user terminal may include a video encoding apparatus as described above with reference to FIGS. 1A to 26. Alternatively, the user terminal may include both the video decoding apparatus and the video encoding apparatus as described above with reference to FIGS. 1A to 26.

Various applications of a video encoding method, a video decoding method, a video encoding apparatus, and a video decoding apparatus according to embodiments of the present invention described above with reference to FIGS. 1A to 26 have been described above with reference to FIGS. 27 to 33. However, methods of storing the video encoding method and the video decoding method in a storage medium or methods of implementing the video encoding apparatus and the video decoding apparatus in a device, according to various embodiments of the present invention, are not limited to the embodiments described above with reference to FIGS. 27 to 33.

While this invention has been particularly shown and described with reference to embodiments thereof, it will be understood by those of ordinary skill in the art that various changes in form and details may be made therein without departing from the spirit and scope of the invention as defined by the appended claims. The embodiments should be considered in a descriptive sense only and not for purposes of limitation. Therefore, the scope of the invention is defined not by the detailed description of the invention but by the appended claims, and all differences within the scope will be construed as being included in the present invention.

**Claims**

1. A prediction encoding method of encoding a multi-view video, the prediction encoding method comprising:

determining a reference picture set including at least one short term reconstructed picture having a different reproduction order from that of a current picture and a reference picture set including at least one long term reconstructed picture, among same view reconstructed pictures that are reconstructed prior to the current picture, and determining a reference picture set including at least one short term reconstructed picture having the same reproduction order as that of the current picture, among different view reconstructed pictures that are reconstructed prior to the current picture;

determining at least one reference list between a first reference list including at least one reconstructed picture having a reproduction order earlier than that of the current picture and at least one reconstructed picture having the same reproduction order as that of the current picture and having a smaller view identifier (VID) than that of the current picture, among the determined reference picture sets, and a second reference list including at least one reconstructed picture having the same reproduction order as that of the current picture and having a later reproduction order than that of the current picture and at least one reconstructed picture having the same reproduction order as that of the current picture and having a greater VID than that of the current picture;

determining at least one reference picture and reference block for a current block of the current picture by using the determined at least one reference list; and

performing at least one selected from inter-prediction and inter-view prediction for the current block by using the reference block.

2. The prediction encoding method of encoding the multi-view video of claim 1, wherein the determining of the reference picture set comprises:

determining a reference picture set including at least one non-reference reconstructed picture having a different reproduction order from that of the current picture, among same view reconstructed pictures that are reconstructed prior to the current picture; and

determining a reference picture set including at least one non-reference reconstructed picture having the same reproduction order as that of the current picture, among different view reconstructed pictures that are reconstructed prior to the current picture.

3. The prediction encoding method of encoding the multi-view video of claim 1, wherein the determining of the reference picture set comprises:

determining whether to use one of the reference picture sets determined for the current picture, in a current slice;

if it is determined that one of the reference picture sets determined for the current picture is used, selecting an index from the reference picture sets; and

if it is determined that one of the reference picture sets determined for the current picture is not used, determining a reference picture set for the current slice.

4. The prediction encoding method of encoding the multi-view video of claim 3, wherein the determining of the reference picture set for the current slice:

determining a first number of pictures having smaller VIDs than that of a current view and a second number of pictures having greater VIDs than that of the current view; and

determining a differential value between the VIDs of the pictures having smaller VIDs than that of the current view and a differential value between the VIDs of the pictures having greater VIDs than that of the current view.

5. The prediction encoding method of encoding the multi-view video of claim 1, wherein the determining of the at least one reference list comprises:

determining whether to optionally change a reference order of reference indices of the determined at least one reference list, in a current slice; and

when it is determined that the reference order is optionally changed in the current slice, optionally change a reference order of reference indices of at least one reference list for the current slice that belongs to the current picture.

**6.** The prediction encoding method of encoding the multi-view video of claim 1, wherein the performing of the at least one selected from inter-prediction and inter-view prediction comprises:

when inter-prediction is performed, determining a reference picture and a reference block from at least one selected from the at least one reconstructed picture having the reproduction order earlier than that of the current picture included in the first reference list and the at least one reconstructed picture having the later reproduction order than that of the current picture included in the second reference list; performing inter-prediction on the current block by using the determined reference block; and determining first residue data of the current block generated by performing inter-prediction, a first motion vector indicating the determined reference block, and a first reference index indicating the determined reference picture, and

when inter-view prediction is performed, determining a reference picture and a reference block from at least one selected from the at least one reconstructed picture having the smaller VID than that of the current picture included in the first reference list and the at least one reconstructed picture having the greater VID than that of the current picture included in the second reference list; performing inter-view prediction on the current block by using the determined reference block; and determining second residue data of the current block generated by performing inter-prediction, a second motion vector indicating the determined reference block, and a second reference index indicating the determined reference picture.

**7.** A prediction decoding method of decoding a multi-view video, the prediction decoding method comprising:

determining a reference picture set including at least one short term reconstructed picture having a different reproduction order from that of a current picture and a reference picture set including at least one long term reconstructed picture, among same view reconstructed pictures that are reconstructed prior to the current picture, and determining a reference picture set including at least one short term reconstructed picture having the same reproduction order as that of the current picture, among different view reconstructed pictures that are reconstructed prior to the current picture;

determining at least one reference list between a first reference list including at least one reconstructed picture having a reproduction order earlier than that of the current picture and at least one reconstructed picture having the same reproduction order as that of the current picture and having a smaller VID than that of the current picture, among the determined reference picture sets, and a second reference list including at least one reconstructed picture having the same reproduction order as that of the current picture and having a later reproduction order than that of the current picture and at least one reconstructed picture having the same reproduction order as that of the current picture and having a greater VID than that of the current picture;

determining at least one reference picture and reference block for a current block of the current picture by using the determined at least one reference list; and

performing at least one selected from motion compensation and disparity compensation for the current block by using the reference block.

**8.** The prediction decoding method of decoding the multi-view video of claim 7, wherein the determining of the reference picture set comprises:

determining a reference picture set including at least one non-reference reconstructed picture having a different reproduction order from that of the current picture, among same view reconstructed pictures that are reconstructed prior to the current picture; and

determining a reference picture set including at least one non-reference reconstructed picture having the same reproduction order as that of the current picture, among different view reconstructed pictures that are reconstructed prior to the current picture.

**9.** The prediction decoding method of decoding the multi-view video of claim 7, wherein the determining of the reference picture set comprises:

determining whether to use one of the reference picture sets determined for the current picture, in a current slice; if it is determined that one of the reference picture sets determined for the current picture is used, selecting an index from the reference picture sets; and

if it is determined that one of the reference picture sets determined for the current picture is not used, determining a reference picture set for the current slice.

**10.** The prediction decoding method of decoding the multi-view video of claim 9, wherein the determining of the reference picture set for the current slice:

determining a first number of pictures having smaller VIDs than that of a current view and a second number of pictures having greater VIDs than that of the current view; and

determining a differential value between the VIDs of the pictures having smaller VIDs than that of the current view and a differential value between the VIDs of the pictures having greater VIDs than that of the current view.

**11.** The prediction decoding method of decoding the multi-view video of claim 7, wherein the determining of the at least one reference list comprises:

determining whether to optionally change a reference order of reference indices of the determined at least one reference list, in a current slice; and

when it is determined that the reference order is optionally changed in the current slice, optionally change a reference order of reference indices of at least one reference list for the current slice that belongs to the current picture.

**12.** The prediction decoding method of decoding the multi-view video of claim 7, wherein the performing of the at least one selected from inter-prediction and inter-view prediction comprises:

receiving a reference index for a current block of the current picture, residue data, and a motion vector or a disparity vector;

determining a reference picture indicated by the reference index from at least one selected from the at least one reconstructed picture having the reproduction order earlier than that of the current picture included in the first reference list and the at least one reconstructed picture having the later reproduction order than that of the current picture included in the second reference list;

determining a reference block indicated by the motion vector of the current block or the disparity vector from the determined reference picture; and

compensating for the residue data on the determined reference block.

**13.** A prediction encoding apparatus for encoding a multi-view video, the prediction encoding apparatus comprising:

a reference picture set determiner for determining a reference picture set including at least one short term reconstructed picture having a different reproduction order from that of a current picture and a reference picture set including at least one long term reconstructed picture, among same view reconstructed pictures that are reconstructed prior to the current picture, and determining a reference picture set including at least one short term reconstructed picture having the same reproduction order as that of the current picture, among different view reconstructed pictures that are reconstructed prior to the current picture;

a reference list determiner for determining at least one reference list between a first reference list including at least one reconstructed picture having a reproduction order earlier than that of the current picture and at least one reconstructed picture having the same reproduction order as that of the current picture and having a VID than that of the current picture, among the determined reference picture sets, and a second reference list including at least one reconstructed picture having the same reproduction order as that of the current picture and having a later reproduction order than that of the current picture and at least one reconstructed picture having the same reproduction order as that of the current picture and having a greater VID than that of the current picture; and

a predictor for determining at least one reference picture and reference block for a current block of the current picture by using the determined at least one reference list, and performing at least one selected from inter-prediction and inter-view prediction for the current block by using the reference block.

**14.** A prediction decoding apparatus for decoding a multi-view video, the prediction decoding apparatus comprising:

a reference picture set determiner for determining a reference picture set including at least one short term reconstructed picture having a different reproduction order from that of a current picture and a reference picture set including at least one long term reconstructed picture, among same view reconstructed pictures that are reconstructed prior to the current picture, and determining a reference picture set including at least one short term reconstructed picture having the same reproduction order as that of the current picture, among different view reconstructed pictures that are reconstructed prior to the current picture;

a reference list determiner for determining at least one reference list between a first reference list including at least one reconstructed picture having a reproduction order earlier than that of the current picture and at least one reconstructed picture having the same reproduction order as that of the current picture and having a smaller VID than that of the current picture, among the determined reference picture sets, and a second reference list including at least one reconstructed picture having the same reproduction order as that of the current picture and having a later reproduction order than that of the current picture and at least one reconstructed picture having the same reproduction order as that of the current picture and having a greater VID than that of the current picture; and

a compensator for determining at least one reference picture and reference block for a current block of the current picture by using the determined at least one reference list, and performing at least one selected from motion compensation and disparity compensation for the current block by using the reference block.

**15.** A computer readable recording medium having recorded thereon a program for executing the multi-view video prediction restoring method of one of claims 1 and 7.

# FIG. 1A

10

| REFERENCE PICTURE SET DETERMINER | REFERENCE LIST DETERMINER | PREDICTOR |

# FIG. 1B

START

DETERMINE REFERENCE PICTURE SET INCLUDING SHORT TERM AND LONG TERM SAME VIEW RECONSTRUCTED PICTURES AND REFERENCE PICTURE SET INCLUDING SHORT TERM DIFFERENT VIEW RECONSTRUCTED PICTURE AMONG RECONSTRUCTED PICTURES —— 11

DETERMINE AT LEAST ONE REFERENCE LIST BETWEEN FIRST REFERENCE LIST INCLUDING RECONSTRUCTED IMAGE HAVING SAME VIEW AS THAT OF CURRENT IMAGE AND PRECEDING THE CURRENT IMAGE AND RECONSTRUCTED IMAGE HAVING SAME REPRODUCTION ORDER AS THAT OF THE CURRENT IMAGEE AND HAVING SMALLER VID THAN THAT OF THE CURRENT IMAGE, AND SECOND REFERENCE LIST INCLUDING RECONSTRUCTED IMAGE HAVING SAME VIEW AS THAT OF CURRENT IMAGE AND PRECEDING THE CURRENT IMAGE AND RECONSTRUCTED IMAGE HAVING SAME REPRODUCTION ORDER AS THAT OF THE CURRENT IMAGE AND HAVING GREATER VID THAN THAT OF THE CURRENT IMAGE —— 13

DETERMINE REFERENCE PICTURE AND REFERENCE BLOCK FOR CURRENT BLOCK BY USING THE DETERMINED AT LEAST ONE REFERENCE LIST —— 15

PERFORM AT LEAST ONE SELECTED FROM INTER-PREDICTION AND INTER-VIEW PREDICTION FOR THE CURRENT BLOCK BY USING THE REFERENCE BLOCK —— 17

END

# FIG. 2A

REFERENCE
PICTURE SET
22

REFERENCE
LIST DETERMINER
24

COMPENSATOR
26

20

# FIG. 2B

```
START
```

DETERMINE REFERENCE PICTURE SET INCLUDING SHORT TERM AND LONG TERM SAME VIEW RECONSTRUCTED PICTURES LONG TERM SAME VIEW RECONSTRUCTED PICTURES AND REFERENCE PICTURE SET INCLUDING SHORT TERM DIFFERENT VIEW RECONSTRUCTED PICTURE AMONG RECONSTRUCTED PICTURES — 21

DETERMINE AT LEAST ONE REFERENCE LIST BETWEEN FIRST REFERENCE LIST INCLUDING RECONSTRUCTED IMAGE HAVING SAME VIEW AS THAT OF CURRENT IMAGE AND PRECEDING THE CURRENT IMAGE AND RECONSTRUCTED IMAGE HAVING SAME REPRODUCTION ORDER AS THAT OF THE CURRENT IMAGEE AND HAVING SMALLER VID THAN THAT OF THE CURRENT IMAGE, AND SECOND REFERENCE LIST INCLUDING RECONSTRUCTED IMAGE HAVING SAME VIEW AS THAT OF CURRENT IMAGE AND PRECEDING THE CURRENT IMAGE AND RECONSTRUCTED IMAGE HAVING SAME REPRODUCTION ORDER AS THAT OF THE CURRENT IMAGE AND HAVING GREATER VID THAN THAT OF THE CURRENT IMAGE — 23

DETERMINE REFERENCE PICTURE AND REFERENCE BLOCK FOR CURRENT BLOCK BY USING THE DETERMINED AT LEAST ONE REFERENCE LIST — 25

PERFORM AT LEAST ONE SELECTED FROM MOTION COMPENSATION AND DISPARITY COMPENSATION FOR THE CURRENT BLOCK BY USING THE REFERENCE BLOCK — 27

```
END
```

# FIG. 3

# FIG. 4

DPB (VID = 5, POC = 18) — 40

| VID 5 POC 16 | VID 5 POC 17 | VID 5 POC 19 | VID 1 POC 18 | VID 3 POC 18 | VID 7 POC 18 |
|---|---|---|---|---|---|
| 33 | 32 | 34 | 36 | 35 | 37 |

| | 32 | 33 | 34 | 35 | 36 | 37 |
|---|---|---|---|---|---|---|
| 41 — BASE L0 LIST | VID 5 POC 17 | VID 5 POC 16 | VID 5 POC 19 | VID 3 POC 18 | VID 1 POC 18 | VID 7 POC 18 |

| | | | | | | |
|---|---|---|---|---|---|---|
| 45 — BASE L1 LIST | VID 5 POC 19 | VID 5 POC 17 | VID 5 POC 16 | VID 7 POC 18 | VID 3 POC 18 | VID 1 POC 18 |
| | 34 | 32 | 33 | 37 | 35 | 36 |

# FIG. 5A

50

| 51 → | Idx | 0 | 1 | 2 | 3 | 4 | 5 |
|---|---|---|---|---|---|---|---|
| 55 → | List_entry_l0 | 0 | 3 | 1 | 2 | 4 | 5 |

# FIG. 5B

| | 32 | 33 | 34 | 35 | 36 | 37 |
|---|---|---|---|---|---|---|
| 41 — BASE L0 LIST | VID 5 POC 17 | VID 5 POC 16 | VID 5 POC 19 | VID 3 POC 18 | VID 1 POC 18 | VID 7 POC 18 |

| | | | | | | |
|---|---|---|---|---|---|---|
| 59 — MODIFICATION L0 LIST | VID 5 POC 17 | VID 5 POC 18 | VID 5 POC 16 | VID 7 POC 19 | VID 1 POC 18 | VID 7 POC 18 |
| | 32 | 35 | 33 | 34 | 36 | 37 |

# FIG. 6A

65

| sequence_parameter_set_extension() { |
|---|
| ......... |
| num_interview_ref_pic_sets |
| for( i = 0; i < num_interview_ref_pic_sets; i++) |
| interview_ref_pic_set( i ) |
| ......... |
| } |

66 — num_interview_ref_pic_sets

67 — interview_ref_pic_set( i )

# FIG. 6B

60

| pic_parameter_set_3D_rbsp( ) { |
|---|
| pic_parameter_set_3D_rbsp( ) { |
| seq_parameter_set_id |
| sign_data_hiding_flag |
| if( sign_data_hiding _flag ) |
| sign_hiding_threshold |
| cabac_init_present_flag |
| num_ref_idx_l0_default_active_minus1 |
| num_interview_ref_idx_l0_default_active_minus1 |
| num_ref_idx_l1_default_active_minus1 |
| num_interview_ref_idx_l1_default_active_minus1 |
| pic_init_qp_minus26 |
| constrained_intra_pred_flag |
| enable_temporal_mvp_flag |
| slice_granularity |

61 — num_ref_idx_l0_default_active_minus1

62 — num_interview_ref_idx_l0_default_active_minus1

63 — num_ref_idx_l1_default_active_minus1

64 — num_interview_ref_idx_l1_default_active_minus1

## FIG. 7

70

| slice_header ( ) { |
|---|
| ............. |
| short_term_ref_pic_set_sps_flag ——87 |
| if( !short_term_ref_pic_set_sps_flag ) |
| short_term_ref_pic_set( num_short_term_ref_pic_sets ) |
| else 80 |
| short_term_ref_pic_set_idx ——88 |
| interview_ref_pic_set_sps_flag——97 |
| if( ! interview_ref_pic_set_sps_flag ) |
| interview_ref_pic_set( num_interview_ref_pic_sets ) |
| else 67 |
| interview_ref_pic_set_idx——98 |
| if( long_term_ref_pics_present_flag ) { |
| num_long_term_pics ——89 |
| for( i = 0; i < num_long_term_pics; i++ ) { |
| delta_poc_lsb_lt[ i ] |
| delta_poc_msb_present_flag[ i ] |
| if( delta_poc_msb_present_flag[ i ] ) |
| delta_poc_msb_cycle_lt_minus1[ i ] |
| used_by_curr_pic_lt_flag[ i ] |
| } |
| } |
| ............. |
| if( slice_type = = P  \|  \| slice_type = = B ) { |
| num_ref_idx_active_override_flag |
| if( num_ref_idx_active_override_flag ) { |
| num_ref_idx_l0_active_minus1 |
| if( nal_unit_type = = CODED_SLICE_EXTENSION ) |
| num_interview_ref_idx_l0_active_minus1 |
| if( slice_type = = B ) { |
| num_ref_idx_l1_active_minus1 |
| if( nal_unit_type = = CODED_SLICE_EXTENSION ) |
| num_interview_ref_idx_l1_active_minus1 |
| } |
| } |
| } |
| if( lists_modification_present_flag ) { |
| if( nal_unit_type = = CODED_SLICE_EXTENSION ) { |
| ref_pic_list_3D_modification( ) |
| ref_pic_list_3D_combination( ) |
| } |
| else { |
| ref_pic_list_modification( ) |
| ref_pic_list_combination( ) |
| } |
| ............. |

90
91
92
71
72
73
74
75
76
77

## FIG. 8A

```
interview_ref_pic_set( idx ) {
      num_negative_interview_pics
      num_positive_ interview_pics
      for( i = 0; i < num_negative_interview_pics; i++ ) {
            delta_view_idx _s0_minus1[ i ]
      }
      for( i = 0; i < num_positive_ interview_pics; i++ ) {
            delta_view_idx_s1_minus1[ i ]
      }
}
```

## FIG. 8B

```
ref_pic_list_3D_modification( ) {
      if( slice_type  = = P  | |  slice_type  = = B ) {
            ref_pic_list_modification_flag_l0
            if( ref_pic_list_modification_flag_l0 )
                  for( i = 0; i <= num_total_ref_idx_l0_active_minus1;  i++ )
                        list_entry_l0[ i ]
      }
      if( slice_type  = = B ) {
            ref_pic_list_modification_flag_l1
            if( ref_pic_list_modification_flag_l1 )
                  for( i = 0; i <= num_total ref_idx_l1_active_minus1;  i++ )
                        list_entry_l1[ i ]
      }
}
```

# FIG. 9

|  | 32 | 33 | 34 | 35 | 36 | 37 |
|---|---|---|---|---|---|---|
| 41 BASE L0 LIST | VID 5 POC 17 | VID 5 POC 16 | VID 5 POC 19 | VID 3 POC 18 | VID 1 POC 18 | VID 7 POC 18 |
| 45 BASE L1 LIST | VID 5 POC 19 | VID 5 POC 17 | VID 5 POC 16 | VID 7 POC 18 | VID 3 POC 18 | VID 1 POC 18 |
|  | 34 | 32 | 33 | 37 | 35 | 36 |

| 90 BASE LC LIST | VID 5 POC 17 | VID 5 POC 19 | VID 5 POC 16 | VID 5 POC 17 | VID 5 POC 19 | VID 5 POC 16 | VID 3 POC 18 | VID 7 POC 18 |
|---|---|---|---|---|---|---|---|---|
|  | 32 | 34 | 33 | 32 | 34 | 33 | 35 | 37 |

# FIG. 10

| Idx | 0 | 1 | 2 | 3 | 4 | 5 |
|---|---|---|---|---|---|---|
| 103 — pic_from_list_0_flag | 0 | 1 | 0 | 1 | 0 | 0 |
| 105 — ref_idx_list_curr | 0 | 0 | 3 | 3 | 1 | 2 |

# FIG. 11

| 111 MODIFICATION LC LIST | VID 5 POC 17 | VID 5 POC 19 | VID 3 POC 18 | VID 7 POC 18 | VID 5 POC 16 | VID 5 POC 19 |
|---|---|---|---|---|---|---|
|  | 32 | 34 | 35 | 37 | 33 | 34 |

# FIG. 12

```
                    ┌────────────┐
                42 ─┤    DPB     │
                    └─────┬──────┘
                          │
      ┌───────────────────┴┐      ┌──────────────┐      ┌──────────────┐
   10 │  MULTI-VIEW VIDEO  │   46 │  CONVERSION  │   48 │   ENTROPY    │
  ──→ │    PREDICTION      │ ───→ │  QUANTIZER   │ ───→ │   ENCODER    │ ──→
      │    ENCODING        │      │              │      │              │
      │    APPARATUS       │      └──────────────┘      └──────────────┘
      └────────────────────┘
```

121

# FIG. 13

```
   ┌──────────┐   ┌────────────┐   ┌──────────────────┐   ┌──────────┐
52 │          │54 │  INVERSE   │20 │   MULTI-VIEW     │59 │          │
─→ │ RECEIVER │─→ │QUANTIZATION│─→ │ VIDEO PREDICTION │─→ │   LOOP   │ ─→
   │          │   │  INVERSE   │   │    DECODING      │   │  FILTER  │
   │          │   │ CONVERTER  │   │   APPARATUS      │   │          │
   └──────────┘   └────────────┘   └──────────────────┘   └──────────┘
                                   ┌──────────────────┐
                                56 │       DPB        │
                                   └──────────────────┘
```

131

# FIG. 14

100

| 110 | 120 | 130 |
|---|---|---|
| MAXIMUM CODING UNIT SPLITTER | CODING UNIT DETERMINER | OUTPUT UNIT |

# FIG. 15

200

| 210 | 220 | 230 |
|---|---|---|
| RECEIVER | IMAGE DATA AND ENCODING INFORMATION EXTRACTOR | IMAGE DATA DECODER |

# FIG. 16

| | | | |
|---|---|---|---|
| 64<br>64 [ ]<br>64×64 | 64<br>32 [ ]<br>64×32 | 32<br>64 [ ]<br>32×64 | 32<br>32 [ ]<br>32×32 |
| 32<br>32 [ ]<br>32×32 | 32<br>16 [ ]<br>32×16 | 16<br>32 [ ]<br>16×32 | 16<br>16 [ ]<br>16×16 |
| 16<br>16 [ ]<br>16×16 | 16<br>8 [ ]<br>16×8 | 8<br>16 [ ]<br>8×16 | 8<br>8 [ ]<br>8×8 |
| 8<br>8 [ ]<br>8×8 | 8<br>4 [ ]<br>8×4 | 4<br>8 [ ]<br>4×8 | 4<br>4 [ ]<br>4×4 |

315

335  325

RESOLUTION:1920×1080
MAXIMUM SIZE OF CODING UNIT:64
MAXIMUM DEPTH=2

— 310

RESOLUTION:1920×1080
MAXIMUM SIZE OF CODING UNIT:64
MAXIMUM DEPTH=3

— 320

RESOLUTION:352×288
MAXIMUM SIZE OF CODING UNIT:16
MAXIMUM DEPTH=1

— 330

# FIG. 17

- 405 — CURRENT FRAME
- 410 — INTRA PREDICTOR
- 400
- 495 — REFERENCE FRAME
- 420 — MOTION ESTIMATOR
- 430 — TRANSFORMER
- 490 — OFFSET ADJUSTING UNIT
- 425 — MOTION COMPENSATOR
- 440 — QUANTIZER
- 450 — ENTROPY ENCODER
- 455 — BITSTREAM
- 480 — DEBLOCKING FILTER
- 470 — INVERSE TRANSFORMER
- 460 — INVERSE QUANTIZER

## FIG. 18

EP 2 843 946 A1

# FIG. 19

MAXIMUM HEIGHT
AND MAXIMUM
WIDTH OF
CODING UNIT=64          MAXIMUM DEPTH =3

LCU

600

PREDICTION
UNIT/
PARTITION

SCU

DEEPER CODING UNIT

64   610   64×64
64   612   64×32
32   614   32×64
32   616   32×32

32   620   32×32
32   622   32×16
16   624   16×32
16   626   16×16

16   630   16×16
16   632   16×8
8   634   8×16
8   636   8×8

8   640   8×8
8   642   8×4
4   644   4×8
4   646   4×4

# FIG. 20

CODING UNIT (710)

64

64×64

TRANSFORMATION UNIT (720)

32

32

32×32

# FIG. 21

PARTITION TYPE (800)

| 2N / 802 | 2N / 804 | N / 806 | N / 808 |
|---|---|---|---|
| 2N  CU_0  64×64 | N  0 / 1 | 2N  0 / 1 | N  0 / 1 / 2 / 3 |

PREDICTION MODE (810)

812 — INTRA MODE

814 — INTER MODE

816 — SKIP MODE

SIZE OF TRANSFORMATION UNIT (820)

822    824

INTRA

826    828

INTER

# FIG. 22

DEPTH=0

2N_0

2N_0 | CU_0
900

910

2N_0

2N_0
912

2N_0

0
1
914

N_0

2N_0 | 0 | 1
916

N_0

N_0 | 0 | 1 | 2 | 3
918

SPLIT (920)

0 | 1 | 2 | 3
930

DEPTH =1

2N_1

2N_1 | CU_1
930

940

2N_1

2N_1
942

2N_1

0
1
944

N_1

2N_1 | 0 | 1
946

N_1

N_1 | 0 | 1 | 2 | 3
948

SPLIT (950)

0 | 1 | 2 | 3
960

SPLIT (970)

DEPTH =d-1

2N_(d-1)

2N_(d-1) | CU_(d-1)
980

990

2N_(d-1)

2N_(d-1)
992

2N_(d-1)

0
1
994

N_(d-1)

2N_(d-1) | 0 | 1
996

N_(d-1)

N_(d-1) | 0 | 1 | 2 | 3
998

2N_d

2N_d
999

EP 2 843 946 A1

59

## FIG. 23

CODING UNIT (1010)

## FIG. 24

PREDICTION UNIT (1060)

FIG. 25

TRANSFORMATION UNIT (1070)

## FIG. 26

CU

1300

| 1302 | 1312 | 1314 |
| | 1316 | 1318 |
| 1304 | 1306 | |

PU

| 1322 | 1324 | 1326 | 1328 | 1332 | 1334 | 1336 | 1338 |
| 2Nx2N | 2NxN | Nx2N | NxN | 2NxnU | 2NxnD | nLx2N | nRx2N |

TU

1342
TU size flag=0

1344
TU size flag=1

TU

1352
TU size flag=0

1354
TU size flag=1

EP 2 843 946 A1

## FIG. 27

Se

Tr

DISC (26000)

## FIG. 28

26700

26800

26000

# FIG. 29

STREAMING SERVER (11300)

CAMERA (12600)

INTERNET (11100)

COMMUNICATION NETWORK (11400)

(11700)

COMPUTER (12100)

(11800)

PDA (12200)

(11900)

VIDEO CAMERA (12300)

SERVICE PROVIDER (11200)

(12000)

11000

MOBILE PHONE(12500)

EP 2 843 946 A1

# FIG. 30

12500

12530

12580

12510

12520

12560

12540

12550

12540

12570

# FIG. 31

DISPLAY SCREEN — 12520

LCD CONTROLLER — 12620

IMAGE DECODER — 12690

MULTIPLEXER/ DEMULTIPLEXER — 12680

STORAGE MEDIUM — 12570

RECORDER/READER — 12670

COMMUNICATION CIRCUIT — 12610

MODULATOR/ DEMODULATOR — 12660

MICROPHONE — 12550

SOUND PROCESSOR — 12650

SPEAKER — 12580

SYNCHRONIZATION BUS (12730)

POWER SUPPLY CIRCUIT — 12700

CENTRAL CONTROLLER — 12710

OPERATION INPUT CONTROLLER — 12640

OPERATION PANEL — 12540

IMAGE ENCODER — 12720

CAMERA INTERFACE — 12630

CAMERA — 12530

12510

12500

EP 2 843 946 A1

# FIG. 32

BROADCASTING SATELLITE (12900)

12820

MONITOR (12840)

REPRODUCING APPARATUS (12830)

BROADCASTING STATION (12890)

ANTENNA (12910)

AUTOMOBILE (12920)

ANTENNA (12860)

AUTOMOBILE NAVIGATION SYSTEM (12930)

CABLE ANTENNA (12850)

SET-TOP BOX (12870)

TV MONITOR (12880)

TV (12810)

12960

12970 — SD

HARD DISC RECORDER (12950)

EP 2 843 946 A1

FIG. 33

## INTERNATIONAL SEARCH REPORT

International application No.

**PCT/KR2013/003579**

| A. | CLASSIFICATION OF SUBJECT MATTER |
|---|---|

***H04N 7/32(2006.01)i, H04N 13/00(2006.01)i***

According to International Patent Classification (IPC) or to both national classification and IPC

| B. | FIELDS SEARCHED |
|---|---|

Minimum documentation searched (classification system followed by classification symbols)
H04N 7/32; H04N 7/24; H04N 13/00; H04N 7/26; G06T 15/00

Documentation searched other than minimum documentation to the extent that such documents are included in the fields searched
Korean Utility models and applications for Utility models: IPC as above
Japanese Utility models and applications for Utility models: IPC as above

Electronic data base consulted during the international search (name of data base and, where practicable, search terms used)
eKOMPASS (KIPO internal) & Keywords: multi-view point, image, reference, list, encoding

| C. | DOCUMENTS CONSIDERED TO BE RELEVANT | |
|---|---|---|
| Category* | Citation of document, with indication, where appropriate, of the relevant passages | Relevant to claim No. |
| A | KR 10-2012-0027194 A (LG ELECTRONICS INC.) 21 March 2012<br>See paragraphs [0028]-[0035]; claim 1; and figure 1. | 1-15 |
| A | KR 10-0941608 B1 (UNIVERSITY-INDUSTRY COOPERATION GROUP OF KYUNG HEE UNIVERSITY) 11 February 2010<br>See paragraphs [0088]-[0100]; claims 1-5; and figure 1. | 1-15 |
| A | KR 10-0902353 B1 (GWANGJU INSTITUTE OF SCIENCE AND TECHNOLOGY) 12 June 2009<br>See paragraphs [0028]-[0033]; claim 1; and figure 1. | 1-15 |
| A | KR 10-2009-0006132 A (QUALCOMM INCORPORATED) 14 January 2009<br>See paragraphs [0051]-[0052]; claim 1; and figure 4. | 1-15 |
| A | KR 10-2008-0022063 A (LG ELECTRONICS INC.) 10 March 2008<br>See paragraphs [0020]-[0027]; claim 1; and figures 1-3. | 1-15 |

☐ Further documents are listed in the continuation of Box C.      ☒ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
|---|---|
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| 27 AUGUST 2013 (27.08.2013) | **28 AUGUST 2013 (28.08.2013)** |

| Name and mailing address of the ISA/KR | Authorized officer |
|---|---|
| Korean Intellectual Property Office<br>Government Complex-Daejeon, 189 Seonsa-ro, Daejeon 302-701, Republic of Korea | |
| Facsimile No. 82-42-472-7140 | Telephone No. |

Form PCT/ISA/210 (second sheet) (July 2009)

INTERNATIONAL SEARCH REPORT
Information on patent family members

International application No.

**PCT/KR2013/003579**

| Patent document cited in search report | Publication date | Patent family member | Publication date |
|---|---|---|---|
| KR 10-2012-0027194 A | 21/03/2012 | EP 2424247 A2 | 29/02/2012 |
| | | US 2012-0106634 A1 | 03/05/2012 |
| | | WO 2010-123198 A2 | 28/10/2010 |
| | | WO 2010-123198 A3 | 16/12/2010 |
| KR 10-0941608 B1 | 11/02/2010 | NONE | |
| KR 10-0902353 B1 | 12/06/2009 | JP 2009-123219 A | 04/06/2009 |
| | | KR 10-2010-0008677 A | 26/01/2010 |
| | | US 2009-0129667 A1 | 21/05/2009 |
| | | US 8351685 B2 | 08/01/2013 |
| KR 10-2009-0006132 A | 14/01/2009 | CA 2645352 A1 | 11/10/2007 |
| | | CN 101411203 A | 15/04/2009 |
| | | CN 101411203 B | 07/11/2012 |
| | | CN 101411204 A | 15/04/2009 |
| | | CN 101411204 B | 14/12/2011 |
| | | EP 2002661 A1 | 17/12/2008 |
| | | EP 2002662 A2 | 17/12/2008 |
| | | JP 2009-532990 A | 10/09/2009 |
| | | JP 2009-533002 A | 10/09/2009 |
| | | JP 2012-124920 A | 28/06/2012 |
| | | JP 5118127 B2 | 16/01/2013 |
| | | KR 10-1037459 B1 | 26/05/2011 |
| | | US 2007-0230563 A1 | 04/10/2007 |
| | | US 2007-0230578 A1 | 04/10/2007 |
| | | WO 2007-115126 A1 | 11/10/2007 |
| | | WO 2007-115325 A2 | 11/10/2007 |
| | | WO 2007-115325 A3 | 29/11/2007 |
| KR 10-2008-0022063 A | 10/03/2008 | NONE | |

Form PCT/ISA/210 (patent family annex) (July 2009)